# EUROPÄISCHE PATENTANMELDUNG

(11) **EP 4 030 203 A1**
(43) Veröffentlichungstag der Anmeldung: **20.07.2022**
(21) Anmeldenummer: 21152283.4
(22) Anmeldetag: 19.01.2021
(51) Int. Cl.: G02B 6/02

(54) **ANTIRESONANZVORFORMLING MIT ZWEI KONTAKTPUNKTEN**

(71) Anmelder: Heraeus Quarzglas GmbH & Co. KG, 63450 Hanau (DE)
(72) Erfinder: ROSENBERGER, Manuel, 63450 Hanau (DE); PLASS, Jaqueline, 63450 Hanau (DE); SCHUSTER, Kay, 06803 Bitterfeld-Wolfen (DE)
(74) Vertreter: Heraeus IP

(57) **Zusammenfassung**

Die Erfindung betrifft einen Antiresonanzelement-Vorformling (300a-n) zur Herstellung einer antiresonanten Hohlkernfaser (2400), umfassend eine erste Längsachse (311a-j,m,n), ein kreisbogenartig ausgestaltetes ARE-Außenelement (310a-n) und ein ARE-Innenelement (340an), wobei das ARE-Außenelement (310a-n) und das ARE-Innenelement (340a-n) entlang zweier im Wesentlichen parallel zu der ersten Längsachse (311a-j,m,n) angeordneter Verbindungslinien (370,370') miteinander verbunden sind.

Erfindungsgemäß ist vorgesehen, dass das ARE-Außenelement (310a-n) einen durch eine ARE-Außenwandung zumindest partiell begrenzten Innenraum (317) aufweist, in welchen das kreisbogenartig ausgestaltete ARE-Innenelement (340a-n) zumindest partiell hineinragt.

## Beschreibung

### Hintergrund der Erfindung

Die Erfindung betrifft einen Antiresonanzelement-Vorformling zur Herstellung einer antiresonanten Hohlkernfaser.

### Stand der Technik

Hohlkernfasern weisen einen Kern auf, der einen evakuierten, mit Gas oder Flüssigkeit gefüllten Hohlraum umfasst. In Hohlkernfasern ist die Wechselwirkung des Lichts mit dem Glas geringer als in Vollkernfasern. Der Brechungsindex des Kerns ist kleiner als der des Mantels, so dass eine Lichtleitung durch Totalreflexion nicht möglich ist. In Abhängigkeit vom physikalischen Mechanismus der Lichtleitung werden Hohlkernfasern unterteilt in "photonische Bandlückenfasern" und "Antiresonanz-Reflexionsfasern".

Bei "photonischen Bandlückenfasern" ist der hohle Kernbereich von einem Mantel umgeben, in dem kleine Hohlkanäle periodisch angeordnet sind. Die periodische Struktur im Mantel bewirkt den in Anlehnung an die Halbleitertechnologie als "photonische Bandlücke" bezeichneten Effekt, wonach an den Mantelstrukturen gestreutes Licht bestimmter Wellenlängenbereiche aufgrund von Bragg-Reflexion im zentralen Hohlraum konstruktiv interferiert und sich nicht transversal im Mantel ausbreiten kann.

Bei der als "antiresonante Hohlkernfaser" ("antiresonant hollow-core fiber"; ARHCF) bezeichneten Ausführungsform der Hohlkernfaser ist der hohle Kernbereich von einem inneren Mantelbereich umgeben, in dem sogenannte Antiresonanzelemente (auch "antiresonante Elemente" oder auch "AREs") angeordnet sind. Die um den Hohlkern gleichmäßig verteilten Wandungen der Antiresonanzelemente können als in Antiresonanz betriebene Fabry-Perot-Kavitäten wirken, die das auftreffende Licht reflektieren und durch den Faserkern leiten.

Diese Technologie verspricht eine Faser mit niedriger optischer Dämpfung, einem sehr breiten Transmissionsspektrum (auch im UV- oder IR-Wellenlängenbereich) und einer geringen Latenz bei der Datenübertragung.

Aus der WO 2020 030 894 A1 ist eine antiresonante Hohlkernfaser bekannt, bei der der Kern von einem inneren Mantel mit nicht-resonanten Elementen (auch als "ARE" bezeichnet) umgeben ist. Diese nicht-resonanten Elemente dienen zur Dämpfung von Moden mit höherer Ordnung und weisen ein ARE-Außenelement und ein darin eingesetztes ARE-Innenelement auf. Das gezeigte ARE-Innenelement ist plattenartig ausgestaltet. Bei diesem Design besteht die Gefahr, dass beim Elongieren der Vorform zur antiresonanten Hohlkernfaser das AREARE-Innenelement an einer Innenwandung der Hüllrohr-Innenbohrung zum Liegen kommt und somit nur noch das ARE-Außenelement für die Dämpfung der Moden höherer Ordnung Sorge trägt, was insgesamt die Dämpfung erhöht.

Aus der EP 3 152 607 A1 ist eine weitere antiresonante Hohlkernfaser bekannt, bei der sowohl das ARE-Außenelement als auch das ARE-Innenelement rohrartig ausgestaltet sind. Die ineinandergesteckten verbauten ARE-Außenelemente und ARE-Innenelemente sind miteinander und mit dem Hüllrohr jeweils entlang einer Verbindungslinie verbunden. Insofern besteht die Gefahr, dass die ARE-Elemente beim Elongieren eine rotatorische Bewegung durchführen und so die gleichverteilte Anordnung der ARE-Elemente an der Hüllrohr-Innenwand gestört wird, was sich in einer erhöhten Dämpfung widerspiegelt.

Weitere Aspekte, wie etwa Herstellungserfahren für AREs, sind in folgenden Dokumenten beschrieben: CN 105807363 B, WO 2015 185761 A1, WO 2017 108061 A1, WO 2018 169487 A1, JP 2018 150184 A, EP 3 136 143 A1.

### Technische Aufgabenstellung

Antiresonante Hohlkernfasern und insbesondere solche mit verschachtelten Strukturelementen haben komplexe Innengeometrien, was ihre exakte und reproduzierbare Herstellung erschwert. Dies gilt umso mehr, da zur Einhaltung der Resonanz- beziehungsweise Antiresonanzbedingungen nur Maßabweichungen unterhalb der Größenordnung der Arbeitswellenlänge des zu führenden Lichts tolerierbar sind. Abweichungen von der Soll-Geometrie können ihre Ursache bei der Konfiguration der Faser-Vorform haben, und sie können auch durch ungewollte nicht-maßstäbliche Verformungen beim Faserziehprozess auftreten.

Ziel der Erfindung ist es, eine antiresonante Hohlkernfaser anzugeben, welche exakt und reproduzierbar herstellbar ist und zusätzlich eine geringe Dämpfung aufweist.

Insbesondere ist es Ziel der Erfindung, eine antiresonante Hohlkernfaser bereitzustellen, die Moden mit höherer Ordnung effizient dämpft.

### Bevorzugte Ausführungsformen der Erfindung

Ein Beitrag zur mindestens teilweisen Erfüllung mindestens einer der zuvor genannten Aufgaben wird durch die Merkmale der unabhängigen Ansprüche geleistet. Die abhängigen Ansprüche stellen bevorzugte Ausführungsformen bereit, die zur mindestens teilweisen Erfüllung mindestens einer der Aufgaben beitragen.
|1.| Antiresonanzelement-Vorformling zur Herstellung einer antiresonanten Hohlkernfaser, umfassend
   eine erste Längsachse,
   ein kreisbogenartig ausgestaltetes ARE-Außenelement und ein ARE-Innenelement, wobei das ARE-Außenelement und das ARE-Innenelement entlang zweier, im Wesentlichen parallel zu der ersten Längsachse angeordneter Verbindungslinien miteinander verbunden sind,
   **dadurch gekennzeichnet, dass**
   das ARE-Außenelement einen durch eine ARE-Außenwandung zumindest partiell begrenzten Innenraum aufweist, in welchen das kreisbogenartig ausgestaltete ARE-Innenelement zumindest partiell hineinragt.
|2.| Antiresonanzelement-Vorformling nach Ausführungsform 1, **dadurch gekennzeichnet, dass**
   das ARE-Außenelement einen ersten Kreisradius R_Außen und das ARE-Innenelement einen zweiten Kreisradius R_lnnen aufweist.
|3.| Antiresonanzelement-Vorformling nach einer der vorhergehenden Ausführungsformen, **dadurch gekennzeichnet, dass**
   das ARE-Außenelement einen ersten Mittelpunktswinkel α_Außen und das ARE-Innenelement einen zweiten Mittelpunktswinkel α_Innen aufweist.
|4.| Antiresonanzelement-Vorformling nach einer der vorhergehenden Ausführungsformen 1 bis 3, **dadurch gekennzeichnet, dass**
   - der erste Kreisradius R_Außen und der zweite Kreisradius R_Innen im Wesentlichen gleich lang sind (R_Außen = R_Innen)
   und der Antiresonanzelement-Vorformling wenigstens eines der folgenden Merkmale aufweist:
   - R_Außen und R_Innen kleiner 12 mm, insbesondere kleiner 8 mm, insbesondere kleiner 5 mm; und
   - R_Außen und R_Innen größer 0,5 mm, insbesondere größer 1 mm, insbesondere größer 2 mm.
|5.| Antiresonanzelement-Vorformling nach einer der vorhergehenden Ausführungsformen 1 bis 4, **dadurch gekennzeichnet, dass**
   - der erste Kreisradius R_Außen und der zweite Kreisradius R_Innen im Wesentlichen gleich lang sind (R_Außen = R_Innen)
   und der Antiresonanzelement-Vorformling wenigstens eines der folgenden Merkmale aufweist:
   - α_Außen kleiner 350°, insbesondere kleiner 345°, insbesondere kleiner 340°;
   - α_Außen größer 275°, insbesondere größer 295°, insbesondere größer 320°;
   - α_Innen kleiner 195°, insbesondere kleiner 180°, insbesondere kleiner 150°; und
   - α_Innen größer 30°, insbesondere größer 40°, insbesondere größer 50°.
|6.| Antiresonanzelement-Vorformling nach einer der vorhergehenden Ausführungsformen 1 bis 3, **dadurch gekennzeichnet, dass**
   - der erste Kreisradius R_Außen größer ist als der zweite Kreisradius R_Innen (R_Außen > R_Innen)
   und der Antiresonanzelement-Vorformling wenigstens eines der folgenden Merkmale aufweist:
   - R_Außen kleiner 12 mm, insbesondere kleiner 8 mm, insbesondere kleiner 5 mm;
   - R_Außen größer 0,5 mm, insbesondere größer 1 mm, insbesondere größer 2 mm;
   - R_Innen kleiner 8 mm, insbesondere kleiner 5 mm, insbesondere kleiner 3 mm; und
   - R_Innen größer 0,5 mm, insbesondere größer 0,75 mm, insbesondere größer 1 mm.
|7.| Antiresonanzelement-Vorformling nach einer der vorhergehenden Ausführungsformen 1 bis 3 oder 6, **dadurch gekennzeichnet, dass**
   - der erste Kreisradius R_Außen größer ist als der zweite Kreisradius R_Innen (R_Außen > R_Innen)
   und der Antiresonanzelement-Vorformling wenigstens eines der folgenden Merkmale aufweist:
   - α_Außen kleiner 350°, insbesondere kleiner 345°, insbesondere kleiner 340°;
   - α_Außen größer 275°, insbesondere größer 295°, insbesondere größer 320°;
   - α_Innen kleiner 300°, insbesondere kleiner 285°, insbesondere kleiner 230°; und
   - α_Innen größer 100°, insbesondere größer 120°, insbesondere größer 150°.
|8.| Antiresonanzelement-Vorformling nach einer der vorhergehenden Ausführungsformen 1 bis 3, **dadurch gekennzeichnet, dass**
   - der erste Kreisradius R_Außen kleiner ist als der zweite Kreisradius R_Innen (R_Außen < R_Innen)
   und der Antiresonanzelement-Vorformling wenigstens eines der folgenden Merkmale aufweist:
   - R_Außen kleiner 12 mm, insbesondere kleiner 8 mm, insbesondere kleiner 5 mm;
   - R_Außen größer 0,5 mm, insbesondere größer 1 mm, insbesondere größer 2 mm;
   - R_Innen kleiner 20 mm, insbesondere kleiner 10 mm, insbesondere kleiner 8 mm; und
   - R_Innen größer 1 mm, insbesondere größer 2 mm, insbesondere größer 3 mm.
|9.| Antiresonanzelement-Vorformling nach einer der vorhergehenden Ausführungsformen 1 bis 3 oder 8, **dadurch gekennzeichnet, dass**
   - der erste Kreisradius R_Außen kleiner ist als der zweite Kreisradius R_Innen (R_Außen < R_Innen)
   und der Antiresonanzelement-Vorformling wenigstens eines der folgenden Merkmale aufweist:
   - α_Außen kleiner 340°, insbesondere kleiner 315°, insbesondere kleiner 305°;
   - α_Außen größer 200°, insbesondere größer 220°, insbesondere größer 250°;
   - α_Innen kleiner 195°, insbesondere kleiner 180°, insbesondere kleiner 150°; und
   - α_Innen größer 30°, insbesondere größer 40°, insbesondere größer 50°.
|10.| Antiresonanzelement-Vorformling nach einer der vorhergehenden Ausführungsformen 3 bis 9, **dadurch gekennzeichnet, dass**
   der erste Mittelpunktswinkel α_Außen und/oder der zweite Mittelpunktswinkel α_Innen kleiner als 340° ist.
|11.| Antiresonanzelement-Vorformling nach einer der vorhergehenden Ausführungsformen 2 bis 10, **dadurch gekennzeichnet, dass**
   das ARE-Außenelement eine erste Segmenthöhe H_Außen und
   das ARE-Innenelement eine zweite Segmenthöhe H_Innen aufweist, wobei insbesondere gilt, dass:
   - das Verhältnis der ersten Segmenthöhe H_Außen zur zweiten Segmenthöhe H_Innen (H_Außen / H_Innen) kleiner als 30, insbesondere kleiner als 14 ist, insbesondere zwischen 1 und 6 liegt.
|12.| Antiresonanzelement-Vorformling nach einer der vorhergehenden Ausführungsformen, **dadurch gekennzeichnet, dass** ein ARE-Bogenelement in dem Innenraum des ARE-Außenelements angeordnet ist, insbesondere, dass das ARE-Bogenelement an dem ARE-Innenelement angeordnet ist.
|13.| Antiresonanzelement-Vorformling nach Ausführungsform 12, **dadurch gekennzeichnet, dass** das ARE-Bogenelement einen amorphen Festkörper, insbesondere ein Glas, insbesondere Quarzglas umfasst, insbesondere aus einem amorphen Festkörper, insbesondere einem Glas, insbesondere Quarzglas besteht, insbesondere, dass das ARE-Bogenelement und das ARE-Außenelement materialeinheitlich sind.
|14.| Antiresonanzelement-Vorformling nach einer der vorhergehenden Ausführungsformen 12 oder 13, **dadurch gekennzeichnet, dass** das ARE-Bogenelement kreisbogenförmig ausgestaltet ist und einen fünften Kreisradius R_Bogen und einen fünften Mittelpunktswinkel α_Bogen aufweist, und
   das ARE-Bogenelement mit dem ARE-Außenelement und/oder dem ARE-Innenelement entlang zweier Berührungslinien verbunden ist.
|15.| Antiresonanzelement-Vorformling nach einer der vorhergehenden Ausführungsformen 12 oder 13, **dadurch gekennzeichnet, dass** das ARE-Bogenelement kreisförmig ausgestaltet ist und einen Radius R_Kreis aufweist, und
   das ARE-Bogenelement mit dem ARE-Innenelement entlang einer Berührungslinie verbunden ist.
|16.| Vorform einer antiresonanten Hohlkernfaser, umfassend
   ein Hüllrohr, welches eine Hüllrohr-Innenbohrung und eine Hüllrohr-Längsachse aufweist, entlang der sich eine von einer Innenseite und einer Außenseite begrenzte Hüllrohr-Wandung erstreckt,
   eine Anzahl von Antiresonanzelement-Vorformlingen, wobei
   die Antiresonanzelement-Vorformlinge zueinander beabstandet und kontaktfrei an Soll-Positionen an der Innenseite der Hüllrohr-Wandung angeordnet sind,
   **dadurch gekennzeichnet, dass**
   wenigstens einer der Antiresonanzelement-Vorformlinge nach einer der vorhergehenden Ausführungsformen 1 bis 15 ausgestaltet ist.
|17.| Verfahren zur Herstellung einer Vorform einer antiresonanten Hohlkernfaser, mit den Schritten:
   a) Bereitstellen eines Hüllrohrs, das eine Hüllrohr-Innenbohrung und eine Hüllrohr-Längsachse aufweist, entlang der sich eine von einer Innenseite und einer Außenseite begrenzte Hüllrohr-Wandung erstreckt,
   b) Vorbereiten einer Anzahl von Antiresonanzelement-Vorformlingen, jeweils umfassend ein ARE-Außenelement und ein darin eingesetztes ARE-Innenelement,
   c) Anordnen der Antiresonanzelement-Vorformlinge an Soll-Positionen in der Hüllrohr-Innenbohrung,
   d) Bearbeiten einer Anordnung, umfassend das Hüllrohr und die Antiresonanzelement-Vorformlinge durch einen Heißformprozess, ausgewählt aus wenigstens einem von Elongieren und Kollabieren,
   dadurch gekennzeichnet, dass
   - im Schritt d) "Bearbeiten" in der Hüllrohr-Innenbohrung ein relativer Innendruck im Bereich zwischen -10 bis -300 mbar, insbesondere -50 bis -250 mbar eingestellt wird,
   - in wenigstens einem Antiresonanzelement-Vorformling das ARE-Außenelement und das ARE-Innenelement kreisbogenartig ausgestaltet sind, und
   - das ARE-Außenelement und das ARE-Innenelement entlang zweier Verbindungslinien miteinander und mit der Hüllrohr-Innenbohrung verbunden sind.
|18.| Verfahren nach Ausführungsform 17, **dadurch gekennzeichnet, dass** das ARE-Außenelement einen durch eine ARE-Außenwandung zumindest partiell begrenzten Innenraum aufweist, in welchen das kreisbogenartig ausgestaltete ARE-Innenelement zumindest partiell hineinragt.
|19.| Verfahren nach einer der vorhergehenden Ausführungsformen 17 oder 18, **dadurch gekennzeichnet, dass** das ARE-Außenelement einen ersten Mittelpunktswinkel α _Außen und das ARE-Innenelement einen zweiten Mittelpunktswinkel α_Innen aufweist, wobei
   - der erste Mittelpunktswinkel α_Außen und/oder der zweite Mittelpunktswinkel α _Innen größer als 340° sind.
|20.| Verfahren nach einer der vorhergehenden Ausführungsformen 17 bis 19, **dadurch gekennzeichnet, dass** die Antiresonanzelement-Vorformlinge im Schritt d) "Bearbeiten" flammenfrei an der Hüllrohr-Wandung thermisch fixiert werden.
|21.| Verfahren nach einer der vorhergehenden Ausführungsformen 17 bis 20, **dadurch gekennzeichnet, dass** das Hüllrohr einen Außendurchmesser im Bereich von 65 bis 300 mm, insbesondere von 90 bis 250 mm, und insbesondere eine Länge von mindestens 1 m aufweist.
|22.| Verfahren zur Herstellung einer sekundären Vorform, aus der eine antiresonante Hohlkernfaser ziehbar ist, aus einer Vorform, hergestellt nach einer der vorhergehenden Ausführungsformen 17 bis 21, aufweisend den Schritt
   - Weiterverarbeitung der Vorform zu der sekundären Vorform,
   wobei die Weiterverarbeitung eine einmalige oder wiederholte Durchführung von einem oder mehreren der folgenden Heißformprozesse umfasst:
   i.) Elongieren,
   ii.) Kollabieren,
   iii.) Kollabieren und gleichzeitiges Elongieren,
   iv.) Aufkollabieren von zusätzlichem Mantelmaterial,
   v.) Aufkollabieren von zusätzlichem Mantelmaterial und anschließendes Elongieren,
   vi.) Aufkollabieren von zusätzlichem Mantelmaterial und gleichzeitiges Elongieren.
|23.| Verfahren nach einer der vorhergehenden Ausführungsformen 17 bis 22, **dadurch gekennzeichnet, dass** wenigstens einer der Antiresonanzelement-Vorformlinge nach einer der vorhergehenden Ausführungsformen 1 bis 15 ausgestaltet ist.
|24.| Antiresonante Hohlkernfaser, umfassend
   einen Mantel, welcher eine Mantel-Innenbohrung und eine Mantel-Längsachse aufweist, entlang der sich eine von einer Mantel-Innenseite und einer Mantel-Außenseite begrenzte Mantel-Wandung erstreckt,
   eine Anzahl von Antiresonanzelementen, jeweils umfassend eine ARE-Außeneinheit und eine ARE-Inneneinheit, wobei die kreisbogenartig ausgestaltete ARE-Außeneinheit und die ARE-Inneneinheit entlang zweier Nahtlinien miteinander verbunden sind, wobei die Antiresonanzelemente zueinander beabstandet und kontaktfrei an Soll-Positionen an der Mantel-Innenseite der Mantel-Wandung angeordnet sind,
   **dadurch gekennzeichnet, dass**
   die ARE-Außeneinheit einen durch eine ARE-Außenwand zumindest partiell begrenzten Innenraum aufweist, in welchen die kreisbogenartig ausgestaltete ARE-Inneneinheit zumindest partiell hineinragt.
|25.| Antiresonante Hohlkernfaser nach Ausführungsform 24, **dadurch gekennzeichnet, dass** die antiresonante Hohlkernfaser drei, vier, fünf, sechs, sieben oder acht Antiresonanzelemente aufweist, insbesondere dass die antiresonante Hohlkernfaser eine ungerade Anzahl an Antiresonanzelementen aufweist.
|26.| Antiresonante Hohlkernfaser nach einem der Ansprüche 24 oder 25, **dadurch gekennzeichnet, dass** die antiresonante Hohlkernfaser wenigstens eines der folgenden Merkmale aufweist:
   - die Antiresonanzelemente symmetrisch an der Mantel-Innenseite der Mantel-Wandung angeordnet sind,
   - wenigstens eine der ARE-Außeneinheiten und/oder ARE-Inneneinheiten aus einem amorphen Festkörper, insbesondere Glas aufgebaut istist, insbesondere Quarzglas, insbesondere aus Glas mit einem Brechungsindex von mindestens 1,4, insbesondere 1,4 bis 3, insbesondere 1,4 bis 2,8 aufgebaut istist, und
   - eine Wandstärke der ARE-Außeneinheiten und der ARE-Inneneinheiten im Wesentlichen gleich ist.
|27.| Antiresonante Hohlkernfaser nach einem der Ansprüche 24 bis 26, **dadurch gekennzeichnet, dass** die antiresonante Hohlkernfaser wenigstens eines der folgenden Merkmale aufweist:
   ∘ eine fundamentale Dämpfung von weniger als 0,15 dB/km bei einer transportierten Wellenlänge von zwischen 1,0 µm und 2,5 µm, und
   ∘ eine fundamentale Dämpfung von weniger als 1 dB/km bei einer transportierten Wellenlänge von bis zu 0,8 µm.
|28.| Antiresonante Hohlkernfaser nach einem der Ansprüche 24 bis 27, **dadurch gekennzeichnet, dass** die Antiresonanzelemente einen Kern mit einem Kernradius formen, wobei der Kernradius kleiner als 50 µm, insbesondere kleiner als 40 µm, insbesondere kleiner als 30 µm, insbesondere kleiner als 25 µm, insbesondere kleiner als 20 µm, insbesondere kleiner als 15 µm, insbesondere kleiner als 13 µm ist.
|29.| Antiresonante Hohlkernfaser nach einem der Ansprüche 24 bis 28, **dadurch gekennzeichnet, dass** die antiresonante Hohlkernfaser wenigstens eines der folgenden Merkmale aufweist:
   - die ARE-Außeneinheit einen dritten Kreisradius FB_Außen,
   - die ARE-Inneneinheit einen vierten Kreisradius FB_Innen,
   - die ARE-Außeneinheit einen dritten Mittelpunktswinkel β_Außen, und
   - die ARE-Inneneinheit einen vierten Mittelpunktswinkel β_Innen.
|30.| Antiresonante Hohlkernfaser nach Ausführungsform 29, **dadurch gekennzeichnet, dass**
   - FB_Außen = FB_Innen
   und mindestens ein Antiresonanzelement wenigstens eines der folgenden Merkmale aufweist:
   - FB_Außen kleiner 30 µm, insbesondere kleiner 25 µm, insbesondere kleiner 15 µm;
   - FB_Außen größer 5 µm, insbesondere größer 10 µm, insbesondere größer 12 µm;
   - FB_Innen kleiner 30 µm, insbesondere kleiner 25 µm, insbesondere kleiner 15 µm; und
   - FB_Innen größer 5 µm, insbesondere größer 10 µm, insbesondere größer 12 µm.
|31.| Antiresonante Hohlkernfaser nach einem der Ansprüche 29 oder 30, **dadurch gekennzeichnet, dass**
   FB_Außen = FB_Innen
   und mindestens ein Antiresonanzelement wenigstens eines der folgenden Merkmale aufweist:
   - β_Außen kleiner 350°, insbesondere kleiner 345°, insbesondere kleiner 340°;
   - β_Außen größer 275°, insbesondere größer 295°, insbesondere größer 320°;
   - β_Innen kleiner 195°, insbesondere kleiner 180°, insbesondere kleiner 150°; und
   - β_Innen größer 30°, insbesondere größer 40°, insbesondere größer 50°.
|32.| Antiresonante Hohlkernfaser nach Ausführungsform 29, **dadurch gekennzeichnet, dass**
   - FB_Außen > FB_Innen
   und mindestens ein Antiresonanzelement wenigstens eines der folgenden Merkmale aufweist:
   - FB_Außen kleiner 30 µm, insbesondere kleiner 25 µm, insbesondere kleiner 15 µm;
   - FB_Außen größer 5 µm, insbesondere größer 10 µm, insbesondere größer 12 µm;
   - FB_Innen kleiner 20 µm, insbesondere kleiner 15 µm, insbesondere kleiner 11 µm; und
   - FB_Innen größer 2 µm, insbesondere größer 4 µm, insbesondere größer 6 µm.
|33.| Antiresonante Hohlkernfaser nach einem der Ansprüche 29 oder 32, **dadurch gekennzeichnet, dass**
   **•** FB_Außen > FB_Innen
   und mindestens ein Antiresonanzelement wenigstens eines der folgenden Merkmale aufweist:
   - β_Außen kleiner 350°, insbesondere kleiner 345°, insbesondere kleiner 340°;
   - β_Außen größer 275°, insbesondere größer 295°, insbesondere größer 320°;
   - β_Innen kleiner 195°, insbesondere kleiner 180°, insbesondere kleiner 150°; und
   - β_Innen größer 30°, insbesondere größer 40°, insbesondere größer 50°.
|34.| Antiresonante Hohlkernfaser nach Ausführungsform 29, **dadurch gekennzeichnet, dass**
   - FB_Außen < FB_Innen
   und mindestens ein Antiresonanzelement wenigstens eines der folgenden Merkmale aufweist:
   - FB_Außen kleiner 30 µm, insbesondere kleiner 25 µm, insbesondere kleiner 15 µm;
   - FB_Außen größer 5 µm, insbesondere größer 10 µm, insbesondere größer 12 µm;
   - FB_Innen kleiner 20 µm, insbesondere kleiner 15 µm, insbesondere kleiner 11 µm; und
   - FB_Innen größer 2 µm, insbesondere größer 4 µm, insbesondere größer 6 µm.
|35.| Antiresonante Hohlkernfaser nach einem der Ansprüche 29 oder 34, **dadurch gekennzeichnet, dass**
   - FB_Außen < FB_Innen
   und mindestens ein Antiresonanzelement wenigstens eines der folgenden Merkmale aufweist:
   - β_Außen kleiner 340°, insbesondere kleiner 315°, insbesondere kleiner 305°;
   - β_Außen größer 200°, insbesondere größer 220°, insbesondere größer 250°;
   - β_Innen kleiner 195°, insbesondere kleiner 180°, insbesondere kleiner 150°; und
   - β_Innen größer 30°, insbesondere größer 40°, insbesondere größer 50°.
|36.| Antiresonante Hohlkernfaser nach einem der Ansprüche 29 bis 35, **dadurch gekennzeichnet, dass** der dritte Mittelpunktswinkel β_Außen und/oder der vierte Mittelpunktswinkel β_Innen größer als 340° sind.
|37.| Antiresonante Hohlkernfaser nach einem der Ansprüche 24 bis 36, **dadurch gekennzeichnet, dass**
   die ARE-Außeneinheit eine dritte Segmenthöhe HF_Außen und die ARE-Inneneinheit eine vierte Segmenthöhe HF_Innen aufweist, wobei insbesondere gilt.
   - HF_Außen / HF_Innen < 30.
|38.| Antiresonante Hohlkernfaser nach einem der Ansprüche 24 bis 37, **dadurch gekennzeichnet, dass** eine ARE-Bogeneinheit in der ARE-Außeneinheit angeordnet ist.
|39.| Antiresonante Hohlkernfaser nach einem der Ansprüche 24 bis 38, **dadurch gekennzeichnet, dass** ein Unterschied einer fundamentalen Dämpfung zwischen einer geraden und einer auf einen Durchmesser von 10 mm aufgespulten antiresonanten Hohlkernfaser kleiner ist als zwei Größenordnungen, insbesondere kleiner als eine Größenordnung, insbesondere kleiner als die Hälfte einer Größenordnung.
|40.| Antiresonante Hohlkernfaser nach einem der Ansprüche 24 bis 39, **dadurch gekennzeichnet, dass** die antiresonante Hohlkernfaser aus einer Vorform nach Ausführungsform 16 hergestellt ist.
|41.| Antiresonante Hohlkernfaser nach einem der Ansprüche 24 bis 40, **dadurch gekennzeichnet, dass** die antiresonante Hohlkernfaser gemäß einem Verfahren nach einem der Ansprüche 17 oder 23 hergestellt ist.
|42.| Verfahren zur Herstellung einer antiresonanten Hohlkernfaser aus einer Vorform nach Ausführungsform 16, insbesondere hergestellt nach einem Verfahren nach einem der Ansprüche 17 oder 23, aufweisend den Schritt
   - Weiterverarbeitung der Vorform zu der antiresonanten Hohlkernfaser,
   wobei die Weiterverarbeitung eine einmalige oder wiederholte Durchführung von einem oder mehreren der folgenden Heißformprozesse umfasst:
   i.) Elongieren,
   ii.) Kollabieren,
   iii.) Kollabieren und gleichzeitiges Elongieren,
   iv.) Aufkollabieren von zusätzlichem Mantelmaterial,
   v.) Aufkollabieren von zusätzlichem Mantelmaterial und anschließendes Elongieren,
   vi.) Aufkollabieren von zusätzlichem Mantelmaterial und gleichzeitiges Elongieren.
|43.| Verfahren nach Ausführungsform 42, **dadurch gekennzeichnet, dass** bei dem Schritt "Weiterverarbeitung" im Rahmen des Elongierens der Vorform zu einer antiresonanten Hohlkernfaser im Kernbereich ein relativer Innendruck im Bereich zwischen 0,05 mbar-20 mbar eingestellt wird.

### Ausführliche Beschreibung

Einige der beschriebenen Merkmale sind mit dem Begriff "im Wesentlichen" verknüpft. Der Begriff "im Wesentlichen" ist so zu verstehen, dass unter realen Bedingungen und Fertigungstechniken eine mathematisch exakte Auslegung von Begrifflichkeiten wie "Überlagerung", "senkrecht", "Durchmesser" oder "Parallelität" nie exakt, sondern nur innerhalb gewisser fertigungstechnischer Fehlertoleranzen gegeben sein kann. Beispielsweise schließen "im Wesentlichen parallele Achsen" einen Winkel von -5 Grad bis 5 Grad zueinander ein und "im Wesentlichen gleiche Volumen" umfassen eine Abweichung von bis zu 5 Volumen-%. Eine "im Wesentlichen aus Quarzglas bestehende Vorrichtung" umfasst beispielsweise einen Quarzglasanteil von ≥95 bis ≤100 Gewichts-%. Weiterhin schließt "im Wesentlichen rechtwinklig" einen Winkel von 85 Grad bis 95 Grad ein. Eine weitere Konkretisierung des Begriffs "im Wesentlichen" erfolgt für einige Merkmale weiter unten.

Die oben genannten Aufgaben werden gelöst durch einen Antiresonanzelement-Vorformling zur Herstellung einer antiresonanten Hohlkernfaser, umfassend eine erste Längsachse, ein kreisbogenartig ausgestaltetes ARE-Außenelement und ein ARE-Innenelement, wobei das ARE-Außenelement und das ARE-Innenelement entlang zweier im Wesentlichen parallel zu der ersten Längsachse angeordneten Verbindungslinien miteinander verbunden sind. Erfindungsgemäß ist vorgesehen, dass das ARE-Außenelement einen durch eine ARE-Außenwandung zumindest partiell begrenzten Innenraum aufweist, in welchen das kreisbogenartig ausgestaltete ARE-Innenelement zumindest partiell hineinragt.

Ein solcherart gestalteter Antiresonanzelement-Vorformling und dessen Nutzung in Vorformen für antiresonante Hohlkernfasern weist den Vorteil auf, dass durch die kreisbogenartige Ausgestaltung des ARE-Innenelements gegenüber bekannten Antiresonanzelement-Vorformlingen ein weiterer Freiheitsgrad gewonnen wird: Es besteht keine Einschränkung mehr bei der Auswahl der Radien des ARE-Innenelements, insbesondere kann der Radius des ARE-Innenelements größer sein als der Radius des ARE-Außenelements.

Ein derart aufgebauter Antiresonanzelement-Vorformling ist separat von weiteren Bauteilen zur Herstellung einer antiresonanten Hohlkernfaser herstellbar, was produktionstechnisch von Vorteil ist. Dadurch können Antiresonanzelement-Vorformlinge, die von der Idealstruktur, beispielsweise während deren Herstellung, abweichen, relativ kostengünstig entsorgt werden, ohne dass weitere Bauteile zur Herstellung der antiresonanten Hohlkernfaser mitentsorgt werden müssen. Zudem kann durch eine Vorproduktion der Antiresonanzelement-Vorformlinge eine Uniformität über eine gesamte Produktionscharge erreicht werden, welche sich vorteilhaft auf die Symmetrie der mit den Antiresonanzelementvorformlingen hergestellten Vorformen und letztendlich auch der antiresonanten Hohlkernfasern auswirkt. Eine erhöhte Symmetrie wirkt sich positiv auf die optischen Eigenschaften der Hohlkernfaser aus.

Gegenüber Antiresonanzelement-Vorformlingen aus dem Stand der Technik zeichnet sich der erfindungsgemäße Antiresonanzelement-Vorformling dadurch aus, dass:
- sowohl das ARE-Außenelement als auch das ARE-Innenelement eine negative Krümmung aufweisen, was sich positiv auf die Dämpfung auswirkt, und
- durch die erfindungsgemäße Möglichkeit nahezu beliebige Kombinationen für die Radien des ARE-Innenelements und des ARE-Außenelements möglich sind.

Dieser zusätzliche Freiheitsgrad ermöglicht eine verbesserte Moden-Anpassung in der späteren antiresonanten Hohlkernfaser.

Unter dem Begriff "Kreisbogen" wird im Rahmen der Erfindung ein Teilstück einer Kreislinie verstanden. Zwei Punkte auf einem Kreis teilen die Kreislinie in zwei Kreisbögen. Die direkte Verbindung besagter zwei Punkte ergibt eine Strecke, die als Kreissehne bezeichnet wird. Durch Verbindung besagter zwei Punkte durch jeweils eine Strecke mit dem Mittelpunkt des Kreises entstehen zwei - durch diese besagten Strecken voneinander getrennte - Kreisausschnitte (auch Kreissektoren genannt). Ein Kreisausschnitt wird also gleichsam von zwei Radien aus einem Kreis herausgeschnitten. Der zu einem Kreissektor gehörende Teil der Kreislinie wird als Kreisbogen bezeichnet und der Winkel zwischen den beiden Radien als Mittelpunktswinkel. Zu jedem Kreisbogen gibt es genau einen Mittelpunktswinkel. Die Summe aller Mittelpunktswinkel in einem Kreis ergibt 360°.

Unter dem Begriff eines kreisbogenartig ausgestalteten ARE-Außenelements und/oder ARE-Innenelements wird im Rahmen der Erfindung ein rohrartig ausgestaltetes Element verstanden, welches entlang seiner jeweiligen Längsachse einen Querschnitt aufweist, der einem Kreisbogen entspricht.

Unter dem Begriff des Innenraums des kreisbogenartig ausgestalteten ARE-Außenelements wird im Rahmen der Erfindung jener Raum bezeichnet, der von dem Kreisbogen und der Kreissehne umschlossen wird.

Unter der Aussage, dass das kreisbogenartig ausgestaltete ARE-Innenelement in den Innenraum des ARE-Außenelements hineinragt, wird im Rahmen der Erfindung verstanden, dass der Kreisbogen des ARE-Innenelements im Wesentlichen oberhalb der Kreissehne des ARE-Außenelements verläuft.

Der Begriff "im Wesentlichen parallel" ist so zu verstehen, dass unter realen Bedingungen und Fertigungstechniken eine mathematisch exakte Parallelität nicht erreichbar ist, sondern nur innerhalb gewisser fertigungstechnischer Fehlertoleranzen gegeben sein kann. Insofern wird unter dem Begriff "im Wesentlichen parallel" ein Winkel zwischen zwei Achsen von -5 Grad bis 5 Grad zueinander verstanden.

In einer Ausführungsform sind die Verbindungslinien und die erste Längsachse derart parallel gestaltet, dass wenigstens eine Verbindungslinie und die erste Längsachse, insbesondere beide Verbindungslinien und die erste Längsachse, einen Winkel von -1,5 Grad bis 1,5 Grad, vorzugsweise von -0,85 Grad bis 0,85 Grad, vorzugsweise von -0,42 Grad bis 0,42 Grad zueinander aufweisen. Diese Parallelität stellt sicher, dass die Antiresonanzelement-Vorformlinge die Moden mit höherer Ordnung effizient dämpfen und zusätzlich die Einhaltung der Resonanz- beziehungsweise Antiresonanzbedingungen in der späteren Hohlkernfaser sichern.

In einer Ausführungsform umfasst oder besteht der Antiresonanzelement-Vorformling aus einem Material, welches für ein Arbeitslicht der optischen Faser transparent ist, beispielsweise Glas, insbesondere dotiertes oder nicht dotiertes Quarzglas (SiO2). Eine Dotierung ermöglicht die Anpassung von physikalischen Eigenschaften, wie beispielsweise des thermischen Ausdehnungskoeffizienten und/oder der Viskosität. Als die Viskosität von Quarzglas absenkende Dotierstoffe kommen vorzugsweise Fluor, Chlor und/oder Hydroxylgruppen zum Einsatz.

Ausgehend von der kreisbogenartigen Ausgestaltung werden das ARE-Außenelement und das ARE-Innenelement entlang zweier, im Wesentlichen parallel zu der ersten Längsachse angeordneten Verbindungslinien miteinander verbunden.
In der zweidimensionalen Darstellung erfolgt der Verbund für eine Verbindungslinie jeweils zwischen
- einem ersten Endpunkt einer ARE-Außenwandung des ARE-Außenelements, und
- einem zweiten Endpunkt einer Wandung des ARE-Innenelements.

Bei der Montage des Antiresonanzelement-Vorformlings an Soll-Positionen in der Hüllrohr-Innenbohrung (vgl. Schritt c) "Anordnen" und/oder Schritt d) "Bearbeiten") findet eine stoffschlüssige Verbindung eben dieser Verbindungslinien mit der Innenseite der Hüllrohr-Wandung statt. Im Querschnitt betrachtet wird der Antiresonanzelement-Vorformling an zwei Punkten mit der Hüllrohr-Innenbohrung verbunden. Durch die - im Querschnitt betrachtete - Verbindung an zwei Punkten wird zum einen die Präzision in der Montage der Antiresonanzelement-Vorformlinge in dem Hüllrohr erhöht. Zum anderen wird die Gefahr einer rotatorischen Bewegung des Antiresonanzelement-Vorformlings - und/oder des ARE-Außenelements und/oder des ARE-Innenelements - bei einem Elongieren und/oder Kollabieren reduziert. Dies erhöht die Präzision der Vorform und der aus der Vorform erstellten antiresonanten Hohlkernfaser, die dadurch eine geringere Dämpfung aufweist.

Da bei Vorformen aus dem Stand der Technik das ARE-Innenelement plattenartig ausgestaltet ist, besteht die Gefahr, dass sich das -ARE-Innenelement beim Elongieren zu der ARE-Inneneinheit in der antiresonanten Hohlkernfaser an die Innenwandung der Hüllrohr-Innenbohrung legt und somit nur noch die ARE-Außeneinheit für das Antiresonante Verhalten Sorge trägt, was die Dämpfung erhöht. Bei den hier beschriebenen Ausführungsformen reduziert sich durch die Ausgestaltung des ARE-Innenelements die Gefahr, dass sich das ARE-Innenelement bei einem Kollabieren und/oder Elongieren verformt und es insbesondere zu Variationen in der Wanddicke des ARE-Innenelements und/oder der ARE-Inneneinheit kommt, was zu einer erhöhten Dämpfung in der späteren antiresonanten Hohlkernfaser führt. Insofern erreicht ein derart gestaltetes Antiresonanzelement und/oder ARE-Inneneinheit und/oder antiresonante Hohlkernfaser eine verbesserte Moden-Anpassung.

Eine Ausführungsform des Antiresonanzelement-Vorformlings zeichnet sich dadurch aus, dass das ARE-Außenelement einen ersten Kreisradius R_Außen und das ARE-Innenelement einen zweiten Kreisradius R_lnnen aufweist.

Eine Ausführungsform des Antiresonanzelement-Vorformlings zeichnet sich dadurch aus, dass das ARE-Außenelement einen ersten Mittelpunktswinkel α_Außen und das ARE-Innenelement einen zweiten Mittelpunktswinkel α_Innen aufweist.

Eine Ausführungsform des Antiresonanzelement-Vorformlings zeichnet sich dadurch aus, dass
- der erste Kreisradius R_Außen und der zweite Kreisradius R_Innen im Wesentlichen gleich lang sind (R_Außen = R_Innen)
und der Antiresonanzelement-Vorformling wenigstens eines der folgenden Merkmale aufweist:
- R_Außen und R_Innen kleiner 12 mm, insbesondere kleiner 8 mm, insbesondere kleiner 5 mm; und
- R_Außen und R_Innen größer 0,5 mm, insbesondere größer 1 mm, insbesondere größer 2 mm.

In dieser Ausführungsvariante wird der erfindungsgemäß gewonnene Freiheitsgrad derart genutzt, dass der erste Kreisradius R_Außen des ARE-Außenelements und der zweite Kreisradius R_Innen des ARE-Innenelements gleich lang sind.

Unter der Aussage, dass zwei Längen - wie etwa der erste Kreisradius R_Außen und der zweite Kreisradius R_Innen - "im Wesentlichen" gleich lang sind, wird im Rahmen der Erfindung verstanden, dass die besagten Längen innerhalb der fertigungstechnischen Toleranzen gleich sind, insbesondere dass die besagten Längen sich um weniger als 1,5 %, insbesondere um weniger als 1,0 %, insbesondere um weniger als 0,5 % in der Länge unterscheiden.

Durch die gleichen Längen des ersten Kreisradius R_Außen und des zweiten Kreisradius R_lnnen weisen das ARE-Außenelement und dasARE-Innenelement im Wesentlichen die gleiche negative Krümmung aus, was in der antiresonanten Hohlkernfaser die Dämpfung auf Faserlängen größer als 20 km positiv beeinflusst.

Eine Ausführungsform des Antiresonanzelement-Vorformlings zeichnet sich dadurch aus, dass
- der erste Kreisradius R_Außen und der zweite Kreisradius R_Innen im Wesentlichen gleich lang sind (R_Außen = R_Innen)
und der Antiresonanzelement-Vorformling wenigstens eines der folgenden Merkmale aufweist:
- α_Außen kleiner 350°, insbesondere kleiner 345°, insbesondere kleiner 340°;
- α_Außen größer 275°, insbesondere größer 295°, insbesondere größer 320°;
- α_Innen kleiner 195°, insbesondere kleiner 180°, insbesondere kleiner 150°; und
- α_Innen größer 30°, insbesondere größer 40°, insbesondere größer 50°.

Durch eine entsprechende Wahl des ersten Mittelpunktswinkels α_Außen und des zweiten Mittelpunktswinkels α_Innen kann unter der Randbedingung, dass der erste Kreisradius R_Außen und der zweite Kreisradius R_Innen im Wesentlichen gleich lang sind, eine geringe Dämpfung auch bei starker Krümmung der antiresonanten Hohlkernfaser erzielt werden.

Eine Ausführungsform des Antiresonanzelement-Vorformlings zeichnet sich dadurch aus, dass
- der erste Kreisradius R_Außen größer ist als der zweite Kreisradius R_Innen (R_Außen > R_Innen)
und der Antiresonanzelement-Vorformling wenigstens eines der folgenden Merkmale aufweist:
- R_Außen kleiner 12 mm, insbesondere kleiner 8 mm, insbesondere kleiner 5 mm;
- R_Außen größer 0,5 mm, insbesondere größer 1 mm, insbesondere größer 2 mm;
- R_Innen kleiner 8 mm, insbesondere kleiner 5 mm, insbesondere kleiner 3 mm; und
- R_Innen größer 0,5 mm, insbesondere größer 0,75 mm, insbesondere größer 1 mm.

In dieser Ausführungsvariante wird der erfindungsgemäß gewonnene Freiheitsgrad derart genutzt, dass der erste Kreisradius R_Außen des ARE-Außenelements größer ist als der zweite Kreisradius R_Innen des ARE-Innenelements. Dies resultiert in einer geringen Dämpfung der aus der Vorform erstellten antiresonanten Hohlkernfaser.

Eine Ausführungsform des Antiresonanzelement-Vorformlings zeichnet sich dadurch aus, dass
- der erste Kreisradius R_Außen größer ist als der zweite Kreisradius R_Innen (R_Außen > R_Innen)
und der Antiresonanzelement-Vorformling wenigstens eines der folgenden Merkmale aufweist:
- α_Außen kleiner 350°, insbesondere kleiner 345°, insbesondere kleiner 340°;
- α_Außen größer 275°, insbesondere größer 295°, insbesondere größer 320°;
- α_Innen kleiner 195°, insbesondere kleiner 180°, insbesondere kleiner 150°; und
- α_Innen größer 30°, insbesondere größer 40°, insbesondere größer 50°.

Durch eine entsprechende Wahl des ersten Mittelpunktswinkels α_Außen und des zweiten Mittelpunktswinkels α_Innen kann unter der Randbedingung, dass der erste Kreisradius R_Außen größer ist als der zweite Kreisradius R_Innen, eine geringe Dämpfung der antiresonanten Hohlkernfaser erzielt werden.

Eine Ausführungsform des Antiresonanzelement-Vorformlings zeichnet sich dadurch aus, dass
- der erste Kreisradius R_Außen kleiner ist als der zweite Kreisradius R_Innen (R_Außen < R_Innen)
und der Antiresonanzelement-Vorformling wenigstens eines der folgenden Merkmale aufweist:
- R_Außen kleiner 12 mm, insbesondere kleiner 8 mm, insbesondere kleiner 5 mm;
- R_Außen größer 0,5 mm, insbesondere größer 1 mm, insbesondere größer 2 mm;
- R_Innen kleiner 20 mm, insbesondere kleiner 10 mm, insbesondere kleiner 8 mm; und
- R_Innen größer 1 mm, insbesondere größer 2 mm, insbesondere größer 3 mm.

In dieser Ausführungsvariante wird der erfindungsgemäß gewonnene Freiheitsgrad derart genutzt, dass der erste Kreisradius R_Außen des ARE-Außenelements kleiner ist als der zweite Kreisradius R_Innen des ARE-Innenelements. Diese Art der Ausgestaltung ermöglicht eine besonders einfache Art der Modenanpassung.

Eine Ausführungsform des Antiresonanzelement-Vorformlings zeichnet sich dadurch aus, dass
- der erste Kreisradius R_Außen kleiner ist als der zweite Kreisradius R_Innen (R_Außen < R_Innen)
und der Antiresonanzelement-Vorformling wenigstens eines der folgenden Merkmale aufweist:
- α_Außen kleiner 340°, insbesondere kleiner 315°, insbesondere kleiner 305°;
- α_Außen größer 200°, insbesondere größer 220°, insbesondere größer 250°;
- α_Innen kleiner 195°, insbesondere kleiner 180°, insbesondere kleiner 150°; und
- α_Innen größer 30°, insbesondere größer 40°, insbesondere größer 50°.

Durch eine entsprechende Wahl des ersten Mittelpunktswinkels α_Außen und des zweiten Mittelpunktswinkels α_Innen kann eine geringe Dämpfung der antiresonanten Hohlkernfaser erzielt werden.

Eine Ausführungsform des Antiresonanzelement-Vorformlings zeichnet sich dadurch aus, dass der erste Mittelpunktswinkel α_Außen und/oder der zweite Mittelpunktswinkel α_Innen kleiner als 350° ist, insbesondere, dass der erste Mittelpunktswinkel α_Außen und/oder der zweite Mittelpunktswinkel α_Innen [110°; 310°], insbesondere [120°, 290°], insbesondere [150°; 280°] ist.

Eine Ausführungsform des Antiresonanzelement-Vorformlings zeichnet sich dadurch aus, dass
- der erste Mittelpunktswinkel α_Außen größer als 270° und kleiner als 350° ist und, der zweite Mittelpunktswinkel α_Innen größer als 160°und kleiner als 300° ist,
- insbesondere der erste Mittelpunktswinkel α_Außen größer als 280° und kleiner als 340° ist und,
   der zweite Mittelpunktswinkel α_Innen größer als 210° und kleiner als 290° ist,

Durch eine entsprechende Wahl des ersten Mittelpunktswinkels α_Außen und/oder des zweiten Mittelpunktswinkels α_Innen kann eine geringe Dämpfung der antiresonanten Hohlkernfaser erzielt werden.

Eine Ausführungsform des Antiresonanzelement-Vorformlings zeichnet sich dadurch aus, dass das ARE-Außenelement eine erste Segmenthöhe H_Außen und das ARE-Innenelement eine zweite Segmenthöhe H_Innen aufweist, wobei insbesondere gilt.
- H_Außen / H_Innen kleiner als 30, insbesondere kleiner als 14, insbesondere zwischen 1 und 6.

Die erste Segmenthöhe H_Außen bezeichnet den Abstand des Scheitelpunktes zur ersten Sehne des ARE-Außenelements. Die zweite Segmenthöhe H_Innen bezeichnet den Abstand des Scheitelpunktes zur zweiten Sehne des ARE-Innenelements. Bei dieser Ausführungsform reduziert sich die Gefahr, dass das ARE-Innenelement sich bei einem Kollabieren und/oder Elongieren verformt, was zu einer erhöhten Dämpfung der späteren antiresonanten Hohlkernfaser führt.

Eine Ausführungsform des Antiresonanzelement-Vorformlings zeichnet sich dadurch aus, dass ein ARE-Bogenelement in dem Innenraum des ARE-Außenelements angeordnet ist, insbesondere, dass das ARE-Bogenelement an dem ARE-Innenelement angeordnet ist.

Das ARE-Bogenelement dient zur Dämpfung unerwünschter Moden. Durch eine entsprechende Integration in den Antiresonanzelement-Vorformling kann die Moden-Anpassung der Vorform und/oder der späteren antiresonanten Hohlkernfaser weiter erleichtert werden.

In einer Ausführungsform umfasst oder besteht das ARE-Bogenelement aus einem Material, welches für ein Arbeitslicht der optischen Faser transparent ist, beispielsweise Glas, insbesondere dotiertes oder nicht dotiertes Quarzglas (SiO2) oder einem amorphen Festkörper. Eine Dotierung ermöglicht die Anpassung von physikalischen Eigenschaften, wie beispielsweise des thermischen Ausdehnungskoeffizienten und/oder der Viskosität. Als die Viskosität von Quarzglas absenkende Dotierstoffe kommen vorzugsweise Fluor, Chlor und/oder Hydroxylgruppen zum Einsatz. Insbesondere können das ARE-Bogenelement und das ARE-Außenelement materialeinheitlich sein.

Eine Ausführungsform des Antiresonanzelement-Vorformlings zeichnet sich dadurch aus, dass das ARE-Bogenelement kreisbogenförmig ausgestaltet ist und einen fünften Kreisradius R_Bogen und einen fünften Mittelpunktswinkel α_Bogen aufweist, und das ARE-Bogenelement mit dem ARE-Außenelement und/oder dem ARE-Innenelement entlang zweier Berührungslinien verbunden ist.

Eine Ausführungsform des Antiresonanzelement-Vorformlings zeichnet sich dadurch aus, dass das ARE-Bogenelement kreisförmig ausgestaltet ist und einen Radius R_Kreis aufweist, und das ARE-Bogenelement mit dem ARE-Innenelement entlang einer Berührungslinie verbunden ist.

Die obengenannten Aufgaben werden auch gelöst durch eine Vorform einer antiresonanten Hohlkernfaser, umfassend
- ein Hüllrohr, welches eine Hüllrohr-Innenbohrung und eine Hüllrohr-Längsachse aufweist, entlang der sich eine von einer Innenseite und einer Außenseite begrenzte Hüllrohr-Wandung erstreckt,
- eine Anzahl von Antiresonanzelement-Vorformlingen, wobei
- die Antiresonanzelement-Vorformlinge zueinander beabstandet und kontaktfrei an Soll-Positionen an der Innenseite der Hüllrohr-Wandung angeordnet sind.

Erfindungsgemäß ist vorgesehen, dass wenigstens einer der Antiresonanzelement-Vorformlinge nach einem der beschriebenen Ausführungsformen ausgestaltet ist.

Eine derart gestaltete Vorform ermöglicht eine gegenüber dem Stand der Technik erleichterte Moden-Anpassung und eine präzisere Herstellung.

Sämtliche für die Antiresonanzelement-Vorformlinge beschriebenen Eigenschaften und Merkmale gelten auch für die Vorform und jeweils umgekehrt.

Der Begriff "Innenbohrung" in Verbindung mit einem Hüllrohr besagt nicht, dass die Innenbohrung durch einen Bohrvorgang erzeugt worden ist.

Die obengenannten Aufgaben werden auch gelöst durch ein Verfahren zur Herstellung einer Vorform einer antiresonanten Hohlkernfaser, mit den Schritten:
a) Bereitstellen eines Hüllrohrs, das eine Hüllrohr-Innenbohrung und eine Hüllrohr-Längsachse aufweist, entlang der sich eine von einer Innenseite und einer Außenseite begrenzte Hüllrohr-Wandung erstreckt,
b) Vorbereiten einer Anzahl von Antiresonanzelement-Vorformlingen, jeweils umfassend ein ARE-Außenelement und ein darin eingesetztes ARE-Innenelement,
c) Anordnen der Antiresonanzelement-Vorformlinge an Soll-Positionen in der Hüllrohr-Innenbohrung,
d) Bearbeiten einer Anordnung, umfassend das Hüllrohr und die Antiresonanzelement-Vorformlinge durch einen Heißformprozess, ausgewählt aus wenigstens einem von Elongieren und Kollabieren.

Dabei ist vorgesehen, dass
- im Schritt d) "Bearbeiten" in der Hüllrohr-Innenbohrung ein relativer Innendruck im Bereich zwischen -10 bis -300 mbar, insbesondere -50 bis -250 mbar eingestellt wird,
- in wenigstens einem Antiresonanzelement-Vorformling das ARE-Außenelement und das ARE-Innenelement kreisbogenartig ausgestaltet sind, und
- das ARE-Außenelement und das ARE-Innenelement entlang zweier Verbindungslinien miteinander und mit der Hüllrohr-Innenbohrung verbunden sind.

### Schritt a)

Im Rahmen des Schrittes a) "Bereitstellen" wird das Hüllrohr vorbereitet. Dieses Hüllrohr weist einen hohlen Kern auf, der sich entlang der Hüllrohr-Längsachse erstreckt. In einer Ausführungsform weist das Hüllrohr einen Außendurchmesser im Bereich von 65 bis 300 mm, vorzugsweise 90 bis 250 mm, vorzugsweise 120 bis 200 mm auf. Insbesondere kann das Hüllrohr eine Länge von mindestens 1 m aufweisen. In einer Ausführungsform umfasst oder besteht das Hüllrohr aus einem Material, welches für ein Arbeitslicht der optischen Faser transparent ist, beispielsweise Glas, insbesondere dotiertes oder nicht dotiertes Quarzglas (SiO2). Eine Dotierung ermöglicht die Anpassung von physikalischen Eigenschaften, wie beispielsweise des thermischen Ausdehnungskoeffizienten und/oder der Viskosität. Als die Viskosität von Quarzglas absenkende Dotierstoffe kommen vorzugsweise Fluor, Chlor und/oder Hydroxylgruppen zum Einsatz.

### Schritt b)

Im Rahmen des Schrittes b) "Vorbereiten" wird eine Anzahl an Antiresonanzelement-Vorformlingen erstellt. Als Antiresonanzelement-Vorformlinge werden Bauteile oder Bestandteile der Vorform bezeichnet, die im Wesentlichen durch einfaches Langziehen beim Faserziehprozess zu Antiresonanzelementen in der Hohlkernfaser werden. Der einzelne Antiresonanzelement-Vorformling ist aus rohrartigen Strukturelementen aufgebaut, von denen ein Teil eine Wandstärke im Bereich von 0,1 mm bis 2 mm, vorzugsweise 0,2 mm bis 1,5 mm aufweisen kann. Die Antiresonanzelement-Vorformlinge können einfache oder verschachtelte Bauteile sein, wobei der jeweilige Antiresonanzelement-Vorformling ein ARE-Außenrohr und ein darin eingesetztes ARE-Innenrohr umfasst. Die Antiresonanzelement-Vorformlinge haben mindestens zwei Wandungen, die aus Richtung des Hohlkerns gesehen eine negative Krümmung haben (konvex). Durch Weiterverarbeitung der Vorform, insbesondere durch Heißumformschritte, können Zwischenprodukte entstehen, in denen die ursprünglichen Antiresonanzelement-Vorformlinge in einer gegenüber der ursprünglichen Form veränderten Form vorliegen.

In einer Ausführungsform umfasst oder besteht der Antiresonanzelement-Vorformling aus einem Material, welches für ein Arbeitslicht der optischen Faser transparent ist, beispielsweise Glas, insbesondere dotiertes oder nicht dotiertes Quarzglas (SiO2). Eine Dotierung ermöglicht die Anpassung von physikalischen Eigenschaften, wie beispielsweise des thermischen Ausdehnungskoeffizienten und/oder der Viskosität. Als die Viskosität von Quarzglas absenkende Dotierstoffe kommen vorzugsweise Fluor, Chlor und/oder Hydroxylgruppen zum Einsatz.

In einer Ausführungsform sind die Antiresonanzelement-Vorformlinge und das Hüllrohr materialeinheitlich. In einer weiteren Ausführungsform bestehen die Antiresonanzelement-Vorformlinge und das Hüllrohr aus demselben Material, insbesondere aus nicht dotiertem oder dotiertem Quarzglas (SiO2), wobei die Menge der Dotierung 0,1 Gew.-% nicht überschreitet.

Der Begriff "materialeinheitlich" beschreibt die stoffliche Eigenschaft zweier Teile. Die zwei Teile weisen dabei im Wesentlichen denselben chemischen Stoff auf. Die Gesamtmasse der unterschiedlichen chemischen Elemente in beiden Teilen kann dabei weniger als 1 Gew.-%, insbesondere weniger als 0,5 Gew-%, insbesondere weniger als 0,1 Gew.-% betragen. Insbesondere unterscheidet sich die chemische Zusammensetzung der beiden Teile um einen Gehalt an Verunreinigungen von weniger als 500 Gew.-ppm, insbesondere weniger als 100 Gew.-ppm und/oder um einen Gehalt an Dotanden von weniger als 10.000 Gew.-ppm, insbesondere weniger als 5.000 Gew.-ppm.

### Schritt c)

Im Rahmen des Schrittes c) "Anordnen" erfolgt eine Positionierung der Antiresonanzelement-Vorformlinge an Soll-Positionen in der Hüllrohr-Innenbohrung. Nach Schritt c) "Anordnen" kann eine Längsachse der Antiresonanzelement-Vorformlinge im Wesentlichen parallel zur Längsachse der Hüllrohr-Längsachse ausgerichtet sein. In einer Ausführungsform sind die Längsachse der Antiresonanzelement-Vorformlinge und die Hüllrohr-Längsachse derart parallel gestaltet, dass die Längsachse der Antiresonanzelement-Vorformlinge und die Hüllrohr-Längsachse einen Winkel von -1,5 Grad bis 1,5 Grad, vorzugsweise von -0,85 Grad bis 0,85 Grad, vorzugsweise von -0,42 Grad bis 0,42 Grad zueinander aufweisen. Diese Parallelität stellt sicher, dass die Antiresonanzelement-Vorformlinge an den Soll-Positionen in dem Hüllrohr angeordnet sind und sichert so die Einhaltung der Resonanz- beziehungsweise Antiresonanzbedingungen in der späteren Hohlkernfaser.

Wesentlich für die Einhaltung der Resonanz- beziehungsweise Antiresonanzbedingungen in der späteren Hohlkernfaser, beziehungsweise für eine weitere Reduktion der Dämpfung in der späteren Hohlkernfaser, ist die Erfüllung wenigstens einer der folgenden Bedingungen:
- Die Antiresonanzelement-Vorformlinge müssen an den vorberechneten Soll-Positionen in dem Hüllrohr angeordnet sein.
- Die Antiresonanzelement-Vorformlinge müssen an den vorberechneten Soll-Positionen in der Anordnung angeordnet sein.
- Die Antiresonanzelement-Vorformlinge müssen an den vorberechneten Soll-Positionen in der Vorform angeordnet sein.

### Schritt d)

Im Rahmen des Schrittes d) "Bearbeiten" wird die Anordnung, umfassend das Hüllrohr, die Antiresonanzelement-Vorformlinge und die Positionierungsschablone, durch wenigstens einen der Heißprozesse Elongieren und Kollabieren weiterverarbeitet.

Unter dem Begriff eines Elongierens wird im Rahmen der Erfindung eine Vergrößerung der longitudinalen Ausdehnung eines Körpers verstanden. Diese Vergrößerung der longitudinalen Ausdehnung kann einhergehen mit einer Reduktion der transversalen Ausdehnung des Körpers. Das Elongieren kann maßstäblich erfolgen, so dass sich beispielsweise die Form und Anordnung sowie die Größenverhältnisse (z.B. Hüllrohr zu Antiresonanzvorformling) von Bauteilen oder Bestandteilen im elongierten Endprodukt widerspiegeln.

Unter dem Begriff eines Kollabierens wird im Rahmen der Erfindung eine Reduktion der transversalen Ausdehnung eines Körpers verstanden. Diese Reduktion der transversalen Ausdehnung des Körpers kann im Rahmen einer Erhöhung der Temperatur des Körpers erfolgen und kann insbesondere auch zu einer Vergrößerung der longitudinalen Ausdehnung des Körpers führen.

Unter dem Begriff "Heißprozess" wird ein Verfahrensschritt verstanden, bei dem die Temperatur eines Elements durch Wärmeeintrag erhöht wird. Beispiele für Heißprozesse sind:
- Flammenbasierte Heißprozesse beruhen auf der Oxidation eines exotherm reagierenden Gases. Ein Beispiel ist die Nutzung von Wasserstoff - auch als "H2" bezeichnet - als Brenngas (die Flammenhydrolyse). Es reagiert mit dem Sauerstoff - auch als "O2" bezeichnet - der in der Luft ist oder dieser von extern zugeführt wird.
- Flammenfreie Heißprozesse nutzen andere sich erwärmende Systeme, die keine offene Flamme benötigen. Ein Beispiel ist die Nutzung eines Widerstands, der elektrische Energie in thermische Energie (Wärme) umwandelt.

Es ist vorgesehen, dass
- im Schritt d) "Bearbeiten" in der Hüllrohr-Innenbohrung ein relativer Innendruck im Bereich zwischen -10 bis -300 mbar, insbesondere -50 bis -250 mbar eingestellt wird,
- in wenigstens einem Antiresonanzelement-Vorformling das ARE-Außenelement und das ARE-Innenelement kreisbogenartig ausgestaltet sind, und
- das ARE-Außenelement und das ARE-Innenelement entlang zweier Verbindungslinien miteinander und mit der Hüllrohr-Innenbohrung verbunden sind.

Der relative Innendruck (ein Unterdruck gegenüber dem umgebenden Atmosphärendruck) im Bereich zwischen -10 bis -300 mbar, insbesondere -50 bis -250 mbar, der im Rahmen des Elongierens und/oder Kollabierens in der Hüllrohr-Innenbohrung eingestellt wird, stellt sicher, dass das OD/ID Verhältnis (Verhältnis Außendurchmesser zu Innendurchmesser des Hüllrohrs) nicht zu klein wird.

Bei antiresonanten Hohlkernfasern aus dem Stand der Technik sind sowohl das ARE-Außenelement als auch das ARE-Innenelement rohrartig ausgestaltet. Die ineinandergesteckten gebauten ARE-Außenelemente und ARE-Innenelemente sind miteinander und mit dem Hüllrohr jeweils entlang einer Verbindungslinie verbunden. Insofern besteht die Gefahr, dass die ARE-Elemente beim Elongieren eine rotatorische Bewegung durchführen und so die gleichverteilte Anordnung der ARE-Elemente an der Hüllrohr-Innenwand gestört wird, was sich in einer erhöhten Dämpfung widerspiegelt. Dieser Nachteil wird in dem erfindungsgemäßen Verfahren überwunden.

Eine Ausführungsform des Verfahrens zeichnet sich dadurch aus, dass das ARE-Außenelement einen durch eine ARE-Außenwandung zumindest partiell begrenzten Innenraum aufweist, in welchen das kreisbogenartig ausgestaltete ARE-Innenelement zumindest partiell hineinragt. Bei dieser Ausführungsform reduziert sich die Gefahr, dass das ARE-Innenelement sich bei einem Kollabieren und/oder Elongieren verformt und es insbesondere zu Variationen in der Wanddicke des ARE-Innenelements kommt, was zu einer erhöhten Dämpfung in der späteren antiresonanten Hohlkernfaser führt.

Eine Ausführungsform des Verfahrens zeichnet sich dadurch aus, dass das ARE-Außenelement einen ersten Mittelpunktswinkel α_Außen und das ARE-Innenelement einen zweiten Mittelpunktswinkel α_Innen aufweist, wobei insbesondere
- der erste Mittelpunktswinkel α_Außen und/oder der zweite Mittelpunktswinkel α _Innen größer als 310° sind.

Eine Ausführungsform des Verfahrens zeichnet sich dadurch aus, dass die Antiresonanzelement-Vorformlinge im Schritt f) "Bearbeiten" flammenfrei an der Hüllrohr-Wandung thermisch fixiert werden. Die Position der Antiresonanzelement-Vorformlinge im Hüllrohr kann wie folgt sein:
- Die Antiresonanzelement-Vorformlinge können die Innenseite der Hüllrohr-Innenbohrung nach dem Schritt c) "Anordnen" berühren, oder
- zwischen den Antiresonanzelement-Vorformlingen und der Innenseite der Hüllrohr-Innenbohrung kann nach dem Schritt c) "Anordnen" noch ein Spalt bestehen, der insbesondere beim Schritt d) "Bearbeiten" geschlossen wird.

Bei bekannten Verfahren werden die Antiresonanzelement-Vorformlinge mittels eines Brenners unter Nutzung einer Flamme an der Hüllrohr-Wandung, insbesondere an den jeweiligen Enden thermisch fixiert. Erst danach erfolgt ein Elongieren oder/und Kollabieren. Als nachteilig hat sich dabei die Bildung von Soot (Bezeichnung für SiO2-Partikel) und Abbrand herausgestellt. Diese Nebenprodukte der Verbrennung können verschiedene Ausgangspunkte haben: Die Verbrennung des Brenngases im Brenner kann unter Bildung einer Flamme mit einem Brennstoffüberschuss oder mit einem Oxidatorüberschuss erfolgen. Bekannte Nebenprodukte einer derartigen Verbrennung sind etwa Ruße. Weiterhin kann der Wärmeeintrag aus dem Brenner auf das Hüllrohr zu einem lokalen Verdampfen des Quarzglases führen. Der so entstehende Soot kann sich anschließend auf den Einzelteilen der Vorform, insbesondere auf den Antiresonanzelement-Vorformlingen, niederschlagen. Dies führt dann zu einer Reduktion der Qualität der final hergestellten Vorform, was sich insbesondere in einer höheren Dämpfung oder in Faserbrüchen zeigt.

Der Niederschlag von Abbrand oder Soot bildet sich insbesondere an der Stirnfläche des Hüllrohres sowie an dessen Innenoberfläche. Weiterhin sind die Oberflächen der Antiresonanzelement-Vorformlinge besonders betroffen. Aufgrund der Komplexität der erstellten Geometrie ist eine vollständige Säuberung, zum Beispiel durch Flusssäure, kaum möglich. Durch die Nutzung eines flammenfreien Prozesses im Rahmen des Schrittes f) "Bearbeiten" können die Antiresonanzelement-Vorformlinge stoffschlüssig mit der Hüllrohr-Wandung verbunden werden, ohne dass Soot oder Abbrand sich in der Anordnung niederschlägt.

Eine Ausführungsform des Verfahrens zeichnet sich dadurch aus, dass das Hüllrohr einen Außendurchmesser im Bereich von 65 bis 300 mm, vorzugsweise 90 bis 250 mm, vorzugsweise 120 bis 200 aufweist. Insbesondere kann das Hüllrohr eine Länge von mindestens 1 m aufweisen.

Die Genauigkeit der Positionierung der Antiresonanzelement-Vorformlinge im Hüllrohr wird verbessert, indem Antiresonanzelement-Vorformlinge bereitgestellt werden, von denen mindestens ein Teil eine Wandstärke im Bereich von 0,2 und 2 mm, vorzugsweise eine Wandstärke im Bereich von 0,25 und 1 mm hat, und wobei ein Hüllrohr mit einem Außendurchmesser im Bereich von 65 bis 300 mm, vorzugsweise mit einem Außendurchmesser im Bereich von 90 bis 250 mm, vorzugsweise mit einem Außendurchmesser im Bereich von 120 bis 200 mm bereitgestellt wird. Zusätzlich können diese Bauteile dabei jeweils eine Länge von mindestens 1 m aufweisen.

In einer Ausführungsform umfasst oder besteht das Hüllrohr aus einem Material, welches für ein Arbeitslicht der optischen Faser transparent ist, beispielsweise Glas, insbesondere dotiertes oder nicht dotiertes Quarzglas (SiO2). Eine Dotierung ermöglicht die Anpassung von physikalischen Eigenschaften, wie beispielsweise des thermischen Ausdehnungskoeffizienten und/oder der Viskosität. Als die Viskosität von Quarzglas absenkende Dotierstoffe kommen vorzugsweise Fluor, Chlor und/oder Hydroxylgruppen zum Einsatz.

Eine Ausführungsform des Verfahrens zur Herstellung einer sekundären Vorform, aus der eine antiresonante Hohlkernfaser ziehbar ist, aus einer Vorform, hergestellt nach einer der vorhergehenden Ausführungsformen, weist den Schritt auf:
- Weiterverarbeitung der Vorform zu der sekundären Vorform,
wobei die Weiterverarbeitung eine einmalige oder wiederholte Durchführung von einem oder mehreren der folgenden Heißformprozesse umfasst:
i.) Elongieren,
ii.) Kollabieren,
iii.) Kollabieren und gleichzeitiges Elongieren,
iv.) Aufkollabieren von zusätzlichem Mantelmaterial,
v.) Aufkollabieren von zusätzlichem Mantelmaterial und anschließendes Elongieren,
vi.) Aufkollabieren von zusätzlichem Mantelmaterial und gleichzeitiges Elongieren.

Ausgangspunkt für die Herstellung der antiresonanten Hohlkernfaser ist eine Vorform, insbesondere eine Vorform gemäß den beschriebenen Ausführungsformen, insbesondere eine Vorform aufweisend wenigstens einen Antiresonanzelement-Vorformling gemäß den beschriebenen Ausführungsformen. In dem erfindungsgemäßen Verfahren wird die Vorform durch die Durchführung eines oder mehrerer Heißformprozesse zu einer sekundären Vorform weiterverarbeitet.

Beim Elongieren wird die Vorform gelängt. Die Längung kann ohne gleichzeitiges Kollabieren erfolgen. Das Elongieren kann maßstäblich erfolgen, so dass sich beispielsweise die Form und Anordnung sowie die Größenverhältnisse (z.B. Hüllrohr zu Antiresonanzvorformling) von Bauteilen oder Bestandteilen der Vorform im elongierten Endprodukt der sekundären Vorform widerspiegeln. Beim Elongieren kann die primäre Vorform aber auch nicht-maßstäblich gezogen und ihre Geometrie verändert werden. Beim Kollabieren wird eine Innenbohrung verengt oder Ringspalte zwischen rohrförmigen Bauteilen werden geschlossen oder verengt. Das Kollabieren kann mit einem Elongieren einhergehen. Die so hergestellte sekundäre Vorform kann zum Ziehen einer Hohlkernfaser bereits ausgelegt und geeignet sein. Optional kann die sekundäre Vorform weiterverarbeitet werden, indem diese beispielsweise elongiert oder dieser zusätzliches Mantelmaterial hinzugefügt wird.

Eine Ausführungsform des Verfahrens zeichnet sich dadurch aus, dass wenigstens einer der Antiresonanzelement-Vorformlinge nach einem der vorhergehenden Ausführungsformen ausgestaltet ist.

Sämtliche für den Antiresonanzelement-Vorformling beschriebenen Eigenschaften und Merkmale gelten auch für das Verfahren und umgekehrt.

Die obengenannten Aufgaben werden auch gelöst durch eine antiresonante Hohlkernfaser, umfassend
- einen Mantel, welcher eine Mantel-Innenbohrung und eine Mantel-Längsachse aufweist, entlang der sich eine von einer Mantel-Innenseite und einer Mantel-Außenseite begrenzte Mantel-Wandung erstreckt,
- eine Anzahl von Antiresonanzelementen, jeweils umfassend eine ARE-Außeneinheit und eine ARE-Inneneinheit, wobei die kreisbogenartig ausgestaltete ARE-Außeneinheit und die ARE-Inneneinheit entlang zweier Nahtlinien miteinander verbunden sind,
- die Antiresonanzelemente zueinander beabstandet und kontaktfrei an Soll-Positionen an der Mantel-Innenseite der Mantel-Wandung angeordnet sind.

Erfindungsgemäß ist vorgesehen, dass die ARE-Außeneinheit einen durch eine ARE-Außenwand zumindest partiell begrenzten Innenraum aufweist, in welchen die kreisbogenartig ausgestaltete ARE-Inneneinheit zumindest partiell hineinragt.

Um eine monomodale Welle im Kern der antiresonanten Hohlkernfaser zu ermöglichen, müssen die ebenfalls eingekoppelten höheren Moden gedämpft werden. Dies soll möglichst innerhalb der ersten Meter der optischen antiresonanten Hohlkernfaser erfolgen. Bei NANF-Fasern dienen die Antiresonanzelemente zur Dämpfung dieser höheren Moden. Ein Aspekt ist dabei die geometrische Ausgestaltung der ARE-Inneneinheit und ARE-Außeneinheit sowohl allein als auch zueinander. Die Anpassung der ARE-Inneneinheit und ARE-Außeneinheit zueinander mit dem Ziel der Dämpfung der Moden höherer Ordnung wird auch als Moden-Anpassung bezeichnet. Gegenüber antiresonanten Hohlkernfasern aus dem Stand der Technik zeichnet sich die erfindungsgemäße antiresonante Hohlkernfaser dadurch aus, dass:
- sowohl ARE-Außeneinheit als auch ARE-Inneneinheit eine negative Krümmung haben, was sich positiv auf die Dämpfung auswirkt, und
- durch die erfindungsgemäße Möglichkeit nahezu beliebige Kombinationen für die Radien der ARE-Inneneinheit und der ARE-Außeneinheit nutzbar sind.

Dieser Freiheitsgrad ermöglicht eine verbesserte Moden-Anpassung in der antiresonanten Hohlkernfaser.

In einer Ausführungsform sind wenigstens eine Nahtlinie und die Mantel-Längsachse derart parallel gestaltet, dass insbesondere beide Nahtlinien und die Mantel-Längsachse einen Winkel von -1,5 Grad bis 1,5 Grad, vorzugsweise von -0,85 Grad bis 0,85 Grad, vorzugsweise von - 0,42 Grad bis 0,42 Grad zueinander aufweisen. Diese Parallelität stellt eine verbesserte Moden-Anpassung in der antiresonanten Hohlkernfaser sicher.

Eine Ausführungsform der antiresonanten Hohlkernfaser zeichnet sich dadurch aus, dass die antiresonante Hohlkernfaser drei, vier, fünf, sechs, sieben oder acht Antiresonanzelemente aufweist, insbesondere, dass die antiresonante Hohlkernfaser eine ungerade Anzahl an Antiresonanzelementen aufweist. Diese Anzahl hat sich als besonders vorteilhaft bei der Reduktion der Dämpfung in der antiresonanten Hohlkernfaser erwiesen.

Eine Ausführungsform der antiresonanten Hohlkernfaser zeichnet sich dadurch aus, dass die antiresonante Hohlkernfaser wenigstens eines der folgenden Merkmale aufweist:
- Die Antiresonanzelemente sind symmetrisch an der Mantel-Innenseite der Mantel-Wandung angeordnet,
- wenigstens eine der ARE-Außeneinheiten und/oder ARE-Inneneinheiten ist aus einem amorphen Festkörper, insbesondere Glas, insbesondere Quarzglas, insbesondere aus Glas mit einem Brechungsindex von mindestens 1,4, insbesondere 1,4 bis 3, insbesondere 1,4 bis 2,8 aufgebaut, und
- eine Wandstärke der ARE-Außeneinheiten und der ARE-Inneneinheiten ist im Wesentlichen gleich.

Der Begriff "im Wesentlichen gleiche Wandstärke" ist so zu verstehen, dass unter realen Bedingungen und Fertigungstechniken eine mathematisch exakt gleiche Wandstärke nicht erzielbar ist, sondern nur innerhalb gewisser fertigungstechnischer Fehlertoleranzen gegeben sein kann. Insofern wird unter dem Begriff "im Wesentlichen gleiche Wandstärke" ein Unterschied in der Wandstärke der ARE-Außeneinheiten und der ARE-Inneneinheiten von weniger als 5 %, insbesondere weniger als 2,5 %, insbesondere weniger als 1,5 % verstanden.

Eine Ausführungsform der antiresonanten Hohlkernfaser zeichnet sich dadurch aus, dass die antiresonante Hohlkernfaser wenigstens eines der folgenden Merkmale aufweist:
- Eine fundamentale Dämpfung von weniger als 0,15 dB/km bei einer transportierten Wellenlänge zwischen 1,0 µm und 2,5 µm, und
- eine fundamentale Dämpfung von weniger als 1 dB/km bei einer transportierten Wellenlänge von bis zu 0,8 µm.

Eine Ausführungsform der antiresonanten Hohlkernfaser zeichnet sich dadurch aus, dass die Antiresonanzelemente einen Kern mit einem Kernradius formen, wobei der Kernradius kleiner als 50 µm, insbesondere kleiner als 40 µm, insbesondere kleiner als 30 µm, insbesondere kleiner als 25 µm, insbesondere kleiner als 20 µm, insbesondere kleiner als 15 µm, insbesondere kleiner als 13 µm ist.

Eine Ausführungsform der antiresonanten Hohlkernfaser zeichnet sich dadurch aus, dass die antiresonante Hohlkernfaser wenigstens eines der folgenden Merkmale aufweist:
- die ARE-Außeneinheit einen dritten Kreisradius FB_Außen,
- die ARE-Inneneinheit einen vierten Kreisradius FB_Innen,
- die ARE-Außeneinheit einen dritten Mittelpunktswinkel β_Außen, und
- die ARE-Inneneinheit einen vierten Mittelpunktswinkel β_Innen.

Eine Ausführungsform der antiresonanten Hohlkernfaser zeichnet sich dadurch aus, dass
- der dritte Kreisradius FB_Außen und der vierte Kreisradius FB_Innen im Wesentlichen gleich lang sind (FB_Außen = FB_Innen)
und mindestens ein Antiresonanzelement wenigstens eines der folgenden Merkmale aufweist:
- FB_Außen kleiner 30 µm, insbesondere kleiner 25 µm, insbesondere kleiner 15 µm;
- FB_Außen größer 5 µm, insbesondere größer 10 µm, insbesondere größer 12 µm;
- FB_Innen kleiner 30 µm, insbesondere kleiner 25 µm, insbesondere kleiner 15 µm; und
- FB_Innen größer 5 µm, insbesondere größer 10 µm, insbesondere größer 12 µm.

Eine derartige Ausgestaltung einer antiresonanten Hohlkernfaser weist eine geringe Dämpfung auf. Durch den erfindungsgemäß gewonnenen Freiheitsgrad kann eine optimierte Moden-Anpassung durchgeführt werden.

Eine Ausführungsform der antiresonanten Hohlkernfaser zeichnet sich dadurch aus, dass
- der dritte Kreisradius FB_Außen und der vierte Kreisradius FB_Innen im Wesentlichen gleich lang sind (FB_Außen = FB_Innen)
und mindestens ein Antiresonanzelement wenigstens eines der folgenden Merkmale aufweist:
- β_Außen kleiner 350°, insbesondere kleiner 345°, insbesondere kleiner 340°;
- β_Außen größer 275°, insbesondere größer 295°, insbesondere größer 320°;
- β_Innen kleiner 195°, insbesondere kleiner 180°, insbesondere kleiner 150°; und
- β_Innen größer 30°, insbesondere größer 40°, insbesondere größer 50°.

Eine Ausführungsform der antiresonanten Hohlkernfaser zeichnet sich dadurch aus, dass
- der dritte Kreisradius FB_Außen länger ist als der vierte Kreisradius FB_Innen (FB_Außen > FB_Innen)
und mindestens ein Antiresonanzelement wenigstens eines der folgenden Merkmale aufweist:
- FB_Außen kleiner 30 µm, insbesondere kleiner 25 µm, insbesondere kleiner 15 µm;
- FB_Außen größer 5 µm, insbesondere größer 10 µm, insbesondere größer 12 µm;
- FB_Innen kleiner 20 µm, insbesondere kleiner 15 µm, insbesondere kleiner 11 µm; und
- FB_Innen größer 2 µm, insbesondere größer 4 µm, insbesondere größer 6 µm.

Durch die Möglichkeit, dass der vierte Kreisradius FB_Innen der ARE-Inneneinheit größer ist als der dritte Kreisradius FB_Außen der ARE-Außeneinheit, kann eine verbesserte Moden-Anpassung durchgeführt werden.

Eine Ausführungsform der antiresonanten Hohlkernfaser zeichnet sich dadurch aus, dass
- der dritte Kreisradius FB_Außen länger ist als der vierte Kreisradius FB_Innen (FB_Außen > FB_Innen)
und mindestens ein Antiresonanzelement wenigstens eines der folgenden Merkmale aufweist:
- β_Außen kleiner 350°, insbesondere kleiner 345°, insbesondere kleiner 340°;
- β_Außen größer 275°, insbesondere größer 295°, insbesondere größer 320°;
- β_Innen kleiner 300°, insbesondere kleiner 285°, insbesondere kleiner 230°; und
- β_Innen größer 100°, insbesondere größer 120°, insbesondere größer 150°.

Eine Ausführungsform der antiresonanten Hohlkernfaser zeichnet sich dadurch aus, dass
- der dritte Kreisradius FB_Außen kürzer ist als der vierte Kreisradius FB_Innen (FB_Außen < FB_Innen)
und mindestens ein Antiresonanzelement wenigstens eines der folgenden Merkmale aufweist:
- FB_Außen kleiner 30 µm, insbesondere kleiner 25 µm, insbesondere kleiner 15 µm;
- FB_Außen größer 5 µm, insbesondere größer 10 µm, insbesondere größer 12 µm;
- FB_Innen kleiner 20 µm, insbesondere kleiner 15 µm, insbesondere kleiner 11 µm; und
- FB_Innen größer 2 µm, insbesondere größer 4 µm, insbesondere größer 6 µm.

Eine derartige Ausgestaltung einer antiresonanten Hohlkernfaser weist eine geringe Dämpfung auf.

Eine Ausführungsform der antiresonanten Hohlkernfaser zeichnet sich dadurch aus, dass
- der dritte Kreisradius FB_Außen kürzer ist als der vierte Kreisradius FB_Innen (FB_Außen < FB_Innen)
und mindestens ein Antiresonanzelement wenigstens eines der folgenden Merkmale aufweist:
- β_Außen kleiner 340°, insbesondere kleiner 315°, insbesondere kleiner 305°;
- β_Außen größer 200°, insbesondere größer 220°, insbesondere größer 250°;
- β_Innen kleiner 195°, insbesondere kleiner 180°, insbesondere kleiner 150°; und
- β_Innen größer 30°, insbesondere größer 40°, insbesondere größer 50°.

Eine Ausführungsform der antiresonanten Hohlkernfaser zeichnet sich dadurch aus, dass der dritte Mittelpunktswinkel β_Außen und/oder der vierte Mittelpunktswinkel β_Innen kleiner als 350° ist, insbesondere, dass der dritte Mittelpunktswinkel β_Außen und/oder der vierte Mittelpunktswinkel β_Innen [200°; 340°], insbesondere [250°, 330°], insbesondere [300°; 320°] ist.

Eine Ausführungsform der antiresonanten Hohlkernfaser zeichnet sich dadurch aus, dass die ARE-Außeneinheit eine dritte Segmenthöhe HF_Außen und die ARE-Inneneinheit eine vierte Segmenthöhe HF_Innen aufweist, wobei insbesondere gilt, dass
- das Verhältnis der dritten Segmenthöhe HF_Außen zur vierten Segmenthöhe kleiner dreißig (HF_Innen HF_Außen / HF_Innen < 30) ist.

Die dritte Segmenthöhe HF_Außen bezeichnet den Abstand des Scheitelpunktes zur Sehne der ARE-Außeneinheit. Die vierte Segmenthöhe HF_Innen bezeichnet den Abstand des Scheitelpunktes zur Sehne der ARE-Inneneinheit. Durch eine entsprechende Wahl des Verhältnisses kann eine geringe Dämpfung der antiresonanten Hohlkernfaser erzielt werden.

Eine Ausführungsform der antiresonanten Hohlkernfaser zeichnet sich dadurch aus, dass eine ARE-Bogeneinheit in der ARE-Außeneinheit angeordnet ist. Um eine monomodale Welle im Kern zu ermöglichen, müssen die höheren Moden in der antiresonanten Hohlkernfaser gedämpft werden. Zur Erfüllung dieser Aufgabe kann die ARE-Außeneinheit um die ARE-Bogeneinheit ergänzt werden.

Eine Ausführungsform der antiresonanten Hohlkernfaser zeichnet sich dadurch aus, dass die ARE-Bogeneinheit kreisbogenförmig ausgestaltet ist und einen sechsten Kreisradius FB_Bogen und einen sechsten Mittelpunktswinkel β_Bogen aufweist, und die ARE-Bogeneinheit mit der ARE-Außeneinheit und/oder dem ARE-Inneneinheit entlang zweier Berührungsnähte verbunden ist.

Eine Ausführungsform der antiresonanten Hohlkernfaser zeichnet sich dadurch aus, dass die ARE-Bogeneinheit kreisförmig ausgestaltet ist und einen Radius FB_Kreis aufweist, und die ARE-Bogeneinheit mit der ARE-Inneneinheit entlang einer Berührungsnaht verbunden ist.

Die ARE-Bogeneinheit kann im Rahmen eines Elongierens und/oder Kollabierens aus einem ARE-Bogenelement entstehen. Insofern gelten die zum ARE-Bogenelement gemachten Aussagen hinsichtlich der Ausgestaltung auch für die ARE-Bogeneinheit.

Eine Ausführungsform der antiresonanten Hohlkernfaser zeichnet sich dadurch aus, dass ein Unterschied einer fundamentalen Dämpfung zwischen einer geraden und einer auf einen Durchmesser von 10 mm aufgespulten antiresonanten Hohlkernfaser kleiner ist als zwei Größenordnungen, insbesondere kleiner als eine Größenordnung, insbesondere kleiner als die Hälfte einer Größenordnung.

Eine Ausführungsform der antiresonanten Hohlkernfaser zeichnet sich dadurch aus, dass die antiresonante Hohlkernfaser aus einer Vorform nach einer der vorherigen Ausführungsformen hergestellt ist.

Sämtliche für die Vorform beschriebenen Eigenschaften und Merkmale gelten auch für die antiresonante Hohlkernfaser und jeweils umgekehrt.

Eine Ausführungsform der antiresonanten Hohlkernfaser zeichnet sich dadurch aus, dass die antiresonante Hohlkernfaser gemäß einem Verfahren nach einer der vorherigen Ausführungsformen hergestellt ist.

Sämtliche für die antiresonante Hohlkernfaser beschriebenen Eigenschaften und Merkmale gelten auch für die Vorform und/oder die antiresonante Hohlkernfaser und/oder das Verfahren und jeweils umgekehrt.

Die obengenannten Aufgaben werden auch gelöst durch ein Verfahren zur Herstellung einer antiresonanten Hohlkernfaser aus einer Vorform hergestellt nach einer der vorherigen Ausführungsformen, insbesondere hergestellt nach einem Verfahren nach einer der vorherigen Ausführungsformen, aufweisend den Schritt
- Weiterverarbeitung der Vorform zu der antiresonanten Hohlkernfaser,
wobei die Weiterverarbeitung eine einmalige oder wiederholte Durchführung eines oder mehrerer der folgenden Heißformprozesse umfasst:
i.) Elongieren,
ii.) Kollabieren,
iii.) Kollabieren und gleichzeitiges Elongieren,
iv.) Aufkollabieren von zusätzlichem Mantelmaterial,
v.) Aufkollabieren von zusätzlichem Mantelmaterial und anschließendes Elongieren,
vi.) Aufkollabieren von zusätzlichem Mantelmaterial und gleichzeitiges Elongieren.

Zum Weiterverarbeiten und Erzeugen der antiresonanten Hohlkernfaser aus der Vorform kann die Vorform senkrecht durch einen Ofen geführt werden. Dabei wird ein unteres Ende der Vorform, aus dem in Form einer Ziehzwiebel die antiresonante Hohlkernfaser gezogen wird, auf Ziehtemperatur erwärmt, wobei die gezogene antiresonante Hohlkernfaser anschließend durch einen der Ziehrichtung entgegengerichteten Gasstrom von der Ziehtemperatur heruntergekühlt wird.

In einer Ausführungsform wird die antiresonante Hohlkernfaser mit einer Schutzschicht beschichtet, wobei dieser Schritt während des Ziehprozesses bei der Glasfaserherstellung ausgeführt wird. Bei dem zur Beschichtung eingesetzten Kunststoff kann es sich um einen oder mehreren der folgenden Stoffe handeln: Polyurethan-Acrylate, Acrylate, Polyolefine, Polyamide (Nylon), Polyether, Polyurethan-Monoacrylate, Fluoralkyl-Methyiacrylate oder Polyimid.

Eine Ausführungsform des Verfahrens zur Herstellung einer antiresonanten Hohlkernfaser zeichnet sich dadurch aus, dass bei dem Schritt "Weiterverarbeitung" im Rahmen des Elongierens der Vorform zu einer antiresonanten Hohlkernfaser im Kernbereich ein relativer Innendruck im Bereich zwischen 0,05 mbar - 20 mbar eingestellt wird.

Bei einem relativen Innendruck von weniger als 0,05 mbar kann es dazu kommen, dass die antiresonante Hohlkernfaser zu stark kollabiert. Umgekehrt kann ein relativer Innendruck von mehr als 20 mbar im Kernbereich dazu führen, dass sich die antiresonante Hohlkernfaser zu stark aufweitet.

Die Temperatur einer Heizzone beim Heißformprozess sollte möglichst konstant sein. Vorteilhafterweise wird daher beim Heißformprozess ein temperaturgeregeltes Heizelement eingesetzt, dessen Soll-Temperatur auf +/- 0.1°C genau gehalten wird. Dadurch können Temperaturschwankungen im Heißformprozess auf weniger als +/- 0.5°C begrenzt werden.

Bei der Herstellung einer antiresonanten Hohlkernfaser aus einer Vorform nach einer der vorherigen Ausführungsformen, insbesondere im Rahmen des Schrittes "Weiterverarbeitung", kann es insbesondere zu wenigstens einem der folgenden Übergänge kommen:
- aus dem Antiresonanzelement-Vorformling entsteht das Antiresonanzelement,
- aus dem Hüllrohr entsteht wenigstens ein Teil des Mantels,
- aus dem ARE-Außenelement entsteht die ARE-Außeneinheit,
- aus dem ARE-Innenelement entsteht die ARE-Inneneinheit,
- aus dem ersten Kreisradius R_Außen entsteht der dritte Kreisradius FB_Außen,
- aus dem zweiten Kreisradius R_lnnen entsteht der vierte Kreisradius FB_Innen,
- aus dem ersten Mittelpunktswinkel α_Außen entsteht der dritte Mittelpunktswinkel β_Außen,
- aus dem zweiten Mittelpunktswinkel α_Innen entsteht der vierte Mittelpunktswinkel β_Innen,
- aus der ersten Segmenthöhe H_Außen entsteht die dritte Segmenthöhe HF_Außen,
- aus der zweiten Segmenthöhe H_Innen entsteht die vierte Segmenthöhe HF_Innen,
- aus der Verbindungslinie entsteht die Nahtlinie,
- aus dem ARE-Bogenelement entsteht die ARE-Bogeneinheit,
- aus dem fünften Kreisradius R_Bogen entsteht der sechste Kreisradius FB_Bogen,
- aus dem Radius R_Kreis entsteht der Radius FB_Kreis,
- aus dem fünften Mittelpunktswinkel α_Bogen entsteht der sechste Mittelpunktswinkel β_Bogen, und
- aus der Berührungslinie entsteht die Berührungsnaht.

Insofern gelten sämtliche für die Antiresonanzelement-Vorformlinge beschriebenen Eigenschaften und Merkmale auch für die Vorform und/oder die antiresonante Hohlkernfaser und/oder das Verfahren und jeweils umgekehrt.

Die in der Beschreibung offenbarten Eigenschaften und Merkmale können für verschiedene Ausgestaltungsformen der beanspruchten Erfindung sowohl getrennt als auch in beliebiger Kombination miteinander wesentlich sein. Die für den Antiresonanzelement-Vorformling oder die Vorform oder die antiresonante Hohlkernfaser offenbarten Eigenschaften und Merkmale sind auch für die Verfahren offenbart und umgekehrt.

Die Erfindung wird im Folgenden durch Figuren weiter beispielhaft illustriert. Die Erfindung ist nicht auf die Figuren beschränkt.

### Figuren

Es zeigen
- Fig. 1: ein kreisbogenartig ausgestaltetes ARE-Außenelement,
- Fig. 2: ein kreisbogenartig ausgestaltetes ARE-Innenelement,
- Fig. 3: einen Antiresonanzelement-Vorformling sowie eine Ausschnittsvergrößerung einer Verbindungslinie,
- Fig. 4-15: verschiedene Ausführungsformen eines Antiresonanzelement-Vorformlings,
- Fig. 16: einen Querschnitt durch eine Vorform zur Herstellung einer antiresonanten Hohlkernfaser,
- Fig. 17: eine weitere Ausführungsform eines Antiresonanzelement-Vorformlings,
- Fig. 18: eine weitere Ausführungsform eines Antiresonanzelement-Vorformlings,
- Fig. 19: einen Längsschnitt durch eine antiresonante Hohlkernfaser,
- Fig. 20: einen Querschnitt durch die antiresonante Hohlkernfaser gemäß Fig. 19,
- Fig. 21: einen Längsschnitt durch ein Hüllrohr,
- Fig. 22: einen Längsschnitt durch Elemente einer weiteren Ausführungsform einer Vorform,
- Fig. 23: einen Längsschnitt durch eine Vorform aufweisend die Elemente aus Fig. 22,
- Fig. 24: einen Längsschnitt durch Elemente einer weiteren Ausführungsform einer Vorform,
- Fig. 25: einen Längsschnitt durch eine Vorform aufweisend die Elemente aus Fig. 24,
- Fig. 26: ein Elongieren einer Anordnung zu einer Vorform,
- Fig. 27: Verfahrensschritte zur Herstellung einer Vorform, und
- Fig. 28: Verfahrensschritte zur Herstellung einer antiresonanten Hohlkernfaser.

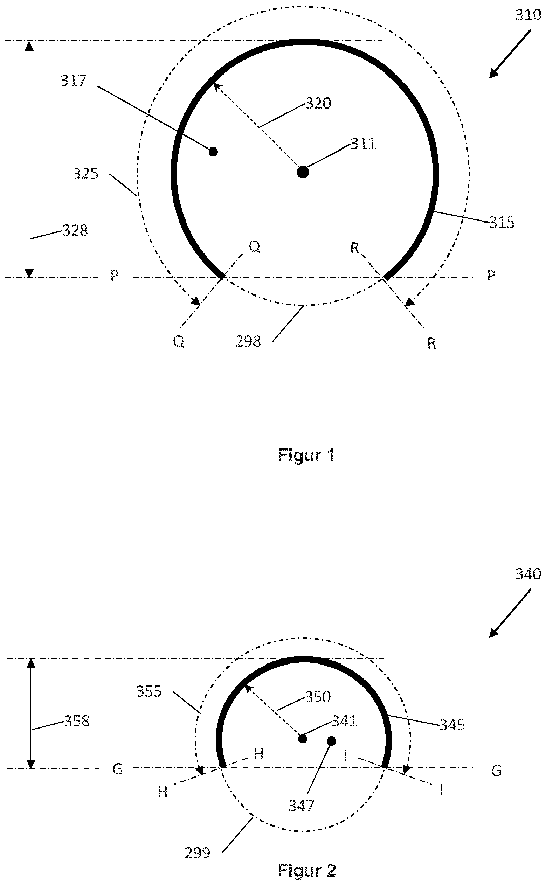

Die **Figur** 1 zeigt einen Querschnitt durch ein ARE-Außenelement 310. Das ARE-Außenelement 310 ist eine rohrartige Struktur, die einen kreisbogenartigen Querschnitt aufweist. Das ARE-Außenelement 310 erstreckt sich entlang einer ersten Längsachse 311. In Figur 1 erstreckt sich das ARE-Außenelement 310 folglich in die Zeichnungsebene.

Das ARE-Außenelement 310 weist eine ARE-Außenwandung 315 auf, die ein Material umfasst oder daraus besteht, welches für ein Arbeitslicht der optischen Faser transparent ist, beispielsweise Glas, insbesondere dotiertes oder nicht dotiertes Quarzglas (SiO2). In einer Ausführungsform weist die ARE-Außenwandung 315 eine Wandstärke im Bereich von 0,1 mm bis 2 mm, vorzugsweise 0,2 mm bis 1,5 mm auf. In einer Ausführungsform weist das ARE-Außenelement 310 eine Länge von mindestens 1 m, insbesondere eine Länge von 0,2 bis 10 m, insbesondere eine Länge von 1 bis 5 m auf.

Der in Figur 1 gezeigte Querschnitt verdeutlicht, dass das ARE-Außenelement 310 einen kreisbogenartigen Querschnitt aufweist. Unter dem Begriff "Kreisbogen" wird im Rahmen der Erfindung ein Teilstück einer Kreislinie verstanden. Zwei Punkte auf einem Kreis teilen die Kreislinie in zwei Kreisbögen. Im Rahmen dieser Erfindung wird ein Element als "kreisbogenartig" beschreiben, wenn seine äußere Form dem Verlauf eines der besagten zwei Kreisbögen folgt.

Zur Verdeutlichung ist in Figur 1 ein erster Kreis 298 eingezeichnet. Dieser erste Kreis 298 wird durch die beiden Schnittlinien Q-Q und R-R in zwei Kreisbögen aufgeteilt. Der Querschnitt des ARE-Außenelements 310 folgt einem der beiden Kreisbögen.

Weiterhin ist eine Schnittlinie P-P eingezeichnet, welche durch die beiden Schnittpunkte der beiden Schnittlinien Q-Q und R-R mit dem ersten Kreis 298 verläuft. Als erste Sehne des ARE-Außenelements 310 wird jene Strecke bezeichnet, die auf der Schnittlinie P-P liegt und durch die Schnittlinien Q-Q und R-R begrenzt ist. Als erste Sehnenlänge wird die Länge der ersten Sehne bezeichnet.

Das ARE-Außenelement 310 weist einen ersten Kreisradius R_Außen 320 auf. Dieser erste Kreisradius R_Außen 320 beschreibt den Abstand der ARE-Außenwandung 315 zur ersten Längsachse 311.

Das ARE-Außenelement 310 weist eine erste Segmenthöhe 328 auf. Diese erste Segmenthöhe 328 beschreibt die Länge einer Gerade, die senkrecht auf der ersten Sehne steht und bis zum Scheitelpunkt der ARE-Außenwandung 315 läuft.

Das ARE-Außenelement 310 weist einen ersten Mittelpunktswinkel α_Außen 325 auf. Dieser erste Mittelpunktswinkel α_Außen 325 beschreibt den Winkel, dessen Scheitel im Mittelpunkt des ersten Kreises 298 liegt und dessen Schenkel die Begrenzungspunkte des Kreisbogens (hier die Schnittpunkte des ersten Kreises 298 mit den Schnittlinien Q-Q und R-R) schneiden. Ein Vollkreis weist eine Gradzahl von 360° auf. Da das ARE-Außenelement 310 kreisbogenartig ausgestaltet ist, ist der erste Mittelpunktswinkel α_Außen 325 kleiner als 360°.

Das ARE-Außenelement 310 weist einen durch die ARE-Außenwandung 315 und die erste Sehne begrenzten Innenraum 317 auf.

Die **Figur** 2 zeigt einen Querschnitt durch ein ARE-Innenelement 340. Das ARE-Innenelement 340 ist eine rohrartige Struktur, die einen kreisbogenartigen Querschnitt aufweist. Das ARE-Innenelement 340 erstreckt sich entlang einer zweiten Längsachse 341. In Figur 2 erstreckt sich das ARE-Innenelement 340 folglich in die Zeichnungsebene.

Das ARE-Innenelement 340 weist eine Wandung 345 auf, die ein Material umfasst oder daraus besteht, welches für ein Arbeitslicht der optischen Faser transparent ist, beispielsweise Glas, insbesondere dotiertes oder nicht dotiertes Quarzglas (SiO2). In einer Ausführungsform weist die Wandung 345 eine Wandstärke im Bereich von 0,1 mm bis 2 mm, vorzugsweise 0,2 mm bis 1,5 mm auf. In einer Ausführungsform weist das ARE-Außenelement 310 insbesondere eine Länge von mindestens 1 m, insbesondere eine Länge von 0,2 bis 10 m, insbesondere eine Länge von 1 bis 5 m auf.

Das ARE-Innenelement 340 weist einen kreisbogenartigen Querschnitt auf. Zur Verdeutlichung ist in Figur 2 ein zweiter Kreis 299 eingezeichnet. Dieser zweite Kreis 299 wird durch die beiden Schnittlinien H-H und I-I in zwei Kreisbögen aufgeteilt. Der Querschnitt des ARE-Innenelements 340 folgt einem der beiden Kreisbögen.

Weiterhin ist eine Schnittlinie G-G eingezeichnet, welche durch die beiden Schnittpunkte der beiden Schnittlinien H-H und I-I mit dem zweiten Kreis 299 verläuft. Als zweite Sehne des ARE-Innenelements 340 wird jene Strecke bezeichnet, die auf der Schnittlinie G-G liegt und durch die Schnittlinien H-H und I-I begrenzt ist. Als zweite Sehnenlänge wird die Länge der zweiten Sehne bezeichnet.

Das ARE-Innenelement 340 weist eine zweite Segmenthöhe 358 auf. Diese zweite Segmenthöhe 358 beschreibt die Länge einer Gerade, die senkrecht auf der zweiten Sehne steht und bis zum Scheitelpunkt der Wandung 345 läuft.

Weiterhin weist das ARE-Innenelement 340 einen zweiten Kreisradius R_Innen 350 auf. Dieser zweite Kreisradius R_Innen 350 beschreibt den Abstand der Wandung 345 zur zweiten Längsachse 341.

Das ARE-Innenelement 340 weist einen zweiten Mittelpunktswinkel α_Innen 355 auf. Dieser zweite Mittelpunktswinkel α_Innen 355 beschreibt den Winkel, dessen Scheitel im Mittelpunkt des zweiten Kreises 299 liegt und dessen Schenkel die Begrenzungspunkte des Kreisbogens schneiden (hier die Schnittpunkte des zweiten Kreises 299 mit den Schnittlinien H-H und I-I). Ein Vollkreis weist eine Gradzahl von 360° auf. Da das ARE-Innenelement 340 kreisbogenartig ausgestaltet ist, ist der zweite Mittelpunktswinkel α_Innen 355 kleiner als 360°.

Das ARE-Innenelement 340 weist einen durch die Wandung 345 und die zweite Sehne begrenzten Innenraum 347 auf.

Die Figuren 1 und 2 zeigen einen Querschnitt, also eine axiale Aufsicht auf das ARE-Außenelement 310, sowie das ARE-Innenelement 340. In der dargestellten zweidimensionalen Betrachtung auf die jeweiligen Längsachsen 311 und 341 weisen das ARE-Außenelement 310 sowie das ARE-Innenelement 340 einen kreisbogenartigen Querschnitt auf, was in einer dreidimensionalen Betrachtung einem rohrartigen Strukturelement entspricht.

Der jeweilige Kreisbogen des ARE-Außenelements 310 und/oder des ARE-Innenelements 340 sind im Wesentlichen kreisrund ausgestaltet, wobei insbesondere der erste Kreisradius R_Außen 320 und/oder der zweite Kreisradius R_Innen 350 an einer ersten Stelle nicht mehr als 5 %, bevorzugt nicht mehr als 3 %, weiter bevorzugt nicht mehr als 1 %, am bevorzugtesten nicht mehr als 0,5 % vom ersten Kreisradius R_Außen 320 und/oder zweiten Kreisradius R_Innen 350 an einer weiteren Stelle abweichen.

Unter der Aussage, dass zwei Längen - wie etwa der erste Kreisradius R_Außen 320 und der zweite Kreisradius R_Innen 350 - gleich lang sind, wird im Rahmen der Erfindung verstanden, dass die besagten Längen innerhalb der fertigungstechnischen Toleranzen gleich sind, insbesondere dass diese besagten Längen sich um weniger als 1,5 %, insbesondere um weniger als 1,0 %, insbesondere um weniger als 0,5 % in der Länge unterscheiden.

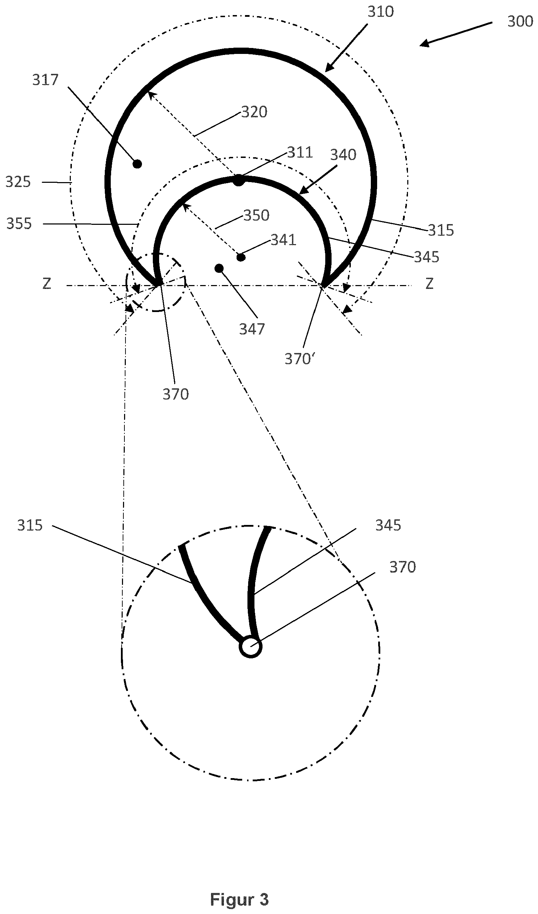

Die **Figur** 3 zeigt einen Antiresonanzelement-Vorformling 300, umfassend das kreisbogenartig ausgestaltete ARE-Außenelement 310 und das kreisbogenartig ausgestaltete ARE-Innenelement 340, wie dargestellt in den Figuren 1 und 2.

Das kreisbogenartig ausgestaltete ARE-Außenelement 310 und das kreisbogenartig ausgestaltete ARE-Innenelement 340 sind entlang zweier im Wesentlichen parallel zu der ersten Längsachse 311 angeordneter Verbindungslinien 370, 370' miteinander verbunden. Dieser Verbund kann insbesondere durch einen Heißprozess erfolgt sein.

Zur Verdeutlichung ist in Figur 3 ein Teil des Antiresonanzelement-Vorformlings 300 um die Verbindungsline 370 vergrößert dargestellt. Der Verbund erfolgt zwischen
- einem ersten Endpunkt der ARE-Außenwandung 315 des ARE-Außenelements 310, welcher sich aus dem Schnittpunkt des ersten Kreises 298 mit den Schnittlinien Q-Q und R-R ergibt, und
- einem zweiten Endpunkt der Wandung 345 des ARE-Innenelements 340, welcher sich aus dem Schnittpunkt des zweiten Kreises 299 mit den Schnittlinien H-H und I-I ergibt.

Da in Figur 3 ein Querschnitt dargestellt ist, verlaufen im dreidimensionalen Antiresonanzelement-Vorformling 300 die beiden Verbindungslinien 370, 370' in die Zeichnungsebene hinein.

Wie auch Figur 1 verdeutlicht, weist das ARE-Außenelement 310 einen durch die ARE-Außenwandung 315 zumindest partiell begrenzten Innenraum 317 auf. Analog weist das ARE-Innenelement 340 einen durch die Wandung 345 zumindest partiell begrenzten Innenraum 347 auf, was Figur 2 zeigt. Es ist vorgesehen, dass das kreisbogenartig ausgestaltete ARE-Innenelement 340 zumindest partiell in den Innenraum 317 hineinragt. Darunter wird im Rahmen der Erfindung verstanden, dass - im Querschnitt - das ARE-Innenelement 340 im Wesentlichen oberhalb der ersten Sehne des ARE-Außenelements 310 verläuft. Abweichungen von dieser Positionierung des ARE-Innenelements 340 sind insbesondere begrenzt durch die fertigungsbedingten Ausdehnungen der beiden Verbindungslinien 370, 370', welche aus dem Innenraum 317 herausragen können. Insbesondere kann im Querschnitt nicht mehr als 5 %, insbesondere nicht mehr als 2,5 %, insbesondere nicht mehr als 1 % des zweiten Mittelpunktswinkels α_Innen 355 des ARE-Innenelements 340 aus dem Innenraum 317 herausragen.

Der in Figur 3 dargestellte Antiresonanzelement-Vorformling 300 ist separat von weiteren Bauteilen zur Herstellung einer antiresonanten Hohlkernfaser herstellbar. Dadurch kann die Präzision des Antiresonanzelement-Vorformlings 300 vor einem Einbau in eine Vorform geprüft werden, um sicherzustellen, dass nur einwandfreie Antiresonanzelement-Vorformlinge 300 Nutzung finden. Der dargestellte Antiresonanzelement-Vorformling 300 zeichnet sich erfindungsgemäß dadurch aus, dass:
- sowohl ARE-Außenelement 310 als auch ARE-Innenelement 340 der antiresonanten Hohlkernfaser eine negative Krümmung haben, was sich positiv auf die Dämpfung auswirkt, und
- durch die erfindungsgemäße Möglichkeit nahezu beliebige Kombinationen für die Radien des ARE-Innenelements 340 und des ARE-Außenelements 310 nutzbar sind.

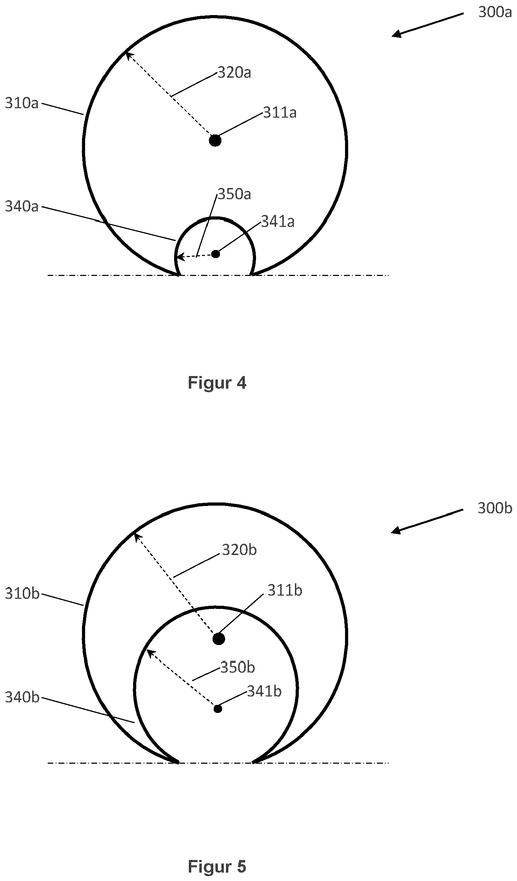

Die **Figuren 4 bis 15** zeigen verschiedene Ausführungsformen eines Antiresonanzelement-Vorformlings. Die Ausführungsform gemäß Figuren 4 bis 15 stimmt weitgehend mit der vorstehend beschriebenen und in den Figuren 1 bis 3 dargestellten Ausführungsform überein, so dass zur Vermeidung von Wiederholungen auf die vorstehende Beschreibung verwiesen wird. Eine Struktur, die aus der Beschreibung der Figuren 1 bis 3 wiederholt wird, weist dasselbe Bezugszeichen auf. Abwandlungen einer gegenüber der in den Figuren 1 bis 3 gezeigten Struktur weisen dasselbe Bezugszeichen mit einem zusätzlichen Buchstaben auf.

Die **Figuren 4 bis 8** zeigen verschiedene Ausführungsformen eines Antiresonanzelement-Vorformlings, bei welchen der erste Kreisradius R_Außen des ARE-Außenelements größer ist als der zweite Kreisradius R_Innen des ARE-Innenelements.

Die **Figur 4** zeigt eine Ausführungsform eines Antiresonanzelement-Vorformlings 300a, bei welchem der erste Kreisradius R_Außen 320a des ARE-Außenelements 310a größer ist als der zweite Kreisradius R_Innen 350a des ARE-Innenelements 340a. Dabei ist
- der erste Kreisradius R_Außen 320a größer 2 mm und kleiner 10 mm,
- der zweite Kreisradius R_Innen 350a größer 1 mm und kleiner 6 mm,
- der erste Mittelpunktswinkel α_Außen größer 295° und kleiner 350°; und
- der zweite Mittelpunktswinkel α_Innen größer als 210° und kleiner 260°.

Ein derart ausgestalteter Antiresonanzelement-Vorformling 300a kann wenigstens eines der folgenden Merkmale aufweisen:
- die zweite Längsachse 341a liegt oberhalb der ersten Sehne,
- die erste Längsachse 311a verläuft außerhalb des ARE-Innenelements 340a,
- der Winkel zwischen der ARE-Außenwandung 315 und der Wandung 345 ist stumpf, insbesondere innerhalb [60°; 130°], insbesondere innerhalb [70°; 120°], und
- das Verhältnis der ersten Segmenthöhe zur zweiten Segmenthöhe ist zwischen 3 und 6.

Die **Figur 5** zeigt eine Ausführungsform eines Antiresonanzelement-Vorformlings 300b, bei welchem der erste Kreisradius R_Außen 320b des ARE-Außenelements 310b größer ist als der zweite Kreisradius R_Innen 350b des ARE-Innenelements 340b. Dabei ist
- der erste Kreisradius R_Außen größer 1 mm und kleiner 11 mm,
- der zweite Kreisradius R_Innen größer 5 mm und kleiner 9 mm,
- der erste Mittelpunktswinkel α_Außen größer 315°und kleiner 350°; und
- der zweite Mittelpunktswinkel α_Innen größer 280° und kleiner 315°.

Ein derart ausgestalteter Antiresonanzelement-Vorformling 300b kann wenigstens eines der folgenden Merkmale aufweisen:
- Die zweite Längsachse 341b liegt oberhalb der ersten Sehne,
- die erste Längsachse 311b verläuft innerhalb des ARE-Innenelements 340b,
- der Winkel zwischen der ARE-Außenwandung 315 und der Wandung 345 ist innerhalb [5°; 40°], insbesondere innerhalb [10°; 30°], und
- das Verhältnis der ersten Segmenthöhe zur zweiten Segmenthöhe ist zwischen 1 und 3.

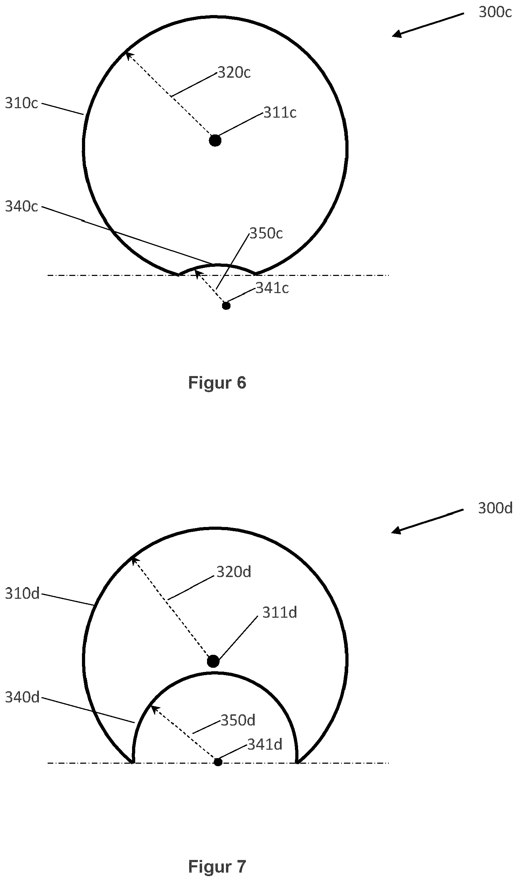

Die **Figur 6** zeigt eine Ausführungsform eines Antiresonanzelement-Vorformlings 300c, bei welchem der erste Kreisradius R_Außen 320c des ARE-Außenelements 310c größer ist als der zweite Kreisradius R_Innen 350c des ARE-Innenelements 340c. Einige der geometrischen Werte sind dabei analog zu jenen aus Figur 5:
- Der erste Kreisradius R_Außen ist größer 2 mm und kleiner 10 mm,
- der zweite Kreisradius R_Innen ist größer 5 mm und kleiner 9 mm, und
- der erste Mittelpunktswinkel α_Außen ist größer 315° und kleiner 350°.

Allerdings liegt hier nur ein kleiner Teil des ARE-Innenelements 340c innerhalb des ARE-Außenelements 310c, so dass
- der zweite Mittelpunktswinkel α_Innen größer 49° und kleiner 65° ist.

Ein derart ausgestalteter Antiresonanzelement-Vorformling 300c kann wenigstens eines der folgenden Merkmale aufweisen:
- Die zweite Längsachse 341c liegt unterhalb der ersten Sehne,
- die erste Längsachse 311c verläuft außerhalb des ARE-Innenelements 340c,
- der Winkel zwischen der ARE-Außenwandung 315 und der Wandung 345 ist innerhalb [120°; 170°], insbesondere innerhalb [130°; 150°], und
- das Verhältnis der ersten Segmenthöhe zur zweiten Segmenthöhe ist zwischen 20 und 30.

Die **Figur 7** zeigt eine Ausführungsform eines Antiresonanzelement-Vorformlings 300d, bei welchem der erste Kreisradius R_Außen 320d des ARE-Außenelements 310d größer ist als der zweite Kreisradius R_Innen 350d des ARE-Innenelements 340d. Dabei ist
- der erste Kreisradius R_Außen größer 2 mm und kleiner 10 mm,
- der zweite Kreisradius R_Innen größer 7 mm und kleiner 12 mm,
- der erste Mittelpunktswinkel α_Außen größer 270° und kleiner 310°, und
- der zweite Mittelpunktswinkel α_Innen größer 200° und kleiner 250°.

Ein derart ausgestalteter Antiresonanzelement-Vorformling 300d kann wenigstens eines der folgenden Merkmale aufweisen:
- die zweite Längsachse 341d liegt oberhalb der ersten Sehne,
- die erste Längsachse 311d verläuft außerhalb des ARE-Innenelements 340d,
- der Winkel zwischen der ARE-Außenwandung 315 und der Wandung 345 ist innerhalb [35°; 100°], insbesondere innerhalb [45°; 90°], und
- das Verhältnis der ersten Segmenthöhe zur zweiten Segmenthöhe ist zwischen 1 und 3.

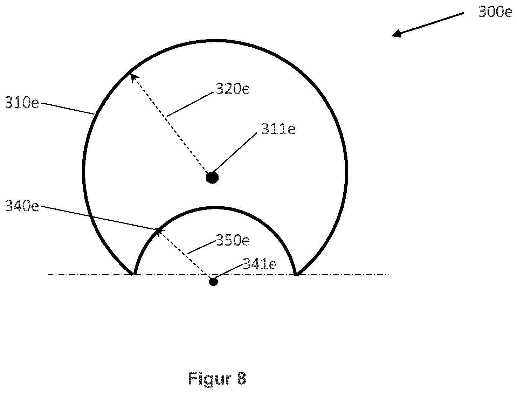

Die **Figur 8** zeigt eine Ausführungsform eines Antiresonanzelement-Vorformlings 300e, bei welchem der erste Kreisradius R_Außen 320e des ARE-Außenelements 310e größer ist als der zweite Kreisradius R_lnnen 350e des ARE-Innenelements 340e. Einige der geometrischen Werte sind dabei analog zu jenen aus Figur 7:
- Der erste Kreisradius R_Außen ist kleiner 10 mm und größer 2 mm,
- der zweite Kreisradius R_lnnen ist kleiner 12 mm und größer 7 mm, und
- der erste Mittelpunktswinkel α_Außen ist kleiner 310° und größer 270°.

Allerdings liegt hier nur ein kleiner Teil des ARE-Innenelements 340e innerhalb des ARE-Außenelements 310e, so dass
- der zweite Mittelpunktswinkel α_Innen größer 120° und kleiner 150° ist.

Ein derart ausgestalteter Antiresonanzelement-Vorformling 300e kann wenigstens eines der folgenden Merkmale aufweisen:
- die zweite Längsachse 341e liegt unterhalb der ersten Sehne,
- die erste Längsachse 311e verläuft außerhalb des ARE-Innenelements 340e,
- der Winkel zwischen der ARE-Außenwandung 315 und der Wandung 345 ist innerhalb [35°; 100°], insbesondere innerhalb [45°; 90°], und
- das Verhältnis der ersten Segmenthöhe zur zweiten Segmenthöhe ist zwischen 1 und 6.

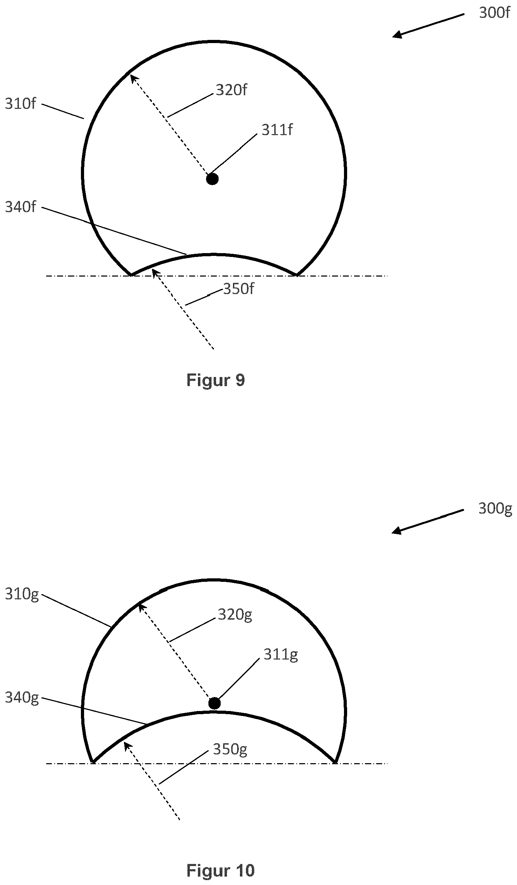

Die **Figuren 9 bis 13** zeigen verschiedene Ausführungsformen eines Antiresonanzelement-Vorformlings, bei welchen der erste Kreisradius R_Außen des ARE-Außenelements kleiner ist als der zweite Kreisradius R_Innen des ARE-Innenelements.

Die **Figur 9** zeigt eine Ausführungsform eines Antiresonanzelement-Vorformlings 300f, bei welchem der erste Kreisradius R_Außen 320f des ARE-Außenelements 310f kleiner ist als der zweite Kreisradius R_Innen 350f des ARE-Innenelements 340f. Dabei ist
- der erste Kreisradius R_Außen größer 2 mm und kleiner 10 mm,
- der zweite Kreisradius R_Innen größer 1 mm und kleiner 9 mm,
- der erste Mittelpunktswinkel α_Außen größer 270° und kleiner 330°, und
- der zweite Mittelpunktswinkel α_Innen größer 30° und kleiner 70°.

Ein derart ausgestalteter Antiresonanzelement-Vorformling 300f kann wenigstens eines der folgenden Merkmale aufweisen:
- die zweite Längsachse 341 liegt unterhalb der ersten Sehne,
- die erste Längsachse 311f verläuft außerhalb des ARE-Innenelements 340f,
- der Winkel zwischen der ARE-Außenwandung 315 und der Wandung 345 ist innerhalb [35°; 100°], insbesondere innerhalb [45°; 90°], und
- das Verhältnis der ersten Segmenthöhe zur zweiten Segmenthöhe ist zwischen 13 und 19.

Aufgrund der Größe des zweiten Kreisradius und der sich daraus ergebenden Position in der Zeichnung ist die zweite Längsachse 341 nicht in die Figur 9 eingetragen.

Die **Figur 10** zeigt eine Ausführungsform eines Antiresonanzelement-Vorformlings 300g, bei welchem der erste Kreisradius R_Außen 320g des ARE-Außenelements 310g kleiner ist als der zweite Kreisradius R_lnnen 350g des ARE-Innenelements 340g. Dabei ist
- der erste Kreisradius R_Außen größer 2 mm und kleiner 10 mm,
- der zweite Kreisradius R_Innen größer 1 mm und kleiner 9 mm,
- der erste Mittelpunktswinkel α_Außen größer 210° und kleiner 250°, und
- der zweite Mittelpunktswinkel α_Innen größer 90° und kleiner 115°.

Ein derart ausgestalteter Antiresonanzelement-Vorformling 300g kann wenigstens eines der folgenden Merkmale aufweisen:
- die zweite Längsachse 341 liegt unterhalb der ersten Sehne,
- die erste Längsachse 311g verläuft außerhalb des ARE-Innenelements 340g,
- der Winkel zwischen der ARE-Außenwandung 315 und der Wandung 345 ist innerhalb [30°; 90°], insbesondere innerhalb [45°; 85°], und
- das Verhältnis der ersten Segmenthöhe zur zweiten Segmenthöhe ist zwischen 1 und 6.

Aufgrund der Größe des zweiten Kreisradius und der sich daraus ergebenden Position in der Zeichnung ist die zweite Längsachse 341 nicht in die Figur 10 eingetragen.

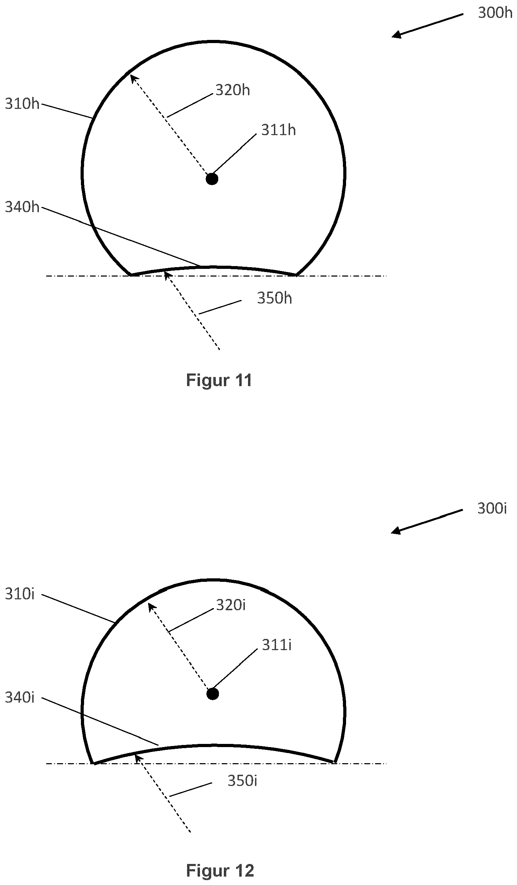

Die **Figur 11** zeigt eine Ausführungsform eines Antiresonanzelement-Vorformlings 300h, bei welchem der erste Kreisradius R_Außen 320h des ARE-Außenelements 310h kleiner ist als der zweite Kreisradius R_Innen 350h des ARE-Innenelements 340h. Dabei ist
- der erste Kreisradius R_Außen größer 2 mm und kleiner 10 mm,
- der zweite Kreisradius R_lnnen größer 20 mm und kleiner 30 mm,
- der erste Mittelpunktswinkel α_Außen größer 270° und kleiner 330°, und
- der zweite Mittelpunktswinkel α_Innen größer 15° und kleiner 45°.

Ein derart ausgestalteter Antiresonanzelement-Vorformling 300h kann wenigstens eines der folgenden Merkmale aufweisen:
- die zweite Längsachse 341 liegt unterhalb der ersten Sehne,
- die erste Längsachse 311h verläuft außerhalb des ARE-Innenelements 340h,
- der Winkel zwischen der ARE-Außenwandung 315 und der Wandung 345 ist innerhalb [70°; 110°], insbesondere innerhalb [80°; 100°], und
- das Verhältnis der ersten Segmenthöhe zur zweiten Segmenthöhe ist zwischen 17 und 35.

Aufgrund der Größe des zweiten Kreisradius und der sich daraus ergebenden Position in der Zeichnung ist die zweite Längsachse 341 nicht in die Figur 11 eingetragen.

Die **Figur 12** zeigt eine Ausführungsform eines Antiresonanzelement-Vorformlings 300i, bei welchem der erste Kreisradius R_Außen 320i des ARE-Außenelements 310i kleiner ist als der zweite Kreisradius R_Innen 350i des ARE-Innenelements 340i. Dabei ist
- der erste Kreisradius R_Außen größer 2 mm und kleiner 10 mm,
- der zweite Kreisradius R_lnnen größer 20 mm und kleiner 30 mm,
- der erste Mittelpunktswinkel α_Außen größer 210° und kleiner 250°, und
- der zweite Mittelpunktswinkel α_Innen größer 48° und kleiner 70°.

Ein derart ausgestalteter Antiresonanzelement-Vorformling 300i kann wenigstens eines der folgenden Merkmale aufweisen:
- die zweite Längsachse 341 liegt unterhalb der ersten Sehne,
- die erste Längsachse 311i verläuft außerhalb des ARE-Innenelements 340i,
- der Winkel zwischen der ARE-Außenwandung 315 und der Wandung 345 ist innerhalb [70°; 110°], insbesondere innerhalb [80°; 100°], und
- das Verhältnis der ersten Segmenthöhe zur zweiten Segmenthöhe ist zwischen 3 und 10.

Aufgrund der Größe des zweiten Kreisradius und der sich daraus ergebenden Position in der Zeichnung ist die zweite Längsachse 341 nicht in die Figur 12 eingetragen.

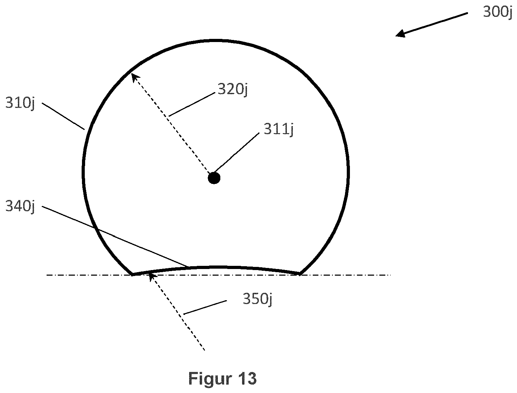

Die **Figur 13** zeigt eine Ausführungsform eines Antiresonanzelement-Vorformlings 300j, bei welchem der erste Kreisradius R_Außen 320j des ARE-Außenelements 310j kleiner ist als der zweite Kreisradius R_lnnen 350j des ARE-Innenelements 340j. Dabei ist
- der erste Kreisradius R_Außen größer 2 mm und kleiner 10 mm,
- der zweite Kreisradius R_lnnen größer 20 mm und kleiner 30 mm,
- der erste Mittelpunktswinkel α_Außen größer 270° und kleiner 330°, und
- der zweite Mittelpunktswinkel α_Innen größer 15° und kleiner 35°.

Ein derart ausgestalteter Antiresonanzelement-Vorformling 300j kann wenigstens eines der folgenden Merkmale aufweisen:
- die zweite Längsachse 341 liegt unterhalb der ersten Sehne,
- die erste Längsachse 311j verläuft außerhalb des ARE-Innenelements 340j,
- der Winkel zwischen der ARE-Außenwandung 315 und der Wandung 345 ist innerhalb [50°; 130°], insbesondere innerhalb [70°; 110°], und
- das Verhältnis der ersten Segmenthöhe zur zweiten Segmenthöhe ist zwischen 28 und 44.

Aufgrund der Größe des zweiten Kreisradius und der sich daraus ergebenden Position in der Zeichnung ist die zweite Längsachse 341 nicht in die Figur 13 eingetragen.

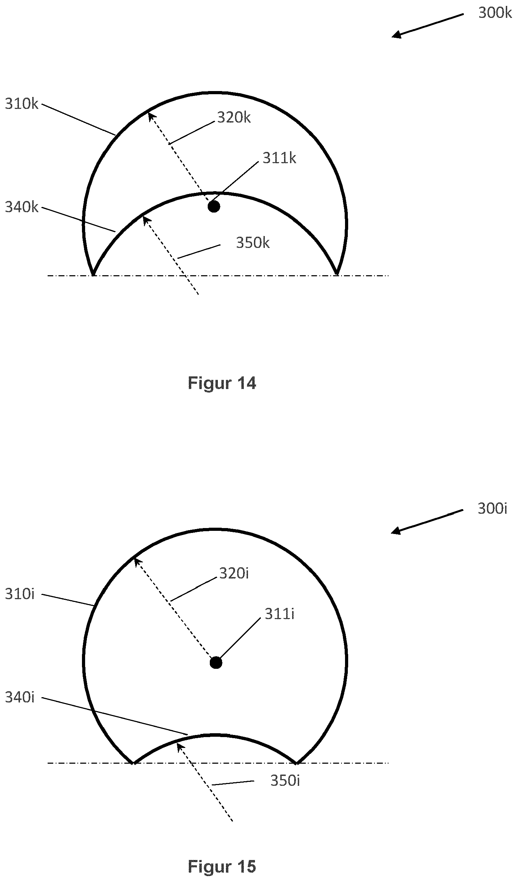

Die **Figuren 14 und 15** zeigen verschiedene Ausführungsformen eines Antiresonanzelement-Vorformlings, bei welchen der erste Kreisradius R_Außen des ARE-Außenelements und der zweite Kreisradius R_lnnen des ARE-Innenelements gleich groß sind.

Die **Figur 14** zeigt eine Ausführungsform eines Antiresonanzelement-Vorformlings 300k, bei welchem der erste Kreisradius R_Außen 320k des ARE-Außenelements 310k und der zweite Kreisradius R_lnnen 350k des ARE-Innenelements 340k gleich groß sind. Dabei ist
- der erste Kreisradius R_Außen größer 2 mm und kleiner 10 mm,
- der zweite Kreisradius R_Innen größer 10 mm und kleiner 15 mm,
- der erste Mittelpunktswinkel α_Außen größer 200° und kleiner 260°, und
- der zweite Mittelpunktswinkel α_Innen größer 100° und kleiner 160°.

Ein derart ausgestalteter Antiresonanzelement-Vorformling 300k kann wenigstens eines der folgenden Merkmale aufweisen:
- die zweite Längsachse 341 liegt unterhalb der ersten Sehne,
- die erste Längsachse 311k verläuft innerhalb des ARE-Innenelements 340k,
- der Winkel zwischen der ARE-Außenwandung 315 und der Wandung 345 ist innerhalb [10°; 30°], insbesondere innerhalb [70°; 120°], und
- das Verhältnis der ersten Segmenthöhe zur zweiten Segmenthöhe ist zwischen 1 und 6.

Aufgrund der Größe des zweiten Kreisradius und der sich daraus ergebenden Position in der Zeichnung ist die zweite Längsachse 341 nicht in die Figur 14 eingetragen.

Die **Figur 15** zeigt eine Ausführungsform eines Antiresonanzelement-Vorformlings 300i, bei welchem der erste Kreisradius R_Außen 320i des ARE-Außenelements 310i und der zweite Kreisradius R_lnnen 350i des ARE-Innenelements 340i gleich groß sind. Dabei ist
- der erste Kreisradius R_Außen größer 2 mm und kleiner 10 mm,
- der zweite Kreisradius R_Innen größer 10 mm und kleiner 15 mm,
- der erste Mittelpunktswinkel α_Außen größer 270° und kleiner 330°, und
- der zweite Mittelpunktswinkel α_Innen größer 30° und kleiner 90°.

Ein derart ausgestalteter Antiresonanzelement-Vorformling 300i kann wenigstens eines der folgenden Merkmale aufweisen:
- die zweite Längsachse 341 liegt unterhalb der ersten Sehne,
- die erste Längsachse 311i verläuft außerhalb des ARE-Innenelements 340i,
- der Winkel zwischen der ARE-Außenwandung 315 und der Wandung 345 ist innerhalb [60°; 110°], insbesondere innerhalb [70°; 95°], und
- das Verhältnis der ersten Segmenthöhe zur zweiten Segmenthöhe ist zwischen 9 und 16.

Aufgrund der Größe des zweiten Kreisradius und der sich daraus ergebenden Position in der Zeichnung ist die zweite Längsachse 341 nicht in die Figur 15 eingetragen.

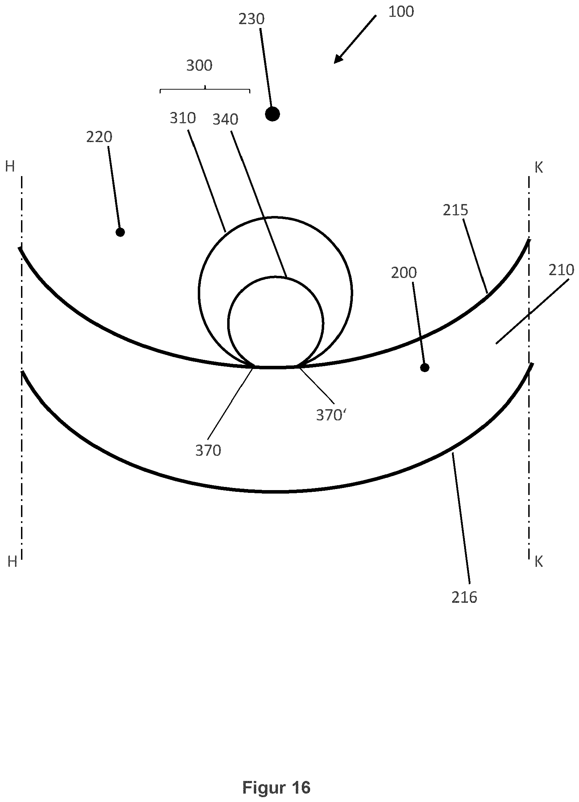

Die **Figur 16** zeigt einen Ausschnitt einer Vorform 100, aus welcher eine antiresonante Hohlkernfaser 2400 herstellbar ist. Die Vorform 100umfasst ein Hüllrohr 200, welches eine Hüllrohr-Innenbohrung 220 und eine Hüllrohr-Längsachse 230 aufweist, entlang der sich eine von einer Innenseite 215 und einer Außenseite 216 begrenzte Hüllrohr-Wandung 210 erstreckt. In dem Hüllrohr angeordnet ist der Antiresonanzelement-Vorformling 300. In der fertigen Vorform sind mehrere Antiresonanzelement-Vorformlinge 300 zueinander beabstandet und kontaktfrei an Soll-Positionen an der Innenseite 215 der Hüllrohr-Wandung 210 angeordnet. Es ist dabei vorgesehen, dass die Vorform 100 mindestens einen Antiresonanzelement-Vorformling 300 gemäß wenigstens einer der hier aufgeführten Ausführungsformen des Antiresonanzelement-Vorformlings 300a-n aufweist.

Die Figur 16 zeigt einen Querschnitt der Vorform 100 und verdeutlicht die Anordnung eines Antiresonanzelement-Vorformlings 300 auf der Hüllrohr-Innenseite 215. Der Antiresonanzelement-Vorformling 300 ist rohrartig aufgebaut und ragt folglich in die Zeichenebene hinein. Das kreisbogenartig ausgestaltete ARE-Außenelement 310 und das kreisbogenartig ausgestaltete ARE-Innenelement 340 sind entlang zweier im Wesentlichen parallel zu der ersten Längsachse 311 angeordneter Verbindungslinien 370, 370' miteinander verbunden. Diese beiden Verbindungslinien 370, 370' sind ebenfalls mit der Hüllrohr-Wandung 210 verbunden.

Bei aus dem Stand der Technik bekannten Vorformen sind sowohl das ARE-Außenelement als auch das ARE-Innenelement rohrartig ausgestaltet. Dieses Design hat den Nachteil, dass die ineinandergesteckten gebauten ARE-Außenelemente und ARE-Innenelemente miteinander und mit dem Hüllrohr jeweils entlang nur einer Verbindungslinie verbunden sind. Insofern besteht die Gefahr, dass die Antiresonanzelement-Vorformlinge beim Elongieren und/oder Kollabieren eine rotatorische Bewegung durchführen und so die gleichverteilte Anordnung der Antiresonanzelement-Vorformlinge an der Hüllrohr-Innenwand gestört wird, was sich in einer erhöhten Dämpfung widerspiegelt. Gegenüber jenen Vorformen zeichnet sich die erfindungsgemäße Vorform dadurch aus, dass der Antiresonanzelement-Vorformling 300 entlang der zwei Verbindungslinien 370, 370' mit der Hüllrohr-Wandung 210 verbunden ist. Dies verhindert eine rotatorische Bewegung des Antiresonanzelement-Vorformlings 300 in dem Hüllrohr beim Elongieren und/oder Kollabieren.

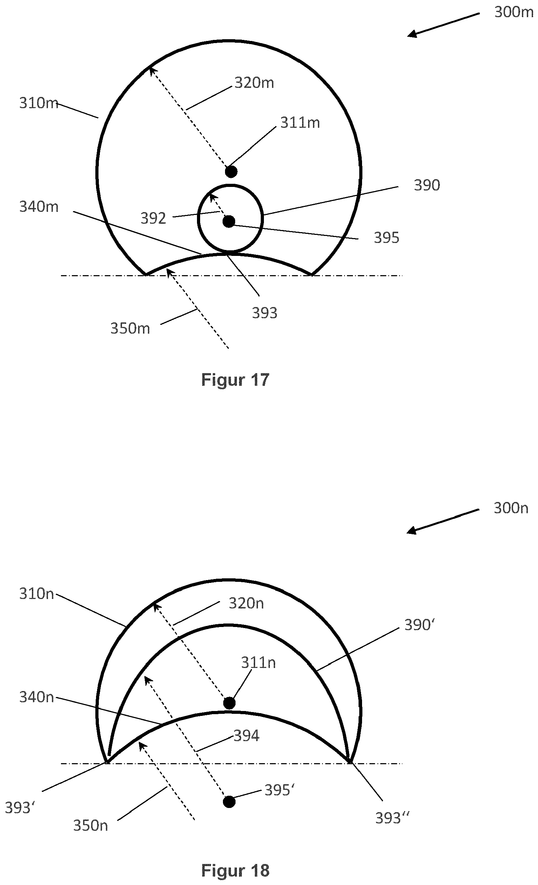

Die **Figur 17** zeigt einen Querschnitt durch eine Ausführungsform eines Antiresonanzelement-Vorformlings 300m, welcher dadurch gekennzeichnet ist, dass ein ARE-Bogenelement 390 in dem Innenraum 317 des ARE-Außenelements 310m und an dem ARE-Innenelement 340m angeordnet ist. Das ARE-Bogenelement 390 dient als nicht-resonantes Element zur Dämpfung von Moden mit höherer Ordnung. In der Ausführungsform ist das ARE-Bogenelement 390 kreisförmig ausgestaltet und weist einen Radius R_Kreis 392 sowie eine dritte Längsachse 395 auf. Weiterhin ist das ARE-Bogenelement 390 mit dem ARE-Innenelement 340m entlang einer Berührungslinie 393 verbunden, insbesondere stoffschlüssig verbunden. In einer Ausführungsform ist die Berührungslinie 393 derart auf dem kreisbogenartigen ARE-Innenelement 340m angeordnet, dass ein Abstand zwischen Berührungslinie 393 und erster Sehne maximal ist.

In einer Ausgestaltung dieser Ausführungsform des Antiresonanzelement-Vorformlings 300m kann der erste Kreisradius R_Außen 320m des ARE-Außenelements 310m kleiner sein als der zweite Kreisradius R_lnnen 350m des ARE-Innenelements 340f. Dabei ist
- der erste Kreisradius R_Außen größer 10 mm und kleiner 15 mm,
- der zweite Kreisradius R_Innen größer 12 mm und kleiner 18 mm,
- der erste Mittelpunktswinkel α_Außen größer 270° und kleiner 330°, und
- der zweite Mittelpunktswinkel α_Innen größer 30° und kleiner 70°.

Dabei kann bei dem ARE-Bogenelement 390
- ein Radius R_Kreis 392 größer 10 mm und kleiner 15 mm
sein.

Ein derart ausgestalteter Antiresonanzelement-Vorformling 300m kann wenigstens eines der folgenden Merkmale aufweisen:
- die zweite Längsachse 341 liegt unterhalb der ersten Sehne,
- die erste Längsachse 311m verläuft außerhalb des ARE-Innenelements 340m,
- die dritte Längsachse 395 verläuft außerhalb des ARE-Innenelements 340m,
- der Winkel zwischen der ARE-Außenwandung 315 und der Wandung 345 ist innerhalb [35°; 100°], insbesondere innerhalb [45°; 90°], und
- das Verhältnis der ersten Segmenthöhe zur zweiten Segmenthöhe ist zwischen 13 und 19.

Aufgrund der Größe des zweiten Kreisradius und der sich daraus ergebenden Position in der Zeichnung ist die zweite Längsachse 341 nicht in die Figur 17 eingetragen.

Die **Figur 18** zeigt einen Querschnitt durch eine Ausführungsform eines Antiresonanzelement-Vorformlings 300n, welcher dadurch gekennzeichnet ist, dass das ARE-Bogenelement 390' kreisbogenförmig ausgestaltet ist und einen fünften Kreisradius R_Bogen 394 und einen fünften Mittelpunktswinkel α_Bogen aufweist. Weiterhin kann das ARE-Bogenelement 390' eine dritte Längsachse 395' aufweisen. Das ARE-Bogenelement 390' ist mit dem ARE-Außenelement 310n und/oder dem ARE-Innenelement 340n entlang zweier Berührungslinien verbunden. Insbesondere kann jene eine der zwei Berührungslinien 393',393" stoffschlüssig mit je einer der beiden Verbindungslinien 370,370' verbunden sein.

In einer Ausgestaltung dieser Ausführungsform des Antiresonanzelement-Vorformlings 300n kann der erste Kreisradius R_Außen 320n des ARE-Außenelements 310n kleiner sein als der zweite Kreisradius R_Innen 350n des ARE-Innenelements 340n. Dabei ist
- der erste Kreisradius R_Außen größer 10 mm und kleiner 15 mm,
- der zweite Kreisradius R_Innen größer 12 mm und kleiner 18 mm,
- der erste Mittelpunktswinkel α_Außen größer 210° und kleiner 250°, und
- der zweite Mittelpunktswinkel α_Innen größer 90° und kleiner 115°.

Dabei kann bei dem ARE-Bogenelement 390'
- ein fünfter Kreisradius R_Bogen 394 größer 2,3 mm und kleiner 4,5 mm, und
- der fünfte Mittelpunktswinkel α_Bogen größer 160° und kleiner 230°.
sein.

Ein derart ausgestalteter Antiresonanzelement-Vorformling 300n kann wenigstens eines der folgenden Merkmale aufweisen:
- die zweite Längsachse 341 liegt unterhalb der ersten Sehne,
- die erste Längsachse 311n verläuft außerhalb des ARE-Innenelements 340n,
- die dritte Längsachse 395 verläuft unterhalb der ersten Sehne,
- der Winkel zwischen der ARE-Außenwandung 315 und der Wandung 345 ist innerhalb [30°; 90°], insbesondere innerhalb [45°; 85°], und
- das Verhältnis der ersten Segmenthöhe zur zweiten Segmenthöhe ist zwischen 1 und 6.

Aufgrund der Größe des zweiten Kreisradius und der sich daraus ergebenden Position in der Zeichnung ist die zweite Längsachse 341 nicht in die Figur 18 eingetragen.

In einer Ausführungsform kann das ARE-Bogenelement 390,390' einen amorphen Festkörper, insbesondere ein Glas, insbesondere Quarzglas umfassen, der insbesondere aus einem amorphen Festkörper, insbesondere einem Glas, insbesondere Quarzglas besteht, insbesondere, können das ARE-Bogenelement 390,390' und das ARE-Außenelement 310m,n materialeinheitlich sein.

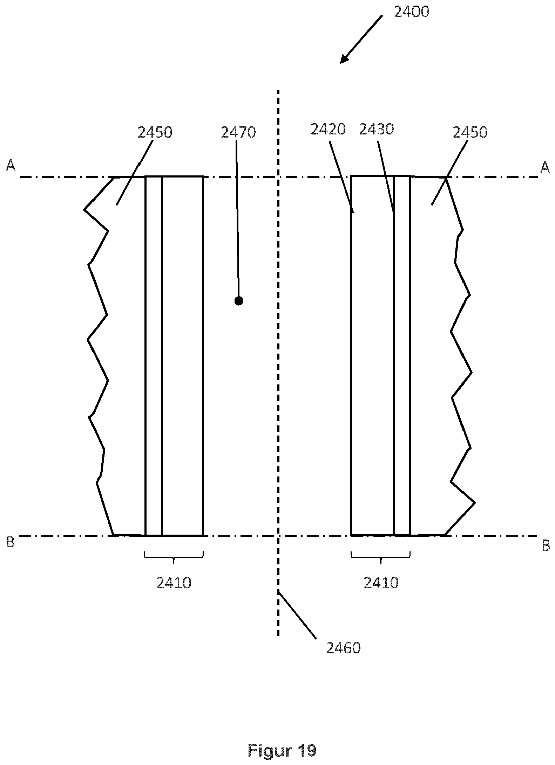

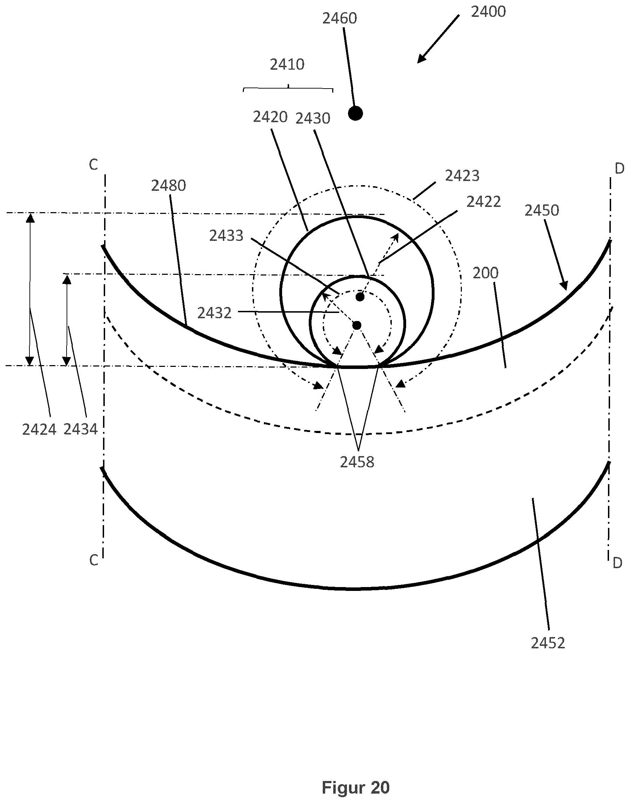

Die **Figur 19** zeigt einen Längsschnitt und die **Figur 20** zeigt einen Querschnitt durch eine antiresonante Hohlkernfaser 2400. Dargestellt ist ein Abschnitt der antiresonanten Hohlkernfaser 2400 zwischen zwei Schnittlinien A-A und B-B. Die antiresonante Hohlkernfaser 2400 weist einen Mantel 2450 auf. Der Mantel 2450 ist in der dargestellten Ausführungsform der antiresonanten Hohlkernfaser 2400 aus einem elongierten Hüllrohr 200 und einem elongierten Mantelmaterial 2452 aufgebaut. Da in der dargestellten Ausführungsform das Mantelmaterial 2452 und das Hüllrohrmaterial 200 materialidentisch ausgestaltet sind, ist der Übergang zwischen den beiden Materialien nicht markiert. Die antiresonante Hohlkernfaser 2400 weist einen hohlen Kern 2470 auf. Durch den hohlen Kern 2470 kann eine elektromagnetische Welle propagieren. Innerhalb des hohlen Kerns 2470 sind in der dargestellten Ausführungsform in Figur 19 zwei Antiresonanzelemente 2410 angeordnet. Jene sind stoffschlüssig mit einer Mantel-Innenseite 2480 des Mantels 2450 verbunden. Die Antiresonanzelemente 2410 weisen eine ARE-Außeneinheit 2420 und eine ARE-Inneneinheit 2430 auf. Die ARE-Inneneinheit 2430 ist innerhalb der ARE-Außeneinheit 2420 angeordnet. Die Antiresonanzelemente 2410 sind parallel zu einer Längsachse 2460 der antiresonanten Hohlkernfaser 2400 angeordnet.

Die Figur 20 verdeutlicht die Anordnung eines Antiresonanzelementes 2410 auf einer den Hohlkern 2470 begrenzenden Innenfläche 2480. Das Antiresonanzelement 2410 ist rohrartig aufgebaut. Die antiresonante Hohlkernfaser 2400 umfasst einen Mantel 2450, auf dessen Mantel-Innenseite 2480 ein erfindungsgemäßes Antiresonanzelement 2410 angeordnet ist. Dabei sind die ARE-Außeneinheit 2420 und die ARE-Inneneinheit 2430 kreisbogenartig ausgestaltet. Die ARE-Außeneinheit 2420 und die ARE-Inneneinheit 2430 sind entlang zweier Nahtlinien miteinander verbunden. Diese beiden Nahtlinien sind ebenfalls mit der Mantel-Innenseite 2480 verbunden. Dabei ragt die kreisbogenartig ausgestaltete ARE-Inneneinheit 2430 in einen durch eine ARE-Außenwand zumindest partiell begrenzten Innenraum hinein.

Zur Beschreibung der geometrischen Größen der antiresonanten Hohlkernfaser 2400 weist diese auf:
- die ARE-Außeneinheit 2420 einen dritten Kreisradius FB_Außen 2422,
- die ARE-Inneneinheit 2430 einen vierten Kreisradius FB_Innen 2432,
- die ARE-Außeneinheit 2420 einen dritten Mittelpunktswinkel β_Außen 2423, und
- die ARE-Inneneinheit 2430 einen vierten Mittelpunktswinkel β_Innen 2433.

Die dargestellte ARE-Inneneinheit 2430 und/oder ARE-Außeneinheit 2420 können teilweise eine Wandstärke im Bereich von 0,2-2 µm aufweisen. Das dargestellte Mantelrohr 2450 kann einen Außendurchmesser im Bereich von 190-270 µm bei einer Länge von mindestens 1000 m aufweisen. Der Innendurchmesser des Hohlkerns 2470 beträgt vorzugsweise 50 bis 100 µm.

Durch einen Aufbau gemäß einer der Ausführungsformen kann die antiresonante Hohlkernfaser 2400 wenigstens eines der folgenden Merkmale aufweisen:
- eine fundamentale Dämpfung von weniger als 0,15 dB/km bei einer transportierten Wellenlänge von zwischen 1,0 µm und 2,5 µm, und
- eine fundamentale Dämpfung von weniger als 1 dB/km bei einer transportierten Wellenlänge von bis zu 0,8 µm.

In einer Ausführungsform kann die antiresonante Hohlkernfaser 2400 drei, vier, fünf, sechs, sieben oder acht Antiresonanzelemente 2410 aufweisen. Insbesondere kann die antiresonante Hohlkernfaser 2400 eine ungerade Anzahl an Antiresonanzelementen 2410 aufweisen. In einer Ausführungsform können die Antiresonanzelemente 2410 einen Kern mit einem Kernradius formen, wobei der Kernradius kleiner als 50 µm, insbesondere kleiner als 40 µm, insbesondere kleiner als 30 µm, insbesondere kleiner als 25 µm, insbesondere kleiner als 20 µm, insbesondere kleiner als 15 µm, insbesondere kleiner als 13 µm ist.

Die ARE-Außeneinheit 2420 weist eine dritte Segmenthöhe 2424 auf. Diese dritte Segmenthöhe 2424 beschreibt die Länge einer Gerade, die senkrecht auf der Sehne steht und bis zur maximalen Höhe der ARE-Außeneinheit 2420 läuft.

Das ARE-Inneneinheit 2430 weist eine vierte Segmenthöhe 2434 auf. Diese vierte Segmenthöhe 2434 beschreibt die Länge einer Gerade, die senkrecht auf der Sehne steht und bis zur maximalen Höhe der ARE-Inneneinheit 2430 läuft.

Die dargestellte antiresonante Hohlkernfaser 2400 ist hergestellt aus einer Vorform 100. Das Herstellen der antiresonanten Hohlkernfaser 2400 aus der Vorform 100 erfolgt dabei insbesondere durch ein einmaliges oder wiederholtes Durchführen von einem oder mehreren der folgenden Heißformprozesse: Elongieren 2300, Kollabieren 2100, Aufkollabieren 2200 von zusätzlichem Mantelmaterial.

Eine Ausführungsform einer antiresonanten Hohlkernfaser 2400 zeichnet sich dadurch aus, dass eine ARE-Bogeneinheit in einem Innenraum der ARE-Außeneinheit angeordnet ist, insbesondere, dass die ARE-Bogeneinheit an der ARE-Inneneinheit angeordnet ist. Insbesondere ist die ARE-Bogeneinheit hergestellt aus einem ARE-Bogenelement durch ein einmaliges oder wiederholtes Durchführen von einem oder mehreren der folgenden Heißformprozesse: Elongieren und/oder Kollabieren.

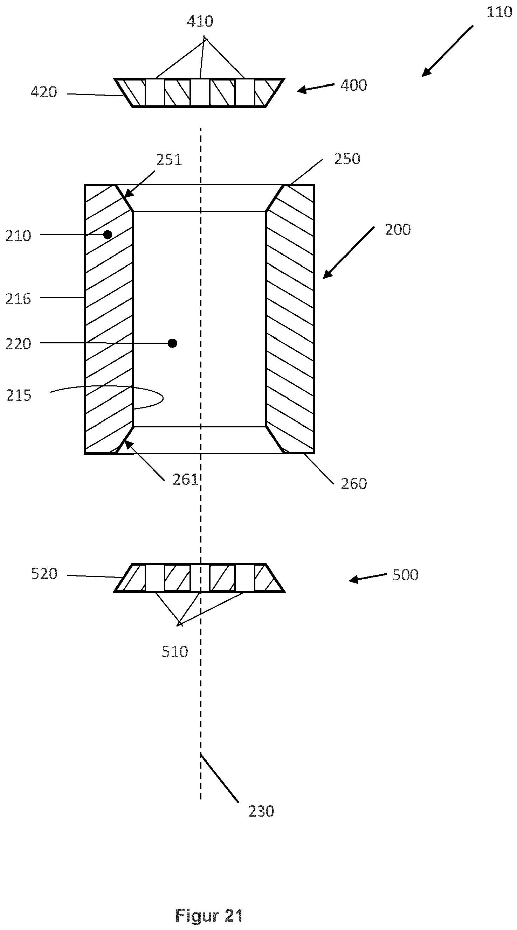

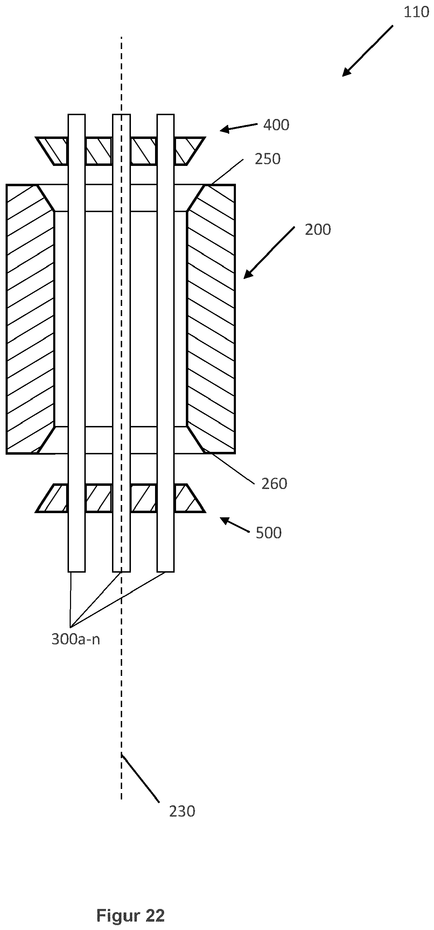

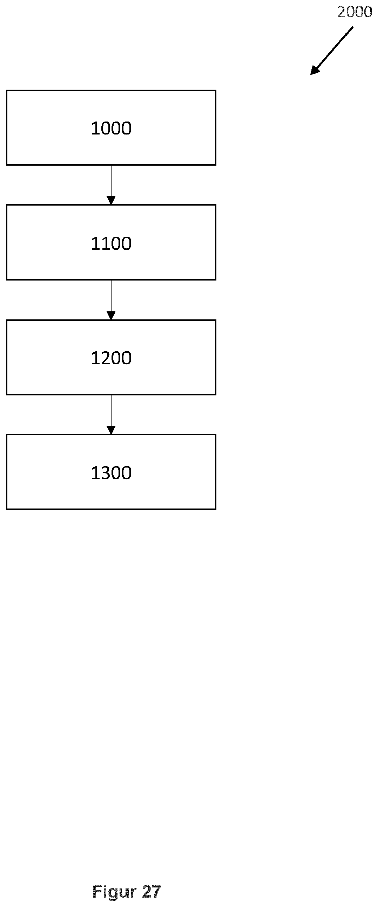

Die **Figuren 21** **und** **22** zeigen die Einzelteile, welche im Rahmen eines Verfahrens genutzt werden können, um eine Vorform 100 herzustellen. Dabei weist das Verfahren die folgenden Schritte auf (siehe auch Figur 27):
a) Bereitstellen 1000 eines Hüllrohrs 200, das eine Hüllrohr-Innenbohrung 220 und eine Hüllrohr-Längsachse 230 aufweist, entlang der sich eine von einer Innenseite 215 und einer Außenseite 216 begrenzte Hüllrohr-Wandung 210 erstreckt,
b) Vorbereiten 1100 einer Anzahl von Antiresonanzelement-Vorformlingen 300a-n, jeweils umfassend ein ARE-Außenelement 310 und ein darin eingesetztes ARE-Innenelement 340,
c) Anordnen 1200 der Antiresonanzelement-Vorformlinge 300a-n an Soll-Positionen in der Hüllrohr-Innenbohrung 220,
d) Bearbeiten 1300 einer Anordnung, umfassend das Hüllrohr 200 und die Antiresonanzelement-Vorformlinge 300a-n durch einen Heißformprozess, ausgewählt aus wenigstens einem von Elongieren und Kollabieren.

Das Verfahren ist dadurch gekennzeichnet, dass
- im Schritt d) "Bearbeiten" 1300 in der Hüllrohr-Innenbohrung 220 ein relativer Innendruck im Bereich zwischen -10 bis -300 mbar, insbesondere -50 bis -250 mbar eingestellt wird,
- in wenigstens einem Antiresonanzelement-Vorformling 300a-n das ARE-Außenelement 310 und das ARE-Innenelement 340 kreisbogenartig ausgestaltet sind, und
- entlang zweier Verbindungslinien 370, 370' miteinander und mit der Hüllrohr-Innenbohrung 220 verbunden sind.

Ein derartiger Antiresonanzelement-Vorformling weist die oben aufgeführten Vorteile auf.

Bei bekannten Verfahren erfolgt ein Fixieren der Antiresonanzelement-Vorformlinge 300a-n an den beiden Stirnflächen des Hüllrohres 200. Dies geschieht über ein punktuelles Verschmelzen mit einem Handbrenner. Dabei entsteht Soot oder Abbrand, der sich auf den Glasoberflächen niederschlägt. Dies betrifft in der Regel besonders die Stirnfläche des Hüllrohres sowie dessen Innenoberfläche und die Oberflächen der Antiresonanzelement-Vorformlinge. Aufgrund der Komplexität der erstellten Geometrie ist eine vollständige Säuberung der Anordnung kaum möglich.

Zur Überwindung dieser Nachteile kann eine Positionierungsschablone 400 genutzt werden, welche mindestens eine Zentrierfläche 420 aufweist, die mit einem ersten Ende 250 des Hüllrohrs 200 derart selbstzentrierend zusammenwirkt, dass die Antiresonanzelement-Vorformlinge 300a-n im Schritt c) "Anordnen" 1200 an Soll-Positionen angeordnet werden.

Die **Figur 21** zeigt Einzelteile einer Ausführungsform einer Anordnung 110 einer erfindungsgemäßen Vorform 100 der antiresonanten Hohlkernfaser 2400. Die Anordnung 110 weist ein Hüllrohr 200 auf. Das Hüllrohr 200 ist rohrartig ausgestaltet. An einer Innenseite 215 des Hüllrohres 200 soll wenigstens ein Antiresonanzelement-Vorformling 300a-n angeordnet werden. Dazu erfolgt ein
- Präparieren einer Positionierungsschablone 400, aufweisend eine Anzahl die Positionierungsschablone 400 durchdringende Durchgangsöffnungen 410, angepasst zu einer Längsführung jeweils eines Antiresonanzelement-Vorformlings 300a-n, wobei die Positionierungsschablone 400 und das Hüllrohr 200 materialeinheitlich sind.

Im Rahmen des Schritts "Anbringen" erfolgt ein Verbinden der Positionierungsschablone 400 an einem ersten Ende 250 des Hüllrohrs 200. Dabei ist vorgesehen, dass die Positionierungsschablone 400 die Anordnung der Antiresonanzelement-Vorformlinge 300a-n an Soll-Positionen sicherstellt.

In **Figur 22** sind Teile der Antiresonanzelement-Vorformlinge 300a-n durch die Durchgangsöffnungen 410 geführt und ragen in die Hüllrohr-Innenbohrung 220 hinein. Die Positionierungsschablone 400 wird im Rahmen des Schritts "Anordnen" in Richtung des Hüllrohres 200 abgesenkt. Nach dem kraft- und/oder formschlüssigen und/oder stoffschlüssigen Anbringen der Positionierungsschablone 400 am Hüllrohr 200 wird die Anordnung 110, umfassend das Hüllrohr 200, die Antiresonanzelement-Vorformlinge 300 und die Positionierungsschablone 400, durch den Heißformprozess, ausgewählt aus wenigstens einem von Elongieren und Kollabieren, zur Vorform 100 weiterverarbeitet.

Die zu verwendete Positionierungsschablone 400 ist so konzipiert, dass die Durchgangsöffnungen 410 für die Antiresonanzelement-Vorformlinge 300 immer im gleichen Winkelabstand zueinanderstehen und somit automatisch eine Symmetrie gegeben ist. Weiterhin ist in der Mitte der Scheibe ein Gasflusselement für den Gasfluss vorgesehen. So ist im späteren Prozess beispielsweise das Spülen oder Reinigen mit Gas sowie das Anlegen von Unterdruck im gesamten Rohraufbau möglich. Durch die Größe der Bohrung kann der Gasdurchfluss durch den Kernbereich und die Antiresonanzelement-Vorformlinge beeinflusst werden.

Zur Überwindung des genannten Nachteils kann zusätzlich zu der Positionierungsschablone 400 auch eine zweite Positionierungsschablone 500, aufweisend eine Anzahl von die zweite Positionierungsschablone 500 durchdringende zweiten Durchgangsöffnungen 510, angepasst zu einer Längsführung jeweils eines Antiresonanzelement-Vorformlings 300a-n, genutzt werden, was Figur 22 verdeutlicht.

Dabei sind folgende Schritte vorgesehen:
- Anbringen der Positionierungsschablone 400 an dem ersten Ende 250 des Hüllrohrs 200,
- Kombinieren der zweiten Positionierungsschablone 500 mit einem zweiten Ende 260 des Hüllrohrs 200, und
- Einführen von wenigstens Teilen der Antiresonanzelement-Vorformlinge 300a-n durch die Durchgangsöffnungen 410 und zweiten Durchgangsöffnungen 510 zum Anordnen der Antiresonanzelement-Vorformlinge in der Hüllrohr-Innenbohrung 220.

Dabei ist vorgesehen, dass
- die Positionierungsschablone 400 mindestens eine Zentrierfläche 420 aufweist, die mit dem ersten Ende 250 des Hüllrohrs 200 derart selbstzentrierend zusammenwirkt, dass die Antiresonanzelement-Vorformlinge 300a-n im Schritt "Anordnen" an Soll-Positionen angeordnet werden, und
- die zweite Positionierungsschablone 500 mindestens eine zweite Zentrierfläche 520 aufweist, die mit dem zweiten Ende 260 des Hüllrohrs 200 derart selbstzentrierend zusammenwirkt, dass die Antiresonanzelement-Vorformlinge 300a-n in dem Schritt "Anordnen" an Soll-Positionen angeordnet werden,
und insbesondere im Schritt d) "Bearbeiten" an Soll-Positionen angeordnet werden.

Dabei weist das Hüllrohr 200 an dem ersten Ende 250 eine Gegenzentrierfläche 251 und an einem zweiten Ende 260 eine zweite Gegenzentrierfläche 261 auf. In der dargestellten Ausführungsform sind die Positionierungsschablone 400 sowie die zweite Positionierungsschablone 500 zumindest partiell kegelstumpfartig ausgeformt. Die Zentrierfläche 420 und die zweite Zentrierfläche 520 sind dabei partiell mantelflächenartig ausgebildet. In Figur 21 ist das Hüllrohr 200 im Bereich des ersten Endes 2450 und des zweiten Endes 260 zumindest partiell kegelstumpfartig ausgeschnitten.

Insbesondere sind die Positionierungsschablone 400 und das Hüllrohr 200 und/oder die zweite Positionierungsschablone 500 und das Hüllrohr 200 materialeinheitlich.

Die Figur 22 zeigt den Schritt "Einschieben" von wenigstens Teilen der Antiresonanzelement-Vorformlinge 300a-n durch die zweiten Durchgangsöffnungen 510 der zweiten Positionierungsschablone 500. Im Anschluss erfolgt der Schritt d) "Bearbeiten" 1300 der Anordnung, umfassend das Hüllrohr 200, die Antiresonanzelement-Vorformlinge 300a-n, die Positionierungsschablone 400 und die zweite Positionierungsschablone 500, durch einen Heißformprozess, ausgewählt aus wenigstens einem von Elongieren und Kollabieren.

Eine Ausführungsform des Verfahrens zeichnet sich dadurch aus, dass die Antiresonanzelement-Vorformlinge 300a-n im Schritt d) "Bearbeiten" flammenfrei an der Hüllrohr-Wandung 210 thermisch fixiert werden. Ein vorhergehendes, punktuelles Anschmelzen der Antiresonanzelement-Vorformlinge 300a-n an dem Hüllrohr 200, insbesondere der Hüllrohr-Wandung 210, insbesondere mit dem Handbrenner, entfällt.

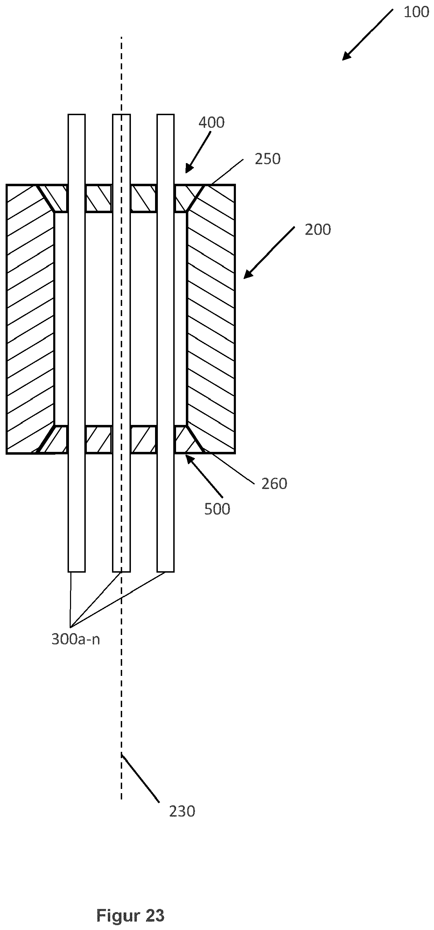

Die **Figur 23** zeigt die Vorform 100 mit den Antiresonanzelement-Vorformlingen 300a-n, welche aus der in Figur 22 dargestellten Anordnung 110 erstellt wurde.

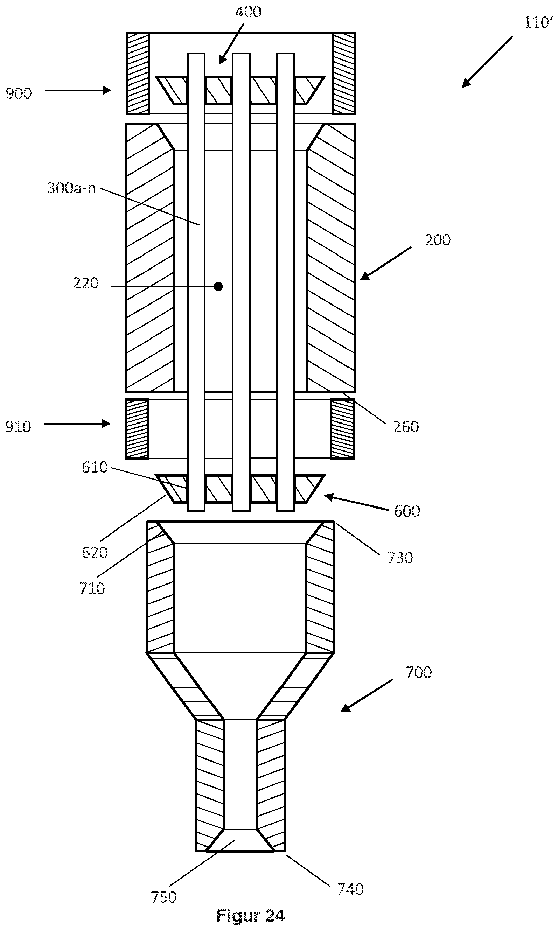

Die **Figur 24** zeigt die Anordnung 110', welche durch Elongieren und/oder Kollabieren im Rahmen des Schritts d) "Bearbeiten" zu einer Vorform 100' umgeformt werden kann. Das dazu notwendige Verfahren umfasst den Schritt:
A/ Anfertigen einer dritten Positionierungsschablone 600, aufweisend eine Anzahl von die dritte Positionierungsschablone 600 durchdringenden dritten Durchgangsöffnungen 610, angepasst zu einer Längsführung jeweils eines Antiresonanzelement-Vorformlings 300a-n, wobei die dritte Positionierungsschablone 600 mindestens eine dritte Zentrierfläche 620 aufweist.

Um die dargestellte Vorform 100' zu erstellen, bedarf es des Schrittes:
B/ Fertigen eines rohrartigen Abschlusselementes 700, wobei das Abschlusselement 700 im Bereich eines ersten Endbereichs 730 eine Wirkfläche 710 ausweist, um mit der dritten Zentrierfläche 620 zusammenzuwirken, insbesondere formschlüssig zusammenzuwirken.

Die dargestellte Anordnung 110' weist ein trichterartiges Abschlusselement 700 auf. Der Außendurchmesser des Abschlusselementes 700 im ersten Endbereichs 730 entspricht im Wesentlichen jenem Außendurchmesser des Hüllrohrs 200. Am entgegengesetzten zweiten Endbereich 740 ist der Durchmesser des Abschlusselementes 700 verkleinert, um einen Auslass 750 zu bilden. Dieser Auslass 750 kann unter anderem zur Regulierung der Druckverhältnisse in dem wenigstens einen Antiresonanzelement-Vorformling in 300a-n und/oder innerhalb der Hüllrohrinnenbohrung 220 dienen.

Weiterhin weist die Anordnung 110" ein erstes Verbindungselement 900 und ein zweites Verbindungselement 910 auf. Dabei ist das erste Verbindungselement 900 an dem ersten Ende 250 des Hüllrohrs 200 und das zweite Verbindungselement 910 an dem zweiten Ende 260 des Hüllrohrs angeordnet.

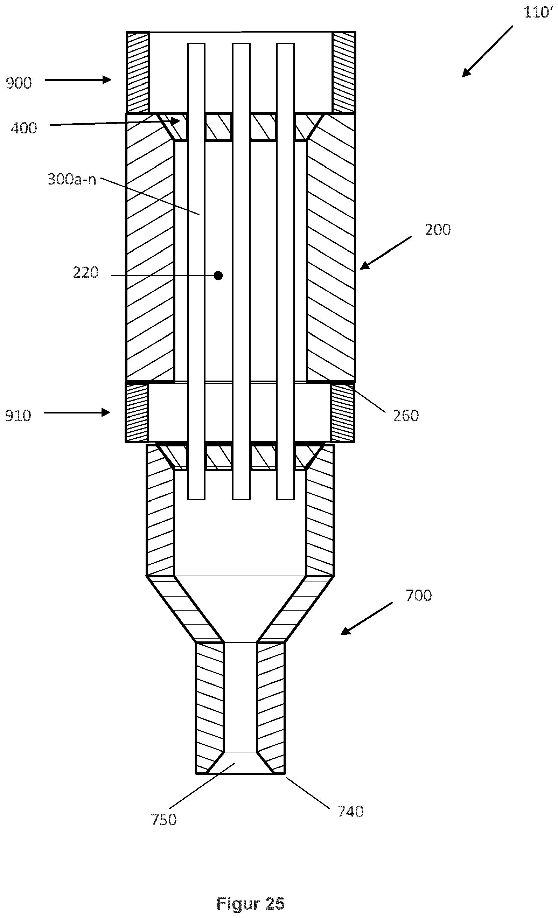

Die **Figur 25** zeigt die Anordnung 100", welche - ausgehend von Figur 24 - nach einem Durchlaufen der folgenden Schritte entsteht:
C/ Verknüpfen der dritten Positionierungsschablone 600 mit dem ersten Endbereich 730,
D/ Anbinden des Abschlusselementes 700 an das zweite Ende 260 des Hüllrohrs 200, insbesondere Anbinden des Abschlusselementes 700 an das zweite Ende 260 des Hüllrohrs 200, unter Nutzung eines zweiten Verbindungselements 910s,
E/ Durchschieben von wenigstens Teilen der Antiresonanzelement-Vorformlinge 300a-n durch die dritten Durchgangsöffnungen 610 zum Anordnen der Antiresonanzelement-Vorformlinge 300 in der Hüllrohr-Innenbohrung 220, wobei die dritte Zentrierfläche 620 derart selbstzentrierend mit der Wirkfläche 710 zusammenwirkt, dass die Antiresonanzelement-Vorformlinge 300 an Soll-Positionen angeordnet werden.

Im dargestellten Ausführungsbeispiel werden die Antiresonanzelement-Vorformlinge 300a-n endseitig an zwei Positionen gehalten. Zum einen werden die Antiresonanzelement-Vorformlinge 300a-n durch die Positionierungsschablone 400 am ersten Ende 250 des Hüllrohres 200 gehalten. Zusätzlich sorgt die dritte Positionierungsschablone 600 für eine weitere endseitige Halterung der Antiresonanzelement-Vorformlinge 300a-n. Gemeinsam stellen die Positionierungsschablone 400 und die dritte Positionierungsschablone 600 sicher, dass die Antiresonanzelement-Vorformlinge 300a-n an Soll-Positionen innerhalb der Hüllrohr-Innenbohrung 220 gehalten werden.

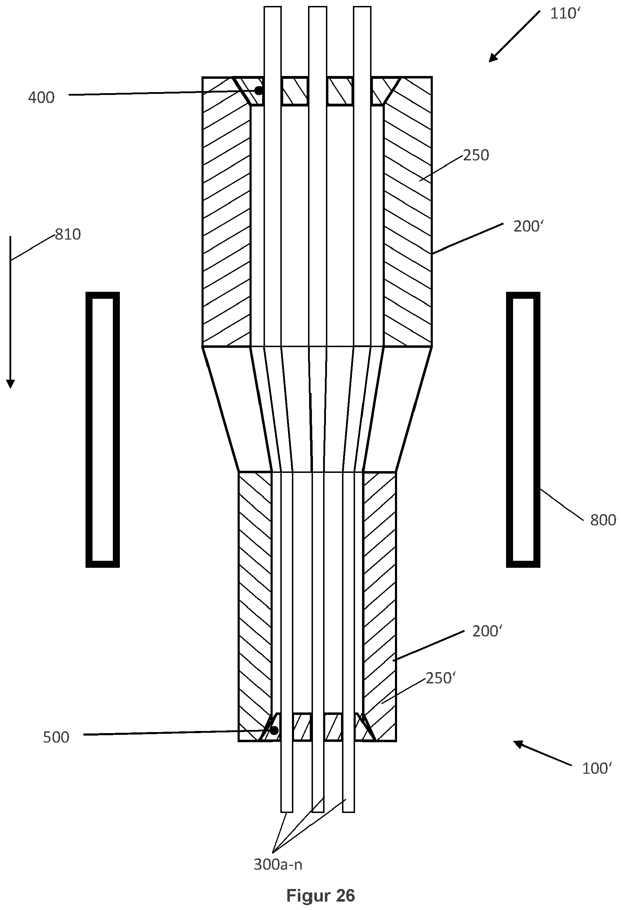

Die Antiresonanzelement-Vorformlinge 300a-n können im Schritt d) "Bearbeiten" flammenfrei an der Hüllrohr-Innenbohrung thermisch fixiert werden. Diesen Schritt verdeutlicht insbesondere die **Figur 26****,** welche das Durchlaufen der Anordnung durch einen elektrischen Ofen 800 im Rahmen des Schritts d) "Bearbeiten" darstellt. Ein Bewegungspfeil 810 verdeutlicht die Richtung, aus der die Anordnung 110' in einen elektrischen Ofen 800 - einer flammenfreien Wärmequelle - eingefahren wird, so dass die Vorform 100' entsteht.

Durch die Verwendung eines elektrischen Ofens 800 entfällt der Handbrenner-Prozess zum Fixieren der Antiresonanzelement-Vorformlinge 300a-n. Bei Handbrenner-Prozessen gibt es Probleme mit Abbrand und Soot-Bildung, die mit der Brennernutzung einhergehen. Der Beschlag kann nachträglich nicht vollständig entfernt werden, sodass bereits das Vorprodukt mit Verschmutzungen weiterverarbeitet wird. Folglich können unter anderem Blasenbildung, Einschlüsse und später Faserbruch beim Ausziehen entstehen. Bei Verwendung des Ofens entfallen die genannten Probleme, sodass eine saubere Vorform produziert werden kann.

Im Rahmen des Schritts d) "Bearbeiten" 1500 kann der Antiresonanzelement-Vorformling 300an lediglich durch
- die Positionierungsschablone 400,400',400", oder
- die Positionierungsschablone 400,400',400" und die zweite Positionierungsschablone 500, oder
- die Positionierungsschablone 400,400',400" und die dritte Positionierungsschablone 600,600'
und ansonsten stoffschlussfrei in der Hüllrohr-Innenbohrung 220 gehalten werden.

Ein Aspekt des Verfahrens ist, dass das exakte Zusammenführen von Hüllrohr 200 und den Antiresonanzelement-Vorformlingen 300a-n direkt in einer Bearbeitungsanlage (wie etwa eine vertikale Glasdrehbank) stattfinden kann und somit nur ein Prozessschritt für Zusammenbau und Ausziehen der gesamten Vorform notwendig ist.

Die in den Figuren 22 bis 26 nur schematisch dargestellten Antiresonanzelement-Vorformlinge 300a-n können gemäß jeder der beschriebenen Ausführungsformen gestaltet sein. Es wird insofern auf die entsprechenden Ausführungen verwiesen.

Die **Figur 27** zeigt eine Ausführungsform eines Verfahrens zur Herstellung einer Vorform 100,100' einer antiresonanten Hohlkernfaser 2400 mit den Schritten:
e) Bereitstellen 1000 eines Hüllrohrs 200, das eine Hüllrohr-Innenbohrung 220 und eine Hüllrohr-Längsachse 230 aufweist, entlang der sich eine von einer Innenseite 215 und einer Außenseite 216 begrenzte Hüllrohr-Wandung 210 erstreckt,
f) Vorbereiten 1100 einer Anzahl von Antiresonanzelement-Vorformlingen 300a-n, jeweils umfassend ein ARE-Außenelement 310 und ein darin eingesetztes ARE-Innenelement 340,
g) Anordnen 1200 der Antiresonanzelement-Vorformlinge 300a-n an Soll-Positionen in der Hüllrohr-Innenbohrung 220,
h) Bearbeiten 1300 einer Anordnung 110,110', umfassend das Hüllrohr 200 und die Antiresonanzelement-Vorformlinge 300a-n, durch einen Heißformprozess, ausgewählt aus wenigstens einem von Elongieren und Kollabieren.

Dabei ist vorgesehen, dass
- im Schritt d) "Bearbeiten" 1300 in der Hüllrohr-Innenbohrung ein relativer Innendruck im Bereich zwischen -10 bis -300 mbar, insbesondere -50 bis -250 mbar eingestellt wird,
- in wenigstens einem Antiresonanzelement-Vorformling 300a-n das ARE-Außenelement 310 und das ARE-Innenelement 340 kreisbogenartig ausgestaltet sind, und
- entlang zweier Verbindungslinien 370,370' miteinander und mit der Hüllrohr-Innenbohrung 220 verbunden sind.

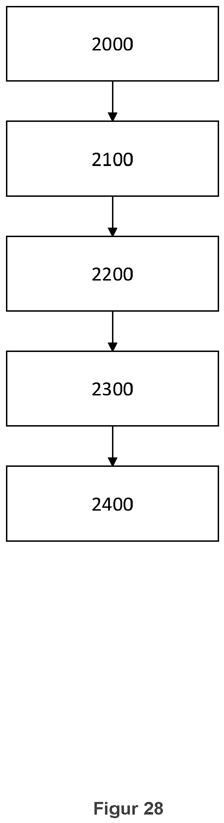

Die **Figur 28** zeigt eine Ausführungsform eines Verfahrens zur Herstellung einer antiresonanten Hohlkernfaser 2400 aus einer Vorform 100, 100' hergestellt, insbesondere hergestellt nach einem der vorhergehenden Verfahrensschritte 1000 bis 1300, aufweisend den Schritt
- Weiterverarbeitung der Vorform 100,100' zu der antiresonanten Hohlkernfaser 2400,
wobei die Weiterverarbeitung eine einmalige oder wiederholte Durchführung von einem oder mehreren der folgenden Heißformprozesse umfasst:
- Kollabieren 2100,
- Aufkollabieren 2200 von zusätzlichem Mantelmaterial, und
- Elongieren 2300.

Bei der Herstellung einer antiresonanten Hohlkernfaser 2400 nach einer der vorherigen Ausführungsformen aus einer Vorform 100,100' nach einer der vorherigen Ausführungsformen, insbesondere im Rahmen Schrittes "Weiterverarbeitung", kann es insbesondere zu wenigstens einem der folgenden Übergänge kommen:
- aus dem Antiresonanzelement-Vorformling 300a-n entsteht das Antiresonanzelement 2410,
- aus dem Hüllrohr 200 entsteht wenigstens ein Teil des Mantels 2450,
- aus dem ARE-Außenelement 310a-n entsteht die ARE-Außeneinheit 2420,
- aus dem ARE-Innenelement 340a-n entsteht die ARE-Inneneinheit 2430,
- aus dem ersten Kreisradius R_Außen 320a-j,m,n entsteht der dritte Kreisradius FB_Außen 2422,
- aus dem zweiten Kreisradius R_lnnen 350a-j,m,n entsteht der vierte Kreisradius FB_Innen 2432,
- aus dem ersten Mittelpunktswinkel α_Außen 325 entsteht der dritte Mittelpunktswinkel β_Außen 2423,
- aus dem zweiten Mittelpunktswinkel α_Innen 355 entsteht der vierte Mittelpunktswinkel β_Innen 2433,
- aus der ersten Segmenthöhe H_Außen 328 entsteht die dritte Segmenthöhe HF_Außen 2424,
- aus der zweiten Segmenthöhe H_Innen 358 entsteht die vierte Segmenthöhe HF_Innen 2434,
- aus der Verbindungslinie 370,370' entsteht die Nahtlinie,
- aus dem ARE-Bogenelement 390,390' entsteht die ARE-Bogeneinheit,
- aus dem fünften Kreisradius R_Bogen 394 entsteht der sechste Kreisradius FB_Bogen,
- aus dem Radius R_Kreis 392 entsteht der Radius FB_Kreis,
- aus dem fünfte Mittelpunktswinkel α_Bogen entsteht der sechste Mittelpunktswinkel β_Bogen, und
- aus der Berührungslinie entsteht die Berührungsnaht.

Sämtliche für die Positionierungsschablone beschriebenen Eigenschaften und Merkmale gelten auch für die zweite Positionierungsschablone und/oder die dritte Positionierungsschablone und umgekehrt.

Sämtliche für das Verfahren beschriebenen Eigenschaften und Merkmale gelten auch für die Vorform und/oder die antiresonante Hohlkernfaser und umgekehrt.

Alle in den Ansprüchen, der Beschreibung, den Beispielen und in den Figuren angegebenen physikalischen Größen werden, wenn nichts anderes angegeben ist, unter Normalbedingungen gemäß DIN 1343 bestimmt. Die Aussage "unter Normalbedingungen" bezieht sich auf Messungen unter Bedingungen gemäß DIN 1343. Die in den Ansprüchen, der Beschreibung und den Figuren offenbarten Merkmale können für verschiedene Ausgestaltungsformen der beanspruchten Erfindung, sowohl getrennt als auch in beliebiger Kombination miteinander, wesentlich sein. Die für die Vorrichtungen, insbesondere Vorform, sekundäre Vorform oder antiresonante Hohlkernfaser, offenbarten Merkmale sind auch für das Verfahren offenbart und umgekehrt.

### Beispiele

Im Folgenden sollen Dimensionen von Beispielen für erfindungsgemäße Antiresonanzelement-Vorformlinge und Vorformen aufgeführt werden. Die Erfindung wird durch diese Beispiele weiter beispielhaft illustriert. Die Erfindung ist nicht auf die Beispiele beschränkt. Dabei finden die folgenden Abkürzungen Verwendung:

| | ARE-Außenelement | ARE-Innenelement |
|---|---|---|
| r_V [mm] | erster Kreisradius R_Außen | zweiter Kreisradius R_Innen |
| b2_V [°] | erster Mittelpunktswinkel α_Außen | zweiter Mittelpunktswinkel α_Innen |
| s_V [mm] | erste Sehnenlänge | zweite Sehnenlänge |
| h_V [mm] | erste Segmenthöhe | zweite Segmenthöhe |

Das angegebene "Verhältnis Segmenthöhe" des Antiresonanzelement-Vorformlings berechnet sich als Verhältnis der ersten Segmenthöhe zur zweiten Segmenthöhe.

### Beispiel V1

In dieser Ausführungsvariante der Vorform ist die Randbedingung
- R_Außen > R_Innen
erfüllt und die folgenden Geometrien wurden genutzt.

| | ARE-Außenelement | ARE-Innenelement |
|---|---|---|
| r_V [mm] | 3,5 | 1,08 |
| b2_V [°] | 330 | 245,98 |
| s_V [mm] | 1,81 | 1,81 |
| h_V [mm] | 6,88 | 1,67 |
| Verhältnis Segmenthöhe | 4,13 | |

Das Ergebnis war eine Vorform, die präzise und reproduzierbar hergestellt werden konnte.

### Beispiel V2

In dieser Ausführungsvariante der Vorform ist die Randbedingung
- R_Außen > R_Innen
erfüllt und die folgenden Geometrien wurden genutzt.

| | ARE-Außenelement | ARE-Innenelement |
|---|---|---|
| r_V [mm] | 3,5 | 1,88 |
| b2_V [°] | 330 | 302,39 |
| s_V [mm] | 1,81 | 1,81 |
| h_V [mm] | 6,88 | 3,53 |
| Verhältnis Segmenthöhe | 1,95 | |

Das Ergebnis war eine Vorform, die präzise und reproduzierbar hergestellt werden konnte.

### Beispiel V3

In dieser Ausführungsvariante der Vorform ist die Randbedingung
- R_Außen > R_Innen
erfüllt und die folgenden Geometrien wurden genutzt.

| | ARE-Außenelement | ARE-Innenelement |
|---|---|---|
| r_V [mm] | 3,5 | 1,88 |
| b2_V [°] | 330 | 57,61 |
| s_V [mm] | 1,81 | 1,81 |
| h_V [mm] | 6,88 | 0,23 |
| Verhältnis Segmenthöhe | 29,58 | |

Das Ergebnis war eine Vorform, die präzise und reproduzierbar hergestellt werden konnte.

### Beispiel V4

In dieser Ausführungsvariante der Vorform ist die Randbedingung
- R_Außen > R_lnnen
erfüllt und die folgenden Geometrien wurden genutzt.

| | ARE-Außenelement | ARE-Innenelement |
|---|---|---|
| r_V [mm] | 3,5 | 2,42 |
| b2_V [°] | 280 | 223,24 |
| s_V [mm] | 4,50 | 4,50 |
| h_V [mm] | 6,18 | 3,31 |
| Verhältnis Segmenthöhe | 1,87 | |

Das Ergebnis war eine Vorform, die präzise und reproduzierbar hergestellt werden konnte.

### Beispiel V5

In dieser Ausführungsvariante der Vorform ist die Randbedingung
- R_Außen > R_Innen
erfüllt und die folgenden Geometrien wurden genutzt.

| | ARE-Außenelement | ARE-Innenelement |
|---|---|---|
| r_V [mm] | 3,5 | 2,42 |
| b2_V [°] | 280 | 136,76 |
| s_V [mm] | 4,50 | 4,50 |
| h_V [mm] | 6,18 | 1,53 |
| Verhältnis Segmenthöhe | 4,04 | |

Das Ergebnis war eine Vorform, die präzise und reproduzierbar hergestellt werden konnte.

### Beispiel V6

In dieser Ausführungsvariante der Vorform ist die Randbedingung
- R_Außen < R_Innen
erfüllt und die folgenden Geometrien wurden genutzt.

| | ARE-Außenelement | ARE-Innenelement |
|---|---|---|
| r_V [mm] | 3,5 | 4 |
| b2_V [°] | 300 | 51,89 |
| s_V [mm] | 3,50 | 3,50 |
| h_V [mm] | 6,53 | 0,40 |
| Verhältnis Segmenthöhe | 16,20 | |

Das Ergebnis war eine Vorform, die präzise und reproduzierbar hergestellt werden konnte.

### Beispiel V7

In dieser Ausführungsvariante der Vorform ist die Randbedingung
- R_Außen < R_Innen
erfüllt und die folgenden Geometrien wurden genutzt.

| | ARE-Außenelement | ARE-Innenelement |
|---|---|---|
| r_V [mm] | 3,5 | 4 |
| b2_V [°] | 230 | 104,94 |
| s_V [mm] | 6,34 | 6,34 |
| h_V [mm] | 4,98 | 1,56 |
| Verhältnis Segmenthöhe | 3,19 | |

Das Ergebnis war eine Vorform, die präzise und reproduzierbar hergestellt werden konnte.

### Beispiel V8

In dieser Ausführungsvariante der Vorform ist die Randbedingung
- R_Außen < R_Innen
erfüllt und die folgenden Geometrien wurden genutzt.

| | ARE-Außenelement | ARE-Innenelement |
|---|---|---|
| r_V [mm] | 3,5 | 6,73 |
| b2_V [°] | 300 | 30,14 |
| s_V [mm] | 3,50 | 3,50 |
| h_V [mm] | 6,53 | 0,23 |
| Verhältnis Segmenthöhe | 28,21 | |

Das Ergebnis war eine Vorform, die präzise und reproduzierbar hergestellt werden konnte.

### Beispiel V9

In dieser Ausführungsvariante der Vorform ist die Randbedingung
- R_Außen < R_Innen
erfüllt und die folgenden Geometrien wurden genutzt.

| | ARE-Außenelement | ARE-Innenelement |
|---|---|---|
| r_V [mm] | 3,5 | 6,73 |
| b2_V [°] | 230 | 56,24 |
| s_V [mm] | 6,34 | 6,34 |
| h_V [mm] | 4,98 | 0,79 |
| Verhältnis Segmenthöhe | 6,27 | |

Das Ergebnis war eine Vorform, die präzise und reproduzierbar hergestellt werden konnte.

### Beispiel V10

In dieser Ausführungsvariante der Vorform ist die Randbedingung
- R_Außen < R_Innen
erfüllt und die folgenden Geometrien wurden genutzt.

| | ARE-Außenelement | ARE-Innenelement |
|---|---|---|
| r_V [mm] | 3,5 | 8,08 |
| b2_V [°] | 300 | 25,02 |
| s_V [mm] | 3,50 | 3,50 |
| h_V [mm] | 6,53 | 0,19 |
| Verhältnis Segmenthöhe | 34,05 | |

Das Ergebnis war eine Vorform, die präzise und reproduzierbar hergestellt werden konnte.

### Beispiel V11

In dieser Ausführungsvariante der Vorform ist die Randbedingung
- R_Außen = R_Innen
erfüllt und die folgenden Geometrien wurden genutzt.

| | ARE-Außenelement | ARE-Innenelement |
|---|---|---|
| r_V [mm] | 3,5 | 3,5 |
| b2_V [°] | 230 | 130,00 |
| s_V [mm] | 6,34 | 6,34 |
| h_V [mm] | 4,98 | 2,02 |
| Verhältnis Segmenthöhe | 2,46 | |

Das Ergebnis war eine Vorform, die präzise und reproduzierbar hergestellt werden konnte. Unter der Aussage, dass der erste Kreisradius R_Außen und der zweite Kreisradius R_Innen gleich lang sind, wird im Rahmen des Beispiels V11 verstanden, dass die besagten Längen sich um weniger als 1,0 % unterscheiden.

### Beispiel V12

In dieser Ausführungsvariante der Vorform ist die Randbedingung
- R_Außen = R_Innen
erfüllt und die folgenden Geometrien wurden genutzt.

| | ARE-Außenelement | ARE-Innenelement |
|---|---|---|
| r_V [mm] | 3,5 | 3,5 |
| b2_V [°] | 300 | 60,00 |
| s_V [mm] | 3,50 | 3,50 |
| h_V [mm] | 6,53 | 0,47 |
| Verhältnis Segmenthöhe | 13,93 | |

Das Ergebnis war eine Vorform, die präzise und reproduzierbar hergestellt werden konnte. Unter der Aussage, dass der erste Kreisradius R_Außen und der zweite Kreisradius R_Innen gleich lang sind, wird im Rahmen des Beispiels V12 verstanden, dass die besagten Längen sich um weniger als 1,0 % unterscheiden.

Im Folgenden sollen Dimensionen von Beispielen für erfindungsgemäße antiresonante Hohlkernfasern aufgeführt werden. Die Erfindung wird durch diese Beispiele weiter beispielhaft illustriert. Die Erfindung ist nicht auf die Beispiele beschränkt. Dabei finden die folgenden Abkürzungen Verwendung:

| | ARE-Außeneinheit | ARE-Inneneinheit |
|---|---|---|
| r [µm] | dritter Kreisradius FB_Außen | vierter Kreisradius FB_Innen |
| b2 [°] | dritter Mittelpunktswinkel b_Außen | vierter Mittelpunktswinkel β_Innen |
| s [µm] | dritte Sehnenlänge | vierte Sehnenlänge |
| h [µm] | dritte Segmenthöhe | Segmenthöhe |

Das angegebene "Verhältnis Segmenthöhe" der antiresonanten Hohlkernfaser berechnet sich als Verhältnis der dritten Segmenthöhe zur vierten Segmenthöhe.

### Beispiel F1

In dieser Ausführungsvariante der antiresonanten Hohlkernfaser ist die Randbedingung
- FB_Außen > FB_Innen
erfüllt und die folgenden Geometrien wurden genutzt.

| | ARE-Außeneinheit | ARE-Inneneinheit |
|---|---|---|
| r [µm] | 13 | 4 |
| b2 [°] | 330 | 245,47 |
| s [µm] | 6,73 | 6,73 |
| h [µm] | 25,56 | 6,16 |
| Verhältnis Segmenthöhe | 4,15 | |

Das Ergebnis war eine antiresonante Hohlkernfaser mit einer niedrigen Dämpfung.

### Beispiel F2

In dieser Ausführungsvariante der antiresonanten Hohlkernfaser ist die Randbedingung
- FB_Außen > FB_Innen
erfüllt und die folgenden Geometrien wurden genutzt.

| | ARE-Außeneinheit | ARE-Inneneinheit |
|---|---|---|
| r [µm] | 13 | 7 |
| b2 [°] | 330 | 302,54 |
| s [µm] | 6,73 | 6,73 |
| h [µm] | 25,56 | 13,14 |
| Verhältnis Segmenthöhe | 1,95 | |

Das Ergebnis war eine antiresonante Hohlkernfaser mit einer niedrigen Dämpfung.

### Beispiel F3

In dieser Ausführungsvariante der antiresonanten Hohlkernfaser ist die Randbedingung
- FB_Außen > FB_Innen
erfüllt und die folgenden Geometrien wurden genutzt.

| | ARE-Außeneinheit | ARE-Inneneinheit |
|---|---|---|
| r [µm] | 13 | 7 |
| b2 [°] | 330 | 57,46 |
| s [µm] | 6,73 | 6,73 |
| h [µm] | 25,56 | 0,86 |
| Verhältnis Segmenthöhe | 29,66 | |

Das Ergebnis war eine antiresonante Hohlkernfaser mit einer niedrigen Dämpfung.

### Beispiel F4

In dieser Ausführungsvariante der antiresonanten Hohlkernfaser ist die Randbedingung
- FB_Außen > FB_Innen
erfüllt und die folgenden Geometrien wurden genutzt.

| | ARE-Außeneinheit | ARE-Inneneinheit |
|---|---|---|
| r [µm] | 13 | 9 |
| b2 [°] | 280 | 223,60 |
| s [µm] | 16,71 | 16,71 |
| h [µm] | 22,96 | 12,34 |
| Verhältnis Segmenthöhe | 1,86 | |

Das Ergebnis war eine antiresonante Hohlkernfaser mit einer niedrigen Dämpfung.

### Beispiel F5

In dieser Ausführungsvariante der antiresonanten Hohlkernfaser ist die Randbedingung
- FB_Außen > FB_Innen
erfüllt und die folgenden Geometrien wurden genutzt.

| | ARE-Außeneinheit | ARE-Inneneinheit |
|---|---|---|
| r [µm] | 13 | 9 |
| b2 [°] | 280 | 136,40 |
| s [µm] | 16,71 | 16,71 |
| h [µm] | 22,96 | 5,66 |
| Verhältnis Segmenthöhe | 4,06 | |

Das Ergebnis war eine antiresonante Hohlkernfaser mit einer niedrigen Dämpfung.

### Beispiel F6

In dieser Ausführungsvariante der antiresonanten Hohlkernfaser ist die Randbedingung
- FB_Außen < FB_Innen
erfüllt und die folgenden Geometrien wurden genutzt.

| | ARE-Außeneinheit | ARE-Inneneinheit |
|---|---|---|
| r [µm] | 13 | 15 |
| b2 [°] | 300 | 51,36 |
| s [µm] | 13,00 | 13,00 |
| h [µm] | 24,26 | 1,48 |
| Verhältnis Segmenthöhe | 16,37 | |

Das Ergebnis war eine antiresonante Hohlkernfaser mit einer niedrigen Dämpfung.

### Beispiel F7

In dieser Ausführungsvariante der antiresonanten Hohlkernfaser ist die Randbedingung
- FB_Außen < FB_Innen
erfüllt und die folgenden Geometrien wurden genutzt.

| | ARE-Außeneinheit | ARE-Inneneinheit |
|---|---|---|
| r [µm] | 13 | 15 |
| b2 [°] | 230 | 103,53 |
| s [µm] | 23,56 | 23,56 |
| h [µm] | 18,49 | 5,72 |
| Verhältnis Segmenthöhe | 3,24 | |

Das Ergebnis war eine antiresonante Hohlkernfaser mit einer niedrigen Dämpfung.

### Beispiel F8

In dieser Ausführungsvariante der antiresonanten Hohlkernfaser ist die Randbedingung
- FB_Außen < FB_Innen
erfüllt und die folgenden Geometrien wurden genutzt.

| | ARE-Außeneinheit | ARE-Inneneinheit |
|---|---|---|
| r [µm] | 13 | 25 |
| b2 [°] | 300 | 30,14 |
| s [µm] | 13,00 | 13,00 |
| h [µm] | 24,26 | 0,86 |
| Verhältnis Segmenthöhe | 28,21 | |

Das Ergebnis war eine antiresonante Hohlkernfaser mit einer niedrigen Dämpfung.

### Beispiel F9

In dieser Ausführungsvariante der antiresonanten Hohlkernfaser ist die Randbedingung
- FB_Außen < FB_Innen
erfüllt und die folgenden Geometrien wurden genutzt.

| | ARE-Außeneinheit | ARE-Inneneinheit |
|---|---|---|
| r [µm] | 13 | 25 |
| b2 [°] | 230 | 56,23 |
| s [µm] | 23,56 | 23,56 |
| h [µm] | 18,49 | 2,95 |
| Verhältnis Segmenthöhe | 6,27 | |

Das Ergebnis war eine antiresonante Hohlkernfaser mit einer niedrigen Dämpfung.

### Beispiel F10

In dieser Ausführungsvariante der antiresonanten Hohlkernfaser ist die Randbedingung
- FB_Außen < FB_Innen
erfüllt und die folgenden Geometrien wurden genutzt.

| | ARE-Außeneinheit | ARE-Inneneinheit |
|---|---|---|
| r [µm] | 13 | 30 |
| b2 [°] | 300 | 25,03 |
| s [µm] | 13,00 | 13,00 |
| h [µm] | 24,26 | 0,71 |
| Verhältnis Segmenthöhe | 34,04 | |

Das Ergebnis war eine antiresonante Hohlkernfaser mit einer niedrigen Dämpfung.

### Beispiel F11

In dieser Ausführungsvariante der antiresonanten Hohlkernfaser ist die Randbedingung, dass
- der dritte Kreisradius FB_Außen und der vierte Kreisradius FB_Innen im Wesentlichen gleich lang sind (FB_Außen = FB_Innen)
erfüllt und die folgenden Geometrien wurden genutzt.

| | ARE-Außeneinheit | ARE-Inneneinheit |
|---|---|---|
| r [µm] | 13 | 13 |
| b2 [°] | 230 | 130,00 |
| s [µm] | 23,56 | 23,56 |
| h [µm] | 18,49 | 7,51 |
| Verhältnis Segmenthöhe | 2,46 | |

Das Ergebnis war eine antiresonante Hohlkernfaser mit einer niedrigen Dämpfung.

### Beispiel F12

In dieser Ausführungsvariante der antiresonanten Hohlkernfaser ist die Randbedingung, dass
- der dritte Kreisradius FB_Außen und der vierte Kreisradius FB_Innen im Wesentlichen gleich lang sind (FB_Außen = FB_Innen)
erfüllt und die folgenden Geometrien wurden genutzt.

| | ARE-Außeneinheit | ARE-Inneneinheit |
|---|---|---|
| r [µm] | 13 | 13 |
| b2 [°] | 300 | 60,00 |
| s [µm] | 13,00 | 13,00 |
| h [µm] | 24,26 | 1,74 |
| Verhältnis Segmenthöhe | 13,93 | |

Das Ergebnis war eine antiresonante Hohlkernfaser mit einer niedrigen Dämpfung.

Alle in den Ansprüchen, der Beschreibung, den Beispielen und den Figuren angegebenen physikalischen Größen werden, wenn nichts anderes angegeben ist, unter Normalbedingungen gemäß DIN 1343 bestimmt. Die Aussage "unter Normalbedingungen" bezieht sich auf Messungen unter Bedingungen gemäß DIN 1343. Die in den Ansprüchen, der Beschreibung und den Figuren offenbarten Merkmale können für verschiedene Ausgestaltungsformen der beanspruchten Erfindung sowohl getrennt als auch in beliebiger Kombination miteinander wesentlich sein. Die für die Vorrichtungen, insbesondere Vorform, sekundäre Vorform oder antiresonante Hohlkernfaser, offenbarten Merkmale sind auch für die Verfahren offenbart und umgekehrt.

### Bezugszeichen

- 100, 100': Vorform einer antiresonanten Hohlkernfaser
- 110, 110': Anordnung

- 200: Hüllrohr
- 210: Hüllrohr-Wandung
- 211: Dicke der Hüllrohr-Wandung
- 215: Innenseite der Hüllrohr-Wandung
- 216: Außenseite der Hüllrohr-Wandung
- 220: Hüllrohr-Innenbohrung
- 230: Hüllrohr-Längsachse

- 250: Erstes Ende des Hüllrohrs
- 251: Gegenzentrierfläche
- 260: zweites Ende des Hüllrohrs
- 261: zweite Gegenzentrierfläche

- 298: erster Kreis
- 299: zweiter Kreis

- 300a-n: Antiresonanzelement-Vorformling

- 310a-n: ARE-Außenelement
- 311a-j,m,n: erste Längsachse
- 315: ARE-Außenwandung
- 317: Innenraum des ARE-Außenelements
- 320a-j,m,n: erster Kreisradius R_Außen
- 325: erster Mittelpunktswinkel α_Außen
- 328: erste Segmenthöhe

- 340a-n: ARE-Innenelement
- 341a-e: zweite Längsachse
- 345: Wandung des ARE-Innenelements
- 347: zweiter Innenraum des ARE-Innenelements
- 350a-j,m,n: zweiter Kreisradius R_Innen
- 355: zweiter Mittelpunktswinkel α_Innen
- 358: zweite Segmenthöhe
- 370,370': Verbindungslinie

- 390, 390': ARE-Bogenelement
- 392: Radius R_Kreis des ARE-Bogenelements
- 393,393',393": Berührungslinie
- 394: fünfter Kreisradius R_Bogen
- 395,395': dritte Längsachse

- 400: Positionierungsschablone
- 410: Durchgangsöffnung
- 420: Zentrierfläche

- 500: zweite Positionierungsschablone
- 510: zweite Durchgangsöffnung
- 520: zweite Zentrierfläche

- 600,: dritte Positionierungsschablone
- 610: dritte Durchgangsöffnung
- 620: dritte Zentrierfläche

- 700: Abschlusselement
- 710: Wirkfläche
- 730: erster Endbereich
- 740: zweiter Endbereich
- 750: Auslass

- 800: Wärmequelle
- 810: Bewegungspfeil

- 900: erstes Verbindungselement
- 910: zweites Verbindungselement
- 1000: Bereitstellen eines Hüllrohres
- 1100: Vorbereiten einer Anzahl von Antiresonanzelement-Vorformlingen
- 1200: Anordnen
- 1300: Bearbeiten

- 2000: Verfahrensschritte 1000 bis 1300
- 2100: Kollabieren
- 2200: Aufkollabieren von zusätzlichem Mantelmaterial
- 2300: Elongieren

- 2400: antiresonante Hohlkernfaser
- 2410: Antiresonanzelement

- 2420: ARE-Außeneinheit der antiresonanten Hohlkernfaser
- 2422: dritter Kreisradius FB_Außen
- 2423: dritter Mittelpunktswinkel β_Außen
- 2424: dritte Segmenthöhe F_Außen

- 2430: ARE-Inneneinheit der antiresonanten Hohlkernfaser
- 2432: vierter Kreisradius FB_Innen
- 2433: vierter Mittelpunktswinkel β_Innen
- 2434: vierte Segmenthöhe F_Innen

- 2450: Mantel der antiresonanten Hohlkernfaser
- 2451: Mantel-Innenbohrung
- 2452: Anteil des vormaligen Mantelmaterials am Mantel der antiresonanten Hohlkernfaser
- 2458: Nahtlinien
- 2460: Längsachse der antiresonanten Hohlkernfaser
- 2470: Kern der antiresonanten Hohlkernfaser
- 2480: Innenfläche

## Patentansprüche

1. Antiresonanzelement-Vorformling (300a-n) zur Herstellung einer antiresonanten Hohlkernfaser (2400), umfassend
eine erste Längsachse (311a-j,m,n),
ein kreisbogenartig ausgestaltetes ARE-Außenelement (310a-n) und ein ARE-Innenelement (340a-n),
wobei das ARE-Außenelement (310a-n) und das ARE-Innenelement (340a-n) entlang zweier im Wesentlichen parallel zu der ersten Längsachse (311a-j,m,n) angeordneten Verbindungslinien (370,370') miteinander verbunden sind,
**dadurch gekennzeichnet, dass**
das ARE-Außenelement (310a-n) einen durch eine ARE-Außenwandung zumindest partiell begrenzten Innenraum (317) aufweist, in welchen das kreisbogenartig ausgestaltete ARE-Innenelement (340a-n) zumindest partiell hineinragt.

2. Antiresonanzelement-Vorformling (300a-n) nach Anspruch 1, **dadurch gekennzeichnet, dass**
das ARE-Außenelement (310a-n) einen ersten Kreisradius R_Außen (320a-j,m,n) und das ARE-Innenelement (340a-n) einen zweiten Kreisradius R_lnnen (350a-j,m,n) aufweist.

3. Antiresonanzelement-Vorformling (300a-n) nach einem der vorhergehenden Ansprüche, **dadurch gekennzeichnet, dass**
das ARE-Außenelement (310a-n) einen ersten Mittelpunktswinkel α_Außen (325) und das ARE-Innenelement (340a-n) einen zweiten Mittelpunktswinkel α_Innen (355) aufweist.

4. Antiresonanzelement-Vorformling (300a-n) nach einem der vorhergehenden Ansprüche 2 oder 3, **dadurch gekennzeichnet, dass**
• der erste Kreisradius R_Außen (320a-j,m,n) und der zweite Kreisradius R_Innen (350a-j,m,n) im Wesentlichen gleich lang sind (R_Außen = R_Innen)
und der Antiresonanzelement-Vorformling (300a-n) wenigstens eines der folgenden Merkmale aufweist:
• R_Außen und R_Innen kleiner 12 mm, insbesondere kleiner 8 mm, insbesondere kleiner 5 mm; und
• R_Außen und R_Innen größer 0,5 mm, insbesondere größer 1 mm, insbesondere größer 2 mm.

5. Antiresonanzelement-Vorformling (300a-n) nach einem der vorhergehenden Ansprüche 2 oder 3, **dadurch gekennzeichnet, dass**
das
• der erste Kreisradius R_Außen (320a-j,m,n) größer ist als der zweite Kreisradius R_Innen (350a-j,m,n) (R_Außen > R_Innen)
und der Antiresonanzelement-Vorformling (300a-n) wenigstens eines der folgenden Merkmale aufweist:
• R_Außen kleiner 12 mm, insbesondere kleiner 8 mm, insbesondere kleiner 5 mm;
• R_Außen größer 0,5 mm, insbesondere größer 1 mm, insbesondere größer 2 mm;
• R_lnnen kleiner 8 mm, insbesondere kleiner 5 mm, insbesondere kleiner 3 mm; und
• R_lnnen größer 0,5 mm, insbesondere größer 0,75 mm, insbesondere größer 1 mm.

6. Antiresonanzelement-Vorformling (300a-n) nach einem der vorhergehenden Ansprüche 2 oder 3, **dadurch gekennzeichnet, dass**
• der erste Kreisradius R_Außen (320a-j,m,n) kleiner als der zweite Kreisradius R_lnnen (350a-j,m,n) ist (R_Außen < R_Innen)
und der Antiresonanzelement-Vorformling (300a-n) wenigstens eines der folgenden Merkmale aufweist:
• R_Außen kleiner 12 mm, insbesondere kleiner 8 mm, insbesondere kleiner 5 mm;
• R_Außen größer 0,5 mm, insbesondere größer 1 mm, insbesondere größer 2 mm;
• R_lnnen kleiner 20 mm, insbesondere kleiner 10 mm, insbesondere kleiner 8 mm; und
• R_lnnen größer 1 mm, insbesondere größer 2 mm, insbesondere größer 3 mm.

7. Antiresonanzelement-Vorformling (300a-n) nach einem der vorhergehenden Ansprüche 3 bis 6, **dadurch gekennzeichnet, dass**
der erste Mittelpunktswinkel α_Außen (325) und/oder der zweite Mittelpunktswinkel α _Innen (355) kleiner als 340° ist.

8. Antiresonanzelement-Vorformling (300a-n) nach einem der vorhergehenden Ansprüche, **dadurch gekennzeichnet, dass**
das ARE-Außenelement (310a-n) eine erste Segmenthöhe H_Außen (328) und
das ARE-Innenelement (340a-n) eine zweite Segmenthöhe H_Innen (358) aufweist, wobei insbesondere gilt:
• H_Außen / H_Innen kleiner als 30, insbesondere kleiner als 14, insbesondere zwischen 1 und 6.

9. Vorform (100,100') einer antiresonanten Hohlkernfaser (2400), umfassend
ein Hüllrohr (200), welches eine Hüllrohr-Innenbohrung (220) und eine Hüllrohr-Längsachse (230) aufweist, entlang der sich eine von einer Innenseite (215) und einer Außenseite (216) begrenzte Hüllrohr-Wandung (210) erstreckt,
eine Anzahl von Antiresonanzelement-Vorformlingen (300a-n), wobei
die Antiresonanzelement-Vorformlinge (300a-n) zueinander beabstandet und kontaktfrei an Soll-Positionen an der Innenseite (215) der Hüllrohr-Wandung (210) angeordnet sind,
**dadurch gekennzeichnet, dass**
wenigstens einer der Antiresonanzelement-Vorformlinge (300a-n) nach einem der vorhergehenden Anspruch 1 bis 8 ausgestaltet ist.

10. Verfahren zur Herstellung einer Vorform (100,100') einer antiresonanten Hohlkernfaser (2400), mit den Schritten:
a) Bereitstellen eines Hüllrohrs, das eine Hüllrohr-Innenbohrung (220) und eine Hüllrohr-Längsachse (230) aufweist, entlang der sich eine von einer Innenseite (215) und einer Außenseite (216) begrenzte Hüllrohr-Wandung (210) erstreckt,
b) Vorbereiten einer Anzahl von Antiresonanzelement-Vorformlingen (310a-n), jeweils umfassend ein ARE-Außenelement (310a-n) und ein darin eingesetztes ARE-Innenelement (340a-n),
c) Anordnen der Antiresonanzelement-Vorformlinge (300a-n) an Soll-Positionen in der Hüllrohr-Innenbohrung (220),
d) Bearbeiten einer Anordnung (110,110'), umfassend das Hüllrohr (200) und die Antiresonanzelement-Vorformlinge (300a-n) durch einen Heißformprozess, ausgewählt aus wenigstens einem von Elongieren und Kollabieren,
**dadurch gekennzeichnet, dass**
• im Schritt d) "Bearbeiten" in der Hüllrohr-Innenbohrung (220) ein relativer Innendruck im Bereich zwischen -10 bis -300 mbar, insbesondere -50 bis -250 mbar eingestellt wird,
• in wenigstens einem Antiresonanzelement-Vorformling (300a-n) das ARE-Außenelement (310a-n) und das ARE-Innenelement (340a-n) kreisbogenartig ausgestaltet sind, und
• entlang zweier Verbindungslinien (370,370') miteinander und mit der Hüllrohr-Innenbohrung (220) verbunden sind.

11. Verfahren nach Anspruch 10, **dadurch gekennzeichnet, dass** wenigstens einer der Antiresonanzelement-Vorformlinge (300a-n) nach einem der vorhergehenden Ansprüche 1 bis 8 ausgestaltet ist.

12. Antiresonante Hohlkernfaser (2400), umfassend
einen Mantel (2450), welcher eine Mantel-Innenbohrung (2451) und eine Mantel-Längsachse (2453) aufweist, entlang der sich eine von einer Mantel-Innenseite (2454) und einer Mantel-Außenseite (2455) begrenzte Mantel-Wandung (2456) erstreckt,
eine Anzahl von Antiresonanzelementen (2410), jeweils umfassend eine ARE-Außeneinheit (2420) und eine ARE-Inneneinheit (2430), wobei die kreisbogenartig ausgestaltete ARE-Außeneinheit (2420) und die ARE-Inneneinheit (2430) entlang zweier Nahtlinien miteinander verbunden sind,
wobei die Antiresonanzelemente (2410) zueinander beabstandet und kontaktfrei an Soll-Positionen an der Mantel-Innenseite (2454) der Mantel-Wandung (2456) angeordnet sind,
**dadurch gekennzeichnet, dass**
die ARE-Außeneinheit (2420) einen durch eine ARE-Außenwand zumindest partiell begrenzten Innenraum aufweist, in welchen die kreisbogenartig ausgestaltete ARE-Inneneinheit (2430) zumindest partiell hineinragt.

13. Antiresonante Hohlkernfaser (2400) nach Anspruch 12, **dadurch gekennzeichnet, dass** die antiresonante Hohlkernfaser (2400) wenigstens eines der folgenden Merkmale aufweist:
• die ARE-Außeneinheit (2420) einen dritten Kreisradius FB_Außen,
• die ARE-Inneneinheit (2430) einen vierten Kreisradius FB_Innen aufweist,
• die ARE-Außeneinheit (2420) einen dritten Mittelpunktswinkel β_Außen, und
• die ARE-Inneneinheit (2430) einen vierten Mittelpunktswinkel β_Innen aufweist.

14. Antiresonante Hohlkernfaser (2400) nach Anspruch 13, **dadurch gekennzeichnet, dass**
• FB_Außen = FB_Innen
und mindestens ein Antiresonanzelement (2410) wenigstens eines der folgenden Merkmale aufweist:
• FB_Außen kleiner 30 µm, insbesondere kleiner 25 µm, insbesondere kleiner 15 µm;
• FB_Außen größer 5 µm, insbesondere größer 10 µm, insbesondere größer 12 µm;
• FB_Innen kleiner 30 µm, insbesondere kleiner 25 µm, insbesondere kleiner 15 µm; und
• FB_Innen größer 5 µm, insbesondere größer 10 µm, insbesondere größer 12 µm.

15. Antiresonante Hohlkernfaser (2400) nach Anspruch 13, **dadurch gekennzeichnet, dass**
• FB_Außen > FB_Innen
und mindestens ein Antiresonanzelement (2410) wenigstens eines der folgenden Merkmale aufweist:
• FB_Außen kleiner 30 µm, insbesondere kleiner 25 µm, insbesondere kleiner 15 µm;
• FB_Außen größer 5 µm, insbesondere größer 10 µm, insbesondere größer 12 µm;
• FB_Innen kleiner 20 µm, insbesondere kleiner 15 µm, insbesondere kleiner 11 µm; und
• FB_Innen größer 2 µm, insbesondere größer 4 µm, insbesondere größer 6 µm.

16. Antiresonante Hohlkernfaser (2400) nach Anspruch 13, **dadurch gekennzeichnet, dass**
• FB_Außen < FB_Innen
und mindestens ein Antiresonanzelement (2410) wenigstens eines der folgenden Merkmale aufweist:
• FB_Außen kleiner 20 µm, insbesondere kleiner 15 µm, insbesondere kleiner 11 µm;
• FB_Außen größer 2 µm, insbesondere größer 4 µm, insbesondere größer 6 µm;
• FB_Innen kleiner 30 µm, insbesondere kleiner 25 µm, insbesondere kleiner 15 µm; und
• FB_Innen größer 5 µm, insbesondere größer 10 µm, insbesondere größer 12 µm.

17. Antiresonante Hohlkernfaser (2400) nach einem der Ansprüche 12 bis 16, **dadurch gekennzeichnet, dass** die antiresonante Hohlkernfaser (2400) aus einer Vorform nach Anspruch 9 hergestellt ist, insbesondere, dass die antiresonante Hohlkernfaser (2400) gemäß einem Verfahren nach einem der Ansprüche 10 oder 11 hergestellt ist.
